# EUROPEAN PATENT SPECIFICATION

(11) **EP 3 285 708 B1**
(45) Date of publication and mention of the grant of the patent: **19.06.2019**
(21) Application number: 16722344.5
(22) Date of filing: 22.04.2016
(51) Int. Cl.: A61G 5/04, A61G 5/08, A61H 3/04, B62K 5/007, B62K 5/025, A61G 5/10, B62K 13/04, B62K 13/06, B62K 15/00

(54) **A RECONFIGURABLE WHEELED PERSONAL MOBILITY DEVICE**
REKONFIGURIERBARE MIT PERSÖNLICHE MOBILITÄTSVORRICHTUNG MIT RÄDERN
DISPOSITIF DE MOBILITÉ PERSONNEL À ROUES RECONFIGURABLE

(30) Priority: 22.04.2015 GB 201506873
(43) Date of publication of application: 28.02.2018
(73) Proprietor: Brintal Limited, Port Grat St Sampsons Guernsey GY2 4TD (GB)
(72) Inventor: HARRISON, Brian, J., St Andrew Guernsey GY6 8XN (GB)
(74) Representative: Ridley, Daniel
(86) International application number: PCT/GB2016/051136
(87) International publication number: WO 2016/170364

(56) References cited:
- DE-U1- 29 517 605
- DE-U1-202014 102 789
- FR-A1- 2 783 463
- FR-A1- 2 927 843
- US-A1- 2003 019 076
- US-A1- 2004 256 166
- US-A1- 2010 126 789
- US-A1- 2015 075 575

## Description

The present invention relates to a steering engagement mechanism.

Many people of all ages have mobility problems at some time in their life, whether due to illness, age, medical conditions, operations, or recovering from injury. There is a bewildering variety of different mobility devices available from wheeled walkers to wheel chairs and powered mobility scooters that assist in many different ways. They are clearly designed to assist with a particular problem or activity, but unfortunately, for a combination of reasons, many people can feel that using this type of product represents a loss of function and dignity, and represents the last straw of their independence.

Furthermore, the narrow scope of the benefits that any single device tends to offer also restricts the scope of the activities the user can engage in with that particular individual product.

In many cases, without being able to predict their exact recovery rate, it is almost impossible for a potential or existing user of a mobility aid to make a decision, both when considering purchasing a new mobility aid or when choosing which particular device to take with them, because there exists uncertainty as to their exact needs later that day, over the next few weeks, or over the coming months.

People requiring a mobility device typically progress from one mobility aid to another as their strength and ability either improves or deteriorates, so picking the next device to suit their needs within that progression is complicated, both practically, emotionally and financially. With financial and storage space constraints, there may be pressure to purchase just a single product which is actually more suitable for someone with a worse condition than theirs, to try to satisfy future needs, rather than try to maximize the present ability of the individual which may prevent them from deteriorating further. This has a negative impact that can make the choice and the whole experience of assessing a suitable apparatus uncomfortable and depressing. A single mobility device only allows a narrow scope for increased or decreased user ability within their function.

In deciding upon a mobility device, the user is faced with having to choose from a range of devices that cope with, and provide various very differing types and levels of assistance. Due to the nature of illness and injury, the person's physical ability, and therefore the device most suited to them at any particular time, can change daily, for example during recovery and recuperation periods. There are also physical, financial, and psychological challenges, relating to the transition between one apparatus and another which are not easily discussed and understood, leaving a user unable to always make the choice of device themselves, and to be reliant on another person, such as a specialist, disability advisor, or even a shopkeeper, to help decide suitability.

Whether perhaps just needing some individual walking assistance around the home, enjoy being pushed in a wheel chair with the companionship of a helper, to feeling tired but requiring some 'me time' independent personal powered mobility, the need for various permutations of mobility aids can be endless and can constantly vary, even during a single day. Unfortunately, meeting these various requirements would entail owning, and having to move between, a variety of completely different appliances, and having them available at any time during that day, at any time and at any location, which would not only be expensive, but wholly impractical.

The main categories and types of known products which a person with mobility issues would consider of benefit, depending on their particular needs can be categorized and described as follows:
*Manual wheeled walker* support aids are lightweight wheeled frames with support handles for each hand. The user walks behind the device, putting some bodyweight through the top of the device whilst holding on to the adjustable height support handles on each side of the walker. As users often find it difficult to be on their feet for any long periods of time, such devices use wheeled frames to help support the user's bodyweight while moving around in domestic, as well as some leisure, situations. The rear wheels are generally attached to a fixed axle on both of the rear corners, while the central wheel or wheels are castered to allow turning initiated by the user braking slightly on one of the rear wheels, or merely dragging the framework in the direction required.

With a manual wheeled walker support aid, the user can stand between and slightly behind the handlebars, applying downward pressure on them to take some weight off their legs, using their arms and upper body to help steady themselves. Such devices may also be equipped with brakes to assist in stopping or turning the device. The wheels allow the user to push the walker along, while they walk behind the support aid and the device gives the user a solid frame to support them when they stop. This type of support walker is helpful in providing some mobility assistance in domestic situations when moving from room to room, as well as light outdoor use.

Wheeled walkers do have the benefit of assisting the user in maintaining an upright position while in use. This ensures that the eye level of the user is the same as that of able bodied individuals. This is particularly advantageous when conversing with able bodied individuals, and can be an added benefit psychologically, rather than being stuck in a seated position in a wheel chair or similar.

However, when the user wishes to travel any reasonable distance, for example past the threshold of their front door, in going shopping, or in indulging in outdoors social activity, the walker's limits are reached. This is partly because, although there is some support given to the user whilst walking behind the walker, the user essentially has to use their legs and to support their bodyweight to some extent to make progress across a given surface. Therefore, the distance the user is safely able to travel is limited in part by their own strength and stamina. During illness, or while recovering from an injury, people can be unsure as to their stamina over any given period of time, and this prevents the user from risking many activities available, away from the perceived safety of the home.

So, due to the uncertainty of the user as to their strength or stamina on any particular day or at any given moment, even if the shops were nearby for instance, it would perhaps be physically too much to enjoy an independent shopping expedition, and worrying for the user to stray too far from home or powered transportation, allowing only a very small radius of use. Moreover, the perception of the general public and stigma attached to a traditional wheeled walker in many cases prevents the user from wishing to be seen, or associated with one in a public place. This decision reduces the quality of life available to the user, and reduces the activities they can participate in.

*Manual and power wheel chair assist* support aids cover the more traditional 'helper aided' activity, allowing companionship and interaction between a seated user, and a more able bodied assistant. The user usually faces forward in the direction of travel, sitting on a chair attached to a wheeled framework, while the assistant stands behind, usually holding a pair of handles located at a convenient height at either side of the rear of the seat, and manually pushes the chair in the direction required. The rear wheels are attached to a fixed axle and the central wheels caster to allow turning, initiated by the helper's input on the handles. In some cases there is an option for the user to engage a separately mounted power unit to assist in the continued progress of the chair and user where there are gradients, and thereby alleviate the exertion of the helper.

Although the interaction and companionship is a positive aspect of this activity, it is widely reported that a user can feel that a manual chair is considered a last resort in terms of one losing one's independence, and public interaction and the perception attached to the user being in a full sitting position, and not at eye level during conversation, accentuates this feeling.

Unfortunately, common wheelchairs do not allow any flexibility in use or exercise as the seating position is maintained throughout use. Also, an assistant is needed to control the chair, so the user is reliant on the assistant for the whole journey. Furthermore, due to the hospitalized, institutionalized design and features prominent in wheel chair products, the perceived stigma attached to them denies many people the benefit of use.

Powered mobility scooters are available in many different guises, from lightweight pack up models with single wheel drive to huge road-going models. When a user wishes to travel any reasonable distance, leave the confines of their abode, go shopping or indulge in a social activity, the only independent option for personal transportation is operating a powered mobility scooter. Unfortunately, mobility scooters in general have a stigma attached to their use, and many people feel embarrassed or upset they are required to use these devices. Others simply refuse. The result of a user to use a support aid, or the support aid most suited to their physical condition, not only limits the distance the user is able to travel and the activities they are able to perform, but it may also hinder their recovery, for example by choosing a mobility aid which is unsuitable, or not most suited, for their particular need or by choosing instead to walk which may cause re-injury. There are also many disadvantages and problems, including financial and practical, in owning a mobility scooter.

Powered mobility scooters are rather heavy and awkward to pack up and transport to and from the point of use, often comprising several cumbersome and heavy parts that need to be assembled. Furthermore, their assembly can be physically demanding, challenging and complex. A person that requires any type of assistance, particularly if using a wheeled walker type of support aid, is unlikely to have the ability or strength to discard said wheeled walker, and independently transport a mobility scooter to a suitable place to commence use. Unless there is an able bodied person to assist them in this task, this leaves them unable to engage in independent powered travel.

Moreover, when a powered mobility scooter user arrives at a destination, after dismounting the scooter, the user would not have wheeled walker available to them to steady them anymore, as it's left at home. This is unfortunate and presents problems, as the user now needs their wheeled walker to help them go about the normal activities they would with a walker, particularly in confined spaces, such as in a shopping center, cinema, theatre, library, hospital, cafe or other public places where scooters are unable, or are not permitted, to be used.

Mobility scooters can feel too bulky in many situations, too wide, too heavy and too long. A large proportion of the weight is because of the heavy mechanical differential which runs the width of the rear of the scooter, between the wheels to power them. However, it is noted that it is important to get good traction from both the rear wheels and, to that end, that both the rear wheels drive the vehicle. In instances where only one rear wheel drives one side of the rear of the vehicle, it is not possible to set off from a standstill on full steering lock, with the driven wheel on the inside of a turn, which is a distinct disadvantage.

There is a certain stigma attached to the use of mobility scooters and wheeled walkers, partly due to design that tends to have a hospitalized and elderly look, which makes many user feel self-conscious and uncomfortable, putting off a wide spectrum of potential users from enjoying personal independent mobility. Many people who would benefit from them actually forgo such devices on the grounds that they are 'labelled'.

In summary, persons with any type of limited mobility, for example due to injury, medical operation, age, or lack of strength or stamina, can benefit from the use of either, or a combination of, wheeled walkers, a type of manual or powered wheelchair, or a type of mobility scooter. However, each aid provides only one distinct function, and they all have their individual drawbacks. Choosing between them will severely compromise the range of activities the individual can expect to participate in. Choosing them all is too expensive and impractical. And the scenario of need is ever changing during the course of a day's activities due, for example, to the varying requirements of each activity and due to the variation of strength and stamina of a user throughout the day. This is all very frustrating, confusing and upsetting for the individual.

US 2003/019076 A1 discloses a caster for a baby carriage.

FR 2783463 A1 discloses a rolling support for medical usage having a wheel held by a bracket mounted on a support shaft.

FR 2927843 A1 discloses a pivoting wheel device for use on a medical bed frame.

To overcome this, the primary objective of the present disclosure proposes a single, novel, multi-functional and convertible, lightweight, power assisted and manual, wheeled apparatus for the purpose of offering a choice of support and assistance to people or persons during standing or walking, notwithstanding incorporating transportation of said persons whilst either seated or standing with a combination of manual operation, powered assistance, and the aid of a helper. Also included is an able bodied Freestyle leisure mode.

Moreover, the device is a true hybrid in the sense that it allows use and enjoyment by the able bodied as well as individuals with a wide range of mobility issues. They device may convert quickly and simply between, but not limited to or by, 7 distinct modes of operation, including:
- a folded configuration;
- a manual Support Walker;
- a seated Walker;
- a manually Pushed Wheel Chair;
- a powered Assist Pushed Wheelchair;
- a powered Personal Seated Vehicle; and
- a powered Freestyle Leisure mode

The device is a revolutionary design which allows the user to choose from a huge range of functions, benefits, and features, currently only possible by owning a variety of separate individual products.

The device has many practical and financial benefits and implications, no single one of which is solely responsible for its overall desirability. After considering the range of functions, ease of use, aesthetics qualities, inventive engineering and convertible design, type and method of power unit delivery, differential control, and user friendly functions discussed, one skilled in the art will understand how the device provides a huge range of advantages over any other known device.

The device allows the user to choose the appropriate type of assistance to suit a particular activity, and alternate quickly and easily between modes as they wish, to suit their exact requirements. The device can be operated independently without the need for extra help to assemble or transport, is lightweight, easy to manoeuvre, safe and comfortable. It is designed to fit occupants of various sizes, as the seat configuration, handlebar height, and steering tiller can all be adjusted to a perfect ergonomic position in any mode.

The device aims to alleviate, at least to a certain extent, the problems and/or address at least to a certain extent the difficulties associated with the prior art.

According to the present invention, there is provided a steering engagement mechanism for a vehicle according to Claim 1.

Optionally, the steering engagement mechanism comprises wheel coupling means for rotationally coupling with the at least one wheel, and wherein the steering engagement mechanism further comprises steering coupling means for coupling with the steering input of the vehicle, the steering engagement means being configured such that, when the steering engagement mechanism is converted from the steering disengaged configuration to the steering engaged configuration, the wheel coupling means is configured to aligns with the steering coupling means. The wheel coupling means may also be referred to as a wheel steer control means or a wheel mount. The steering coupling means may optionally be configured to be coupled or coupleable to the steering input, such as a steering linkage, handlebar or steering wheel etc., of the vehicle or device.

Optionally, the steering input has an associated direction of travel of the vehicle and wherein, when the steering engagement mechanism is converted from the steering disengaged configuration to the steering engaged configuration, the at least one wheel is caused to rotate about the steering axis so as to align with the associated direction of travel of the steering input. Optionally, when the steering engagement mechanism is converted from the steering disengaged configuration to the steering engaged configuration, the wheel coupling means may be configured to cause the at least one wheel to rotate about the steering axis so as to align with the associated direction of travel of the steering input.

Optionally, in the steering engaged configuration, the at least one wheel is rotationally coupled to the steering input. Optionally, in the steering engaged configuration, the steering engagement mechanism is configured to rotationally couple the at least one wheel to the steering input. In examples comprising wheel coupling means and steering coupling means, the steering engagement mechanism may optionally be configured to rotationally couple the wheel coupling means to the steering coupling means.

Optionally, in the steering engaged configuration, the steering engagement mechanism is configured to rotationally lock the at least one wheel to the steering input. In examples comprising wheel coupling means and steering coupling means, the steering engagement mechanism may optionally be configured to rotationally lock the wheel coupling means to the steering coupling means.

Optionally, the at least one wheel is a castor wheel.

Optionally, the at least one wheel is two castor wheels.

Optionally, the steering input is a handlebar or steering wheel.

Optionally, the steering engagement mechanism comprises an upper rotation coupling member and a lower rotation coupling member, wherein the upper rotation coupling member is configured to engage with the lower rotation coupling member such that the lower rotation coupling member is rotationally coupled to the upper rotation coupling member when the upper rotation coupling member is engaged with the lower rotation coupling member and wherein the lower rotation coupling member is rotationally decoupled with the upper rotation coupling member when the upper rotation coupling member is disengaged with the lower rotation coupling member. In examples comprising wheel coupling means and steering coupling means, the upper rotation coupling member may optionally be coupled to the steering coupling means and the lower rotation coupling member may optionally be coupled to the wheel coupling means.

Optionally, the upper and lower rotation couplings are configured such that, when the upper and lower rotation coupling members are engaged, the lower rotation coupling is caused to rotate with respect to the upper rotation coupling to align therewith.

Optionally, the upper and lower rotation coupling members are engaged and aligned, the upper and lower rotation coupling members are rotationally locked with respect to each other.

Optionally, the upper and lower rotation coupling members comprise complementary locking means for rotationally locking the upper and lower rotation coupling members together when the upper and lower rotation coupling members are engaged.

Optionally, the locking means comprises an axially extending projection provided on an underside surface of the upper rotation coupling member and a corresponding axially extending recess provided on an upper surface of the lower rotation coupling member configured to engage with the axially extending projection of the upper rotation coupling member.

Optionally, the lower rotation coupling member is configured to be rotationally coupled to the at least one wheel of the vehicle. Optionally, the lower rotation coupling member may be configured to be rotationally coupleable to the at least one wheel of the vehicle.

Optionally, the upper and lower rotation coupling members are configured to be in the engaged configuration of the rotation coupling members when the steering engagement mechanism is in the engaged configuration of the steering engagement mechanism and wherein the upper and lower rotation coupling member are configured to be in the disengaged configuration of the rotation coupling members when the steering engagement mechanism is in the disengaged configuration of the steering engagement mechanism.

Optionally, the steering engagement mechanism further comprises biasing means configured to bias the upper and lower rotation coupling members in the disengaged configuration.

Optionally, the upper rotation coupling member is rotationally coupled to the steering input of the vehicle. Optionally, the upper rotation coupling member is configured to be rotationally coupled to the steering input of the vehicle or is configured to be rotationally coupleable to the steering input of the vehicle.

Optionally, the upper rotation coupling member is rotationally coupled to a steering arm, wherein the steering arm is rotationally coupled to a steering linkage of the steering input. Optionally, the steering arm is configured to be rotationally coupled to a steering linkage of the steering input or is configured to be rotationally coupleable to a steering linkage of the steering input.

Optionally, the vehicle comprises at least one wheel and a steering input for steering the vehicle.

Optionally, the vehicle is a wheeled personal mobility device.

The present invention may be carried out in various ways and a preferred embodiment of a steering engagement device in accordance with the present invention will now be described by way of example with reference to the accompanying drawings, in which:
Fig. 1 is a perspective view of a wheeled personal mobility device useful in the understanding of the present invention for transporting a person in the folded configuration, with an optional removable seat detached;

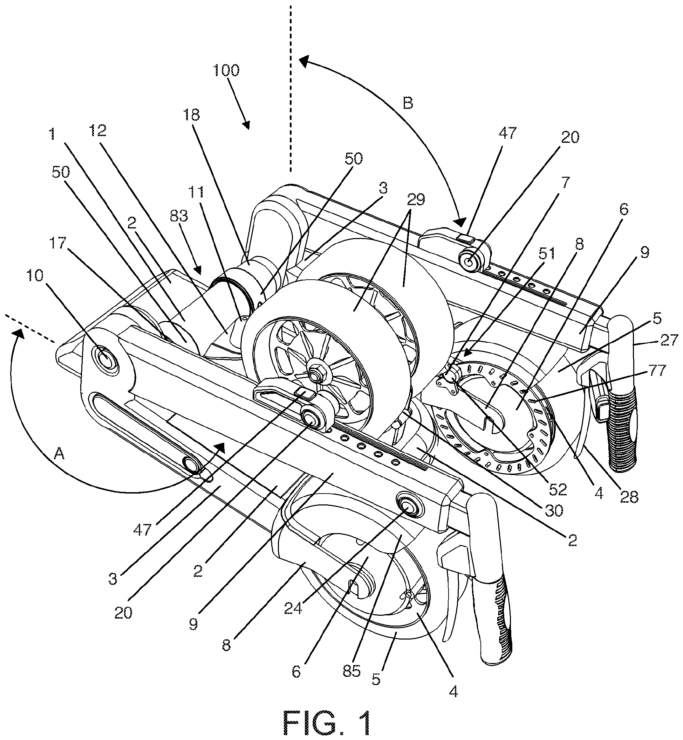

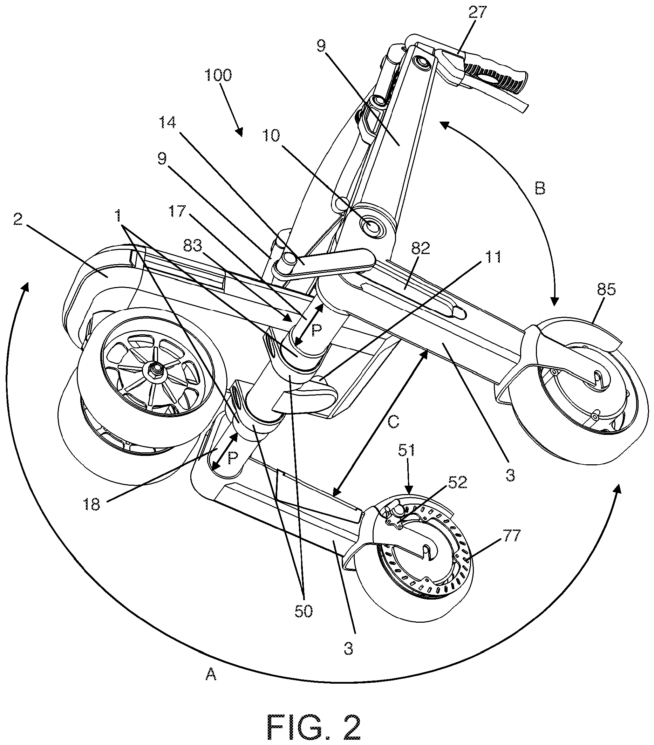

Fig. 2 is a perspective underside view of the device of Fig. 1 in which the wheeled personal mobility device is shown unfolded from the folded configuration of Fig.1 and the width adjustor has been adjusted such that the device is in its widest position. The front chassis is fully rotated about the cross-member, via swivel brackets rotatable about the cross-member, such that the front wheel assembly is engaged with a flexible rubber stop provided on the cross-member. Support arms are shown in an upright position, with a seat attached thereto. A crank arm is deployed from a recess in the rear wheel chassis legs;
Fig. 3 is a perspective view of the cross-member of the device of Fig.1 wherein the cross-member and is shown partially cutaway to reveal the mechanism of the width adjustor;
Fig. 4 is a perspective view of the device of Fig. 1 wherein the wheeled personal mobility device is shown configured in the manual support walker configuration, with seat attached, and wherein the width adjustor has extended such that the device is in a widened position;
Fig. 5 is a front view of the device of Fig. 1, wherein the device is in the manual support walker configuration, but wherein the width of the device has been narrowed via rotation of a crank arm connected to a width adjustor within the cross-member. A user is shown standing behind the device, between rear wheels, and supporting themselves via support arms. The seat is shown attached;
Fig. 6 is a front view of the device of Fig.1 wherein the device is in the manual support walker configuration, but wherein the device has been widened via rotation of the crank arm connected to the width adjustor provided on the cross-member. A user is shown standing behind the device, between rear wheels, and supporting themselves via support arms. The seat is shown attached;
Fig. 7 is a left side view of the device of Fig. 1, with seat attached, wherein the device is shown in the seated walker configuration wherein the seat is rotated to face the rear of the device and wherein the upper support arms have been fully collapsed within upper chassis members;
Fig. 8 is a perspective top view of the device of Fig. 1, with seat attached, wherein the device is shown configured in the manually pushed wheelchair configuration. The configuration shown has substantially the same appearance as that of the power-assisted pushed wheelchair configuration. The front chassis member is shown in an extended configuration, revealing a front chassis internal compartment, and front footrests are shown deployed from the front chassis member;
Fig. 9 is a perspective view of the front chassis extender of the device of Fig. 1;
Fig. 10 is a left side view of the device of Fig. 1 wherein the device is configured in the manually pushed wheelchair configuration, having substantially the same appearance as that of the power-assisted pushed wheelchair configuration, a user shown as being seated on the device with an assistant operating the device from behind;
Fig. 11 is a perspective front view of the device of Fig. 1 wherein the device is configured in the power-assisted personal seated vehicle configuration, with the front chassis in an extended configuration and with steering tiller and front chassis footrests deployed;
Fig. 12 is a perspective view of the steering engagement mechanism of the device of Fig. 1 according to an embodiment not forming part of the invention, with a steering tiller pivot lock button and spring shown in exploded view;
Fig. 13 is a perspective front view of the device of Fig. 1 in which the device is configured in the power-assisted personal seated vehicle configuration, with the front chassis extended and with steering tiller deployed and engaged with the front wheel assembly;
Fig. 14 is a rear perspective view from the right hand side of the device of Fig. 1 in which the device is configured in the power-assisted freestyle leisure configuration wherein the seat is removed, the chassis arms (i.e. upper chassis members) are fully collapsed, the support arms are fully retracted into their respective chassis arms, the footrests of the rear chassis members having been folded out, and the front chassis is partially extended with the steering tiller deployed; and
Fig. 15 is a perspective view of the device of Fig. 1 in which the device is configured in the power-assisted freestyle leisure configuration, with a user shown riding the device while standing on footrests which have been deployed or unfolded from the rear chassis members.
Fig. 16 is a longitudinal cross-sectional view of an alternative width adjustor suitable for, and for use with, the wheeled personal mobility device of Fig. 1 in substitution over the width adjustor of that device and as shown in Fig. 3.
Fig. 17 is a cross-sectional view, taken along section A-A, of the alternative width adjustor of Fig. 16.
Fig. 18 is a cross-sectional view of an embodiment of a steering engagement mechanism according to the invention, shown in a steering disengaged configuration, which is suitable for, and for use with, the wheeled personal mobility device of Fig. 1.
Fig. 19 is a cross-sectional view of the alternative steering engagement mechanism of Fig. 18 wherein the steering engagement mechanism is in a steering engaged configuration. Fig. 20 is a partially cut away view of an alternative upper chassis arm rotation lock for rotationally raising the upper chassis arms with respect to the rear chassis members. The alternative upper chassis arm rotation lock mechanism is suitable for, and for use with, the wheeled personal mobility device of Fig. 1.
Fig. 21 is a partially cut away, up-close view of the locking mechanism shown in Fig. 20. Fig. 22 is a perspective front-facing offside view of an alternative steering tiller handlebar assembly to that shown in Fig. 11, with the left-hand side handle folded down and shown in partial cutaway to shown the arrangement of the internal components of a handlebar locking mechanism and with the right-hand side handle fully deployed, locked and ready for use. The alternative steering tiller handlebar assembly is suitable for, and for use with, the wheeled personal mobility device of Fig. 1.
Fig. 23 is a perspective partially exploded view of an alternative steering tiller angle adjustment mechanism suitable for, and for use with, the wheeled personal mobility device of Fig. 1. The alternative steering tiller angle adjustment mechanism is also shown in Figs. 18 and 19.
Fig. 24 is a partially cutaway perspective view of the left hand side of the front chassis member to show an alternative chassis extension mechanism, or front chassis extender, to that shown in Fig. 9 suitable for, and for use with, the wheeled personal mobility device of Fig. 1.
Fig. 25 is a perspective view of an alternative seat with seat attachment means, seat height adjuster and seat folding mechanism suitable for, and for use with, the wheeled personal mobility device of Fig. 1.
Fig. 26 is a close-up perspective view of the seat attachment means, the rotatable coupling means for rotatably coupling the seat to the upper chassis arms and the seat height adjustor for use with the alternative seat of Fig. 25.
Fig. 27 is a close-up perspective view of the seat height adjustor with seat height locking means for use with the alternative seat of Fig. 25.
Fig. 28 is an elevated side partial cut away perspective view, taken from the left side of the device, of a second alternative width adjustor device which is electrically driven by any electric motor.
Fig. 29 is a cross-sectional view of the splined connection between a collar of the width adjustor device of Fig. 28 and an inner tubular member when there is no rotational load transmitted.
Fig. 30 is a cross-sectional view of the splined connection of Fig. 29 wherein a rotational load is applied.
Fig. 31 is a perspective cutaway view of part of a second alternative front chassis extension mechanism.
Fig. 32 is an exploded view of in-wheel motor used in examples of the mobility device.
Fig. 33 is an exploded perspective view of a spring assisted electromagnetic geared brake mechanism for use with the device, shown in combination with the in-wheel motor of Fig. 32.
Fig. 34 is a perspective partial cutaway view of components of the spring assisted brake mechanism of Fig. 33 and of an optional manual brake release mechanism for releasing the spring assisted brake mechanism of Fig. 33 when the brake system is engaged when power is not being supplied to the brake mechanism.
Fig. 35 is a perspective partial cutaway view of an optional manual cable brake and handbrake mechanism for use with the mobility device.
Fig. 36 is a perspective view of the front of an second alternative steering engagement mechanism in which the steering engagement mechanism is in an engaged configuration, with a sectional view through a clutch cup mechanism and left chassis node.
Fig. 37 is a close-up perspective partial cutaway view of parts of the second alternative steering engagement mechanism of Fig. 36, wherein the steering engagement mechanism is in a disengaged configuration.
Fig. 38 is a close-up perspective partial cutaway view of parts of the second alternative steering engagement mechanism of Fig. 36 and Fig. 37, wherein the steering engagement mechanism is in a disengaged configuration, showing an alternative view to that of Fig. 37.
Fig. 39 is a perspective view of an alternative upper clutch cup and lower clutch cup for use with the second alternative steering engagement mechanism of Figs. 36 to 38.

A wheeled personal mobility device 100 useful for the understanding of the present invention is shown in perspective view in Fig. 1. The device is configured in the folded configuration, which may also be referred to as the folded mode or folded position.

Two rear chassis members 3, which also may be referred to as rear chassis legs, are arranged such that they are substantially parallel to each other. Each elongate rear chassis member 3 comprises a proximal and distal end, which may be referred to as the first and second end of the rear chassis member respectively. The rear chassis members 3 are substantially hollow for increased stiffness while minimising the overall weight of each rear chassis member 3. At the distal end of each rear chassis member 3, there is provided a rear wheel mounting system or bracket 8, comprising two spaced apart and substantially parallel plates configured to receive a rear wheel assembly 13 affixed to the distal portion of the rear chassis members 3 via a nut and bolt, through-axle, quick-release skewer or other such suitable fastening means. A braking means 51 for braking the device is attached on each of the rear chassis members 3 to the rear wheel assembly mounting bracket 8 of each rear chassis member 3. In the device shown, the braking means 51 comprises a brake calliper 52, with disc pads, configured to engage with a disc brake 77 provided on each rear wheel assembly 13. The disc brake 77 includes a plurality of angled slots equally spaced around its circumference.

In addition to a disc brake 77, the rear wheel assemblies 13 each comprise a rear wheel 4, a rubber tyre 5 mounted to the rear wheel 4, an in-hub motor 6 configured to provide power to the rear wheels 4, and a central bore configured to receive the rear wheel fastening means for fastening the rear wheels 4 to their respective rear chassis members 3.

The rear chassis member 8 on the left side of the device 100 (wherein the rear of the device 100 is the portion of the device 100 closest to the rear wheels 4), i.e. the closest rear chassis member as shown in Fig. 1, comprises a recessable, foldaway crank arm 14 recessed into a crank arm receiving slot or recess 82 provided in the left face of the rear chassis member 3 and towards its proximal end such that when the crank arm 14 is fully recessed into the rear chassis member 3, the outer surface of the crank arm 14 lies flush with the outer surface of the rear chassis member 3 into which it is recessed.

The two substantially parallel rear chassis members 3 are joined together by a central cross-member 83 which extends substantially perpendicular between the two rear chassis members 3 and is joined to their inner surfaces at their proximal end. Although shown as being substantially parallel, the rear chassis members 3 may also be angled apart, or flared outwardly, such that the distal ends of the rear chassis members 3 (and thereby the rear wheel assemblies 13) are further apart from each other than at the proximal ends of the rear chassis members 3. In such an arrangement, the rear wheel mounting bracket 8 may be configured such that the rear wheels 4 are substantially parallel in order to ensure proper tracking of the rear wheels 4 and to reduce tyre wear, although other arrangements may be provided wherein the rear wheels are provided with a certain amount of toe-in or camber to improve the handling characteristics of the device 100.

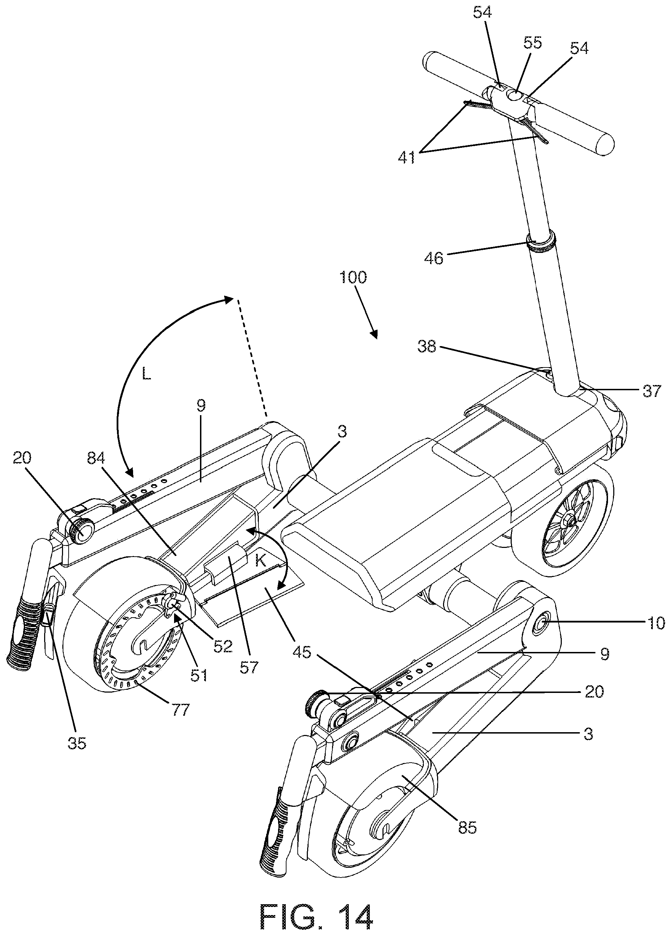

Also provided on each of the rear chassis members 3 is a foldaway or deployable rear footrest or rear footplate 45 configured to receive the foot of a user 26 and to enable a user 26 to mount the device 100 for riding. The foldaway rear footrests 45 can also be seen in Fig. 14 in which it can be seen that the rear footrests 45 are hingedly connected by a hinge 57 to the inner surface of the rear chassis members 3 (that is to say the surface facing the space between the two rear wheel chassis members 3). Although a hinge 57 is shown, any other type of hinged connection is envisaged.

The rear footrests 45 are substantially L-shaped such that, when recessed or folded away in their respective rear chassis members 3, the rear footrests 45 substantially match the shape of two adjoining sides (the upper and the inner sides) of the rear chassis member 3 such that, when folded away within a recess 84 provided in the rear chassis members 3, the external surfaces of the rear footrests 45 lie substantially flush against the external surfaces of the rear chassis members 3 such that the each rear footrest 45 is substantially concealed within or alongside its respective rear chassis member 3.

The rear footrests 45 may also comprise means for facilitating the user 26 with mounting the device 100. Such means may comprise fastening means for securing a user 26 to the device 100, or may alternatively or additionally comprise means for improving or increasing the friction between the feet of the user 26 and the rear footrests 45. The friction increasing means may comprise a rubber pad, which may comprise protrusions and/or grooves, attached or adhered to each of the rear footrests 45.

An substantially elongate upper chassis member 9 is rotationally connected to each of the rear chassis members 3 at their proximal end such that the upper chassis members 9 are configured to be collapsible by rotation about an axis of rotation which is substantially parallel to the width of the device 100, or to an axis of rotation which is substantially perpendicular to the longitudinal axis of the elongate rear chassis members 3, such that the upper chassis members, or upper chassis arms, 9 are configured to be able to rotate in a scissor-like manner towards and away from the rear chassis members 3 and thereby vary the angle between each rear chassis member 3 and its corresponding upper chassis member 9 to which it is rotatably coupled. The rotatable movement of the upper chassis members 9 with respect to the vertical is shown in Fig. 1 by arc B.

The upper chassis members 9 are substantially box-shape in cross-section and have a first and a second end at opposing ends of their lengths. A first end of each upper chassis member 9 is rotationally connected to the proximal end of its corresponding rear chassis member 3.

The rotational connection between the upper chassis members 9 and their corresponding rear chassis members 3 is adjustable such that the angle between the upper chassis members 9 and their corresponding rear chassis members 3 may be adjusted according to a user's 26 preference or according to a particular configuration of the device 100. In Fig. 1, the foldable upper chassis arms 9 are shown as being completely folded down or collapsed and, as such, may rest on top of mud flaps 85 provided on the rear wheel assemblies 13, or they may be supported slightly above the rear mud flaps 85, having reached the full limit of the available range of rotational of the rotational connection between each upper chassis member 9 and its corresponding rear chassis member 3.

A rotational lock 10, comprising a locking pin or locking button, is provided to enable the upper chassis members 9 to be raised to a desired extend, that is to say that the angle between each upper chassis arms 9 and its corresponding rear chassis member 3 is increased when raised, and to be locked or maintained in a desired position. The upper chassis arm rotational lock 10 may be disengaged to enable the upper chassis arms 9 to be collapsed or lowered by pushing the locking pin or button 10 inwards towards the centre of the device 100, at which point the user 26 may manually control the lowering or further raising of the upper chassis arms 9.

The second end of each upper chassis arm 9, at an opposite end of the upper chassis arm 9 to their first end, comprises a retractable support arm 23 which is configured to slide inside a hollow portion of the upper chassis members 9 such that the support arm 23 is extendable from the upper chassis member 9. An extension adjustor or extension adjusting means 24, for example a lock such as a locking pin or button, is provided on an external surface of each upper chassis member 9 which, for example when depressed, is configured to enable the support arms 23 to be extended or raised from the upper chassis members 9 to a desired extent as chosen by the user 26 or as required by a particular configuration of the device 100. When the desired height of the support arms 23 has been achieved, the support arms 23 may be locked or otherwise maintained at that extension by way of the extension adjustor or extension adjusting means 24. When the extension adjustor or extension adjusting means 24 comprising a locking button, the support arms 23 may be maintained at their desired extension upon the release of the locking button 24 and may be collapsed or lowered into the upper chassis members 9 upon the user depressing the locking button 24.

The support arms 23 comprise a substantially elongate substantially box-section bar or tube member configured to be received by the upper chassis members 9. At the upper end of the support arms 23, attached to the elongate box-section bar, there are provided handles 27 which are at an acute angle to the longitudinal axis of the elongate support arms 23 such that, when the upper chassis members 9 are in a fully raised or partially raised position, the handles 27 are substantially parallel to the floor upon which the device 100 is placed (that is they are substantially horizontal). Alternatively, the angle between the handles 27 and the longitudinal axis of the support arms 23 may be chosen or selected such that, when the upper chassis members 9 are raised (either fully or partially), the handles 27 are at such an angle with respect to the floor or to the horizontal such as to be more comfortably grasped by a user 26 or assistant 34.

The handles 27 are substantially tubular or cylindrical bars with a grip portion at one end thereof configured for receiving a user's 26 or assistant's 34 hand. The comfort of the handles 27 is improved by being ergonomically shaped, particularly the grip portion thereof, as can be seen by the thicker portion of the grip section of the handles with respect to adjacent thinner portions. Substantially circumferential grooves may be provided in the handles 27, for example in the grip portion, for assisting within increasing the comfort or ability of the user 26 or assistant 34 to grasp or hold the device 100 and which may extend fully or only partially around the circumference of the handles 27 or grip portion thereof.

The support arms 23 each comprise a braking means actuator 28 which, in the example shown, is attached to each of the handles 27. The braking means actuators 28, or brake actuators, are in the form of a brake lever 28 such as may be commonly found on bicycles and such like, but it is envisaged that any other suitable brake actuating means may also be used. In the device shown, a user 26 actuates the braking mechanism 51 of the device, in this example comprising brake callipers 52 attached to the rear chassis members 3, by squeezing the brake levers 28 towards the handles 27, particularly towards the grip portion of the handles 27. The brake calliper 52 may be released by releasing the brake levers 28.

In addition to brake levers 28, the handles 27 also each comprise means for controlling the in-hub motors 6 provided within the wheels 4 of the rear wheel assembles 13. Although, in the example shown, only the rear wheels are powered by a motor 6, examples wherein a front wheel or wheels 29 is also or solely powered by motors 6 are also envisaged. Thus, the handles 27 each comprise speed or power controls for controlling the speed of the device and/or the power of the motors and, in the example shown, these are in the form of buttons 35. The power controls may comprise a single on state and an off state (i.e. they may be switches) or they may enable have a number of discrete intermediate power levels or may even enable the quantity of power delivered to the rear wheels to be varied continuously. The in-hub motors 6 may be independently controlled such that one of the rear wheels 4 may be rotatable at a different speed to the other rear wheel 4 (or that a different amount of power may be supplied to one rear wheel 4 compared to the other rear wheel 4) and in such examples the motor controls 35 provided on each of the handles 27 enable the device to be more easily turned or steered and manoeuvred by varying the speed of one rear wheel 4 with respect to the other rear wheel 4. For example, the device 100 may be turned left by actuating the motor control 35 on the right hand handle 27 such that the motor 6 on the ride hand rear wheel 4 causes the right hand rear wheel 4 to increase in speed and/or the brake actuator 28 on the left handle 27 may be actuated to slow the left hand rear wheel 4 such that the device 100 turns left or turns left more sharply. Alternatively, a controller may be provided which automatically adjusts the speed of the rear wheels 4 with respect to each other according to steering input from the user, via steering tiller 36, to enable precise steering of the device 100.

The wheeled personal mobility device 100 may also comprise in certain configurations or modes a removable or detachably attachable adjustable seat 53 rotatably connected to both of the upper chassis members 9 part-way along their length. Although shown as being attached part-way along the length of the upper chassis members 9 (and on their front or forward-facing surface), the seat 53 may be attached anywhere along their 9 length, including at either end and on any of their surfaces (front, left, right or rear).

To that end, rotatable seat attachment means 20 are provided on each of the upper chassis arms 9 such that the seat 53 is rotatably coupled to both of the upper chassis members 9. The seat attachment means 20 in the example given comprises a swivelling locking nut. The seat attachment means 20 is adjustably connected to the upper chassis members 9 by a seat height adjustor 47 such that the seat attachment means 20 may be adjusted at various positions along the length of the elongate upper chassis members 9 and locked into place by a locking means, operated by a push button, such that the height of the seat 53 with respect to the ground or with respect to front chassis footrests 33 may be adjusted.

In the folded configuration as shown in Fig. 1, the seat 53 is removed such that the device 100 may be more compactly collapsed and stowed away. Examples wherein the seat 53 remains attached while the device 100 is in the folded configuration are also envisaged.

The wheeled personal mobility device 100 further includes a front chassis member 2 comprising a front wheel assembly 30, the front wheel assembly 30 comprising two substantially parallel, coaxial, and spaced apart twin front wheels 29 which are configured to caster and to be able to rotate or be steerable fully around so as to be able to face any direction. A through axle 62 and nut extends through both front wheels 29 and maintains them in alignment and their spaced apart distance.

The front chassis is called the front chassis as it is generally towards the front of the device. The rear chassis is called the rear chassis as it is generally towards the rear of the device. The front of the device is that portion which is closest to the forwards direction of the device and similarly, the rear of the device is that portion which is closest to the rearwards direction. The forwards direction is that in which the device substantially primarily or substantially solely moves and the rearwards direction is that which is substantially opposite to the forwards direction. The portion of the device which the user faces while being transported by the device may also be referred to as the front of the device as it is the portion of the device which is forwards of, or in front of, the user, from the user's perspective. Similarly, as the rear of the device is that which is opposite to the front, that portion of the device which is to the back of the user while being transported by the device may be referred to as the rear of the device.

A front chassis member 2 is rotatably coupled to the cross-member 83 by chassis swivel brackets 50 fastened into place around an outer barrel 1 of the cross-member 83 such that the front chassis member 2 is free to rotate substantially about the longitudinal axis of the cross-member 83, as shown by arc A of Fig. 2. The swivel brackets 50 are affixed towards one end of the front chassis member 2, namely the rear end or the end furthest from the front wheel assembly 30. The swivel brackets 50 are connected to the outer barrel 1 of the cross-member 83 such that the swivel brackets 50 are equidistant from the centre of the cross-member 83 and from both of the rear chassis members 3, such that the front chassis member 2 is also equidistant from the centre of the cross-member 83 and from both of the rear chassis members 3. In this way, when the twin front wheels 29 are facing forwards, that is when they are substantially parallel to the rear wheels 4, the front wheels 29 are located along a centreline of the device 100 such that they are centred with respect to the rear wheels 4. Thus, when viewed from the front or rear of the device 100, the front wheels 29 are centred between the rear wheels 4.

In order to limit the rotation the front chassis member 2 about the longitudinal axis of the cross-member 83, a rotation stop or rotation limiter 12 is provided affixed to, and rotationally locked to, the outer barrel 1 of the cross-member 83. Although the rotation limiter 12 is shown substantially at the centre of the outer barrel 1, it may be located at any position along the length of the outer barrel 1, and it may also be provided elsewhere on the cross-member 83 or on the rear chassis members 3. The rotation limiter 12 comprises a rubber stop 11, also referred to as a rubber cushion stop, configured to engage the underside of the front chassis member 2 which the front chassis member 2 has been fully rotated about the longitudinal axis of the cross-member 83. The rotation limiter 12 may also serve as a suspension means for the device 100 as it may damped out vibrations through or across the device 100, for example from the front wheels. As the rotation limiter 12 is attached and rotationally locked to the outer barrel 1 of the cross-member 83, and the outer barrel 1 is rotationally located to the collars 17, 18, which are in turn rotationally locked to the rear chassis members 3, the rotational limiter 12 does not rotate with respect to the rear chassis members 3 and therefore its position with respect to the rear chassis members 3 is maintained regardless of the rotation of the front chassis member 2 and regardless of the extent to which the cross-member 83 is adjusted in length via the width adjustor, as discussed below.

The front chassis member 2 comprises an extender 86 configured to enable the length of the front chassis member 2 to be extended or retracted and thereby increase or reduce the wheelbase of the device 100. In Fig. 1 the extender 86 is shown in the non-extended position such that the front chassis member 2 is in its shortest configuration. When the front chassis member 2 is extended by front chassis member extender 86, an internal compartment 87 is revealed wherein a foldaway steering tiller 36, a battery 42, a printed circuit board 43 or other components may be stowed.

The front chassis member 2 also comprises foldaway front footrests or footplates 33, similar to the rear footrests 45, wherein one front footrest 33 is provided on each opposite side of the front chassis member 2, i.e. one foot rest 33 is provided on the left hand side of the front chassis member 2 and another foot rest 33 is provided on the right hand side of the front chassis member 2. The foldaway front footrests 33 are hingedly or pivotably connected to the front chassis member 2 and are substantially L-shaped so as to conform with the external surface of the front chassis member 2 such that the front footrests 33 lie within a recess of the front chassis member 2 such that they are substantially flat and lie flush against an adjacent external surface of the front chassis member 2 such that the front footrests 33 are substantially concealed when they are folded away within their recess.

In the folded configuration, as shown in Fig. 1, the support arms 23 are fully retracted into the upper chassis members 9 and the upper chassis members 9 are fully rotated backwards and collapsed against the two rear chassis members 3. The removable seat 53 is removed and the front chassis member 2 is rotated fully underneath the device 100, that is the front chassis member 2 is rotated anticlockwise about the cross-member's 83 longitudinal axis when viewed from the left hand side of the device 100 such that the front wheels 29 of the front wheel assembly 30 are located within the space between the two rear wheels 4. The rear footrests 45 have been stowed or folded away and are recessed within their respective rear chassis members 3.

Fig. 2 shows the wheeled personal mobility device 100 of Fig. 1 wherein the front chassis member 2 has been unfolded, that is to say that it has been rotated clockwise by means of swivel brackets 50 about the central cross-member 83 when viewed from the left hand side of the device 100 such that it is above the cross-member 83, rather than being below the cross-member 83 as in the folded configuration, and that the upper chassis arms 9, rotatably coupled to the rear chassis members 3, have been unlocked by depressing locking button 10 and raised such that the angle between the upper chassis arms 9 and the rear chassis members 3 has increased. The front chassis member 2 is completely unfolded and as such engages the rotation limiter 12 attached to the outer barrel 1 such that the front chassis member 2 is unable to rotate about the longitudinal axis of the cross-member 83 any further, the rotation limiter 12 providing a degree of suspension and vibration damping of the front chassis member 2. Additionally, the removable seat 53 is shown attached to the device 100. The upper support arms 23 remain retracted within their respective upper chassis members 9. The front chassis member 2 is in its unextended or retracted configuration and the front footrests 33 are folded or stowed away alongside the front chassis member 2.

In Fig. 2, the cross-member 83 has been extended to its full length, as denoted by arrow P, by means of a width adjustor mechanism 88, provided within the cross-member 83 and actuated by rotation of the crank arm 14, such that the width of the device 100 and of the rear chassis members 3 are at their maximum. When the crank arm 14 is rotated clockwise (when viewed from the left hand side of the device 100), the width adjustor 88 extends the length of the cross-member 83 such that the rear chassis members 3 become further spaced apart from each other, that is they move further apart, and the device 100 therefore becomes wider. Similarly, when the crank arm 14 is rotated anticlockwise (when viewed from the left hand side), the width adjustor 88 reduces the length of the cross member 83 such that the rear chassis members 3 move closer together and the overall width of the device 100, and its wheel track, narrows. The foldaway crank arm 14, with rotatable crank arm handle attached thereto, is shown as being deployed and partially rotated from its recess 82 in the left hand rear chassis member 3. Although in this example the crank arm 14 is shown on the left rear chassis member 3 on the left hand side of the device 100, it may also be on the right hand side of the device 100 on the right rear chassis member 3.

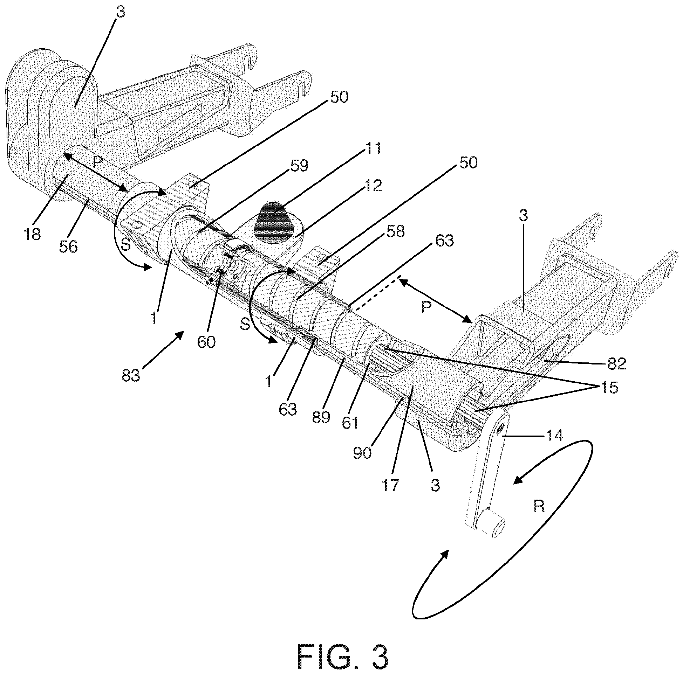

Fig. 3 is a close-up view of the cross-member 83 and rear chassis members 3 of the device 100 shown in Figs. 1 and 2, wherein the width adjustor mechanism 88 is shown in more detail and includes a partial cutaway section view of the width adjustor 88. For clarity, the rear footrests 45, rear wheel assemblies 13, front chassis member 2, front wheel assembly 30, and upper chassis members 9 with their support arms 23 are not shown.

Crank arm 14 comprising a crank handle is attached to crank spline 15, which is itself connected to an inner threaded barrel member 58, 59. The threaded barrel member 58, 59 comprises two generally equally long lengths or sections 58, 59 fastened together by barrel fixings 60, enabling the two sections 58, 59 of the threaded barrel member to rotate together and simultaneously. The threaded barrel member comprises a female thread for receiving and engaging with a male thread. The thread of the first section 58 of the threaded barrel member, i.e. the section on the left hand side of the device, is a right handed female thread, whereas the thread of the second section 59 of the threaded barrel member, the section on the right hand side of the device, is a left handed female thread.

A first outer collar 17 and a second outer collar 18 are located at opposite ends of the threaded barrel member 58, 59. The first collar 17 is located substantially towards the left end of the threaded barrel member and the second collar 18 is located substantially towards the right end of the threaded barrel member. Consequently, the first 17 and second 18 collars may be referred to as the left 17 and right 18 collars respectively. Each collar 17, 18 is substantially tubular with each collar 17, 18 comprising a male thread on their inner cylindrical surface. The left collar 17 comprises a right handed thread, whereas the right collar 18 comprises a left handed thread.

The male thread of the left 17 collar engages the female thread of the left section 58 of the threaded barrel member, and the male thread of the right 18 collar engages the female threaded of the right section 59 of the threaded barrel member such that, when crank arm 14 is rotated clockwise, the threaded barrel member 58, 59 rotates clockwise and the left 17 and right 18 collars are caused to simultaneously move apart along their respective sections of the threaded barrel member an equal distance in the longitudinal direction away from the threaded barrel member 58, 59. Examples wherein the pitch of thread of the collars 17, 18 vary along the length of each collar 17, 18 or wherein the pitch of the thread of one collar 17, 18 differs from that of the other are also envisaged. Furthermore, examples wherein the collars 17, 18 comprise a female thread and the inner threaded barrel member 58, 59 comprises a male thread are envisaged.

In a similar way, anticlockwise rotation of the crank arm 14 causes the left 17 and right 18 collars to move simultaneously closer together.

Two diametrically opposed keyways 89 are provided on the outer cylindrical surface of both of the collars 17, 18 and extend along their entire length. One end of each of the tubular collars 17, 18 is affixed to the rear chassis member 3 on their respective side of the device 100. Thus, the left collar 17 is affixed to the left rear chassis member 3 and the right collar 18 is affixed to the right chassis member 3 such that longitudinal movement of the collars 17, 18 causes the rear chassis members 3 to also move in the same direction. Two opposing protrusions 90 on each rear chassis member 3 serve as keys and engage the diametrically opposed keyways 89 of their respective collar 17, 18, thereby rotationally locking the first 17 and second 18 collars to the inner threaded barrel member 58, 59. Thus, movement of the first 17 and second 18 collars causes corresponding movement of their associated rear chassis member 3.

A substantially tubular cylindrical outer barrel member 1, or outer sleeve, is arranged over and substantially covers the inner threaded barrel member 58, 59 and is substantially coaxial with the longitudinal axis of the inner threaded barrel member 58, 59. The inside cylindrical surface of the outer barrel member 1 comprises two diametrically opposed keyways for receiving a key 63, the keyways extending along the entire length of the outer barrel member 1. Two keys 63 in each diametrically opposed keyway of the first 17 and second 18 collars rotationally lock the outer barrel member 1 to the first 17 and second 18 collars by engaging with the keyways of the outer barrel member 1 and of the first 17 and second 18 collars. Thus, the outer barrel member 1 is rotationally locked to the first 17 and second 18 collars, and thereby to the rear chassis members 3, but the first 17 and second 18 collars are able to slide longitudinally within the outer barrel member 1, as indicated by arrow P.

Left and right swivel brackets 50 are shown mounted to the outer barrel member 1 equally spaced from the centre of the outer barrel member 1. The swivel brackets 50 are freely rotatable around the circumference of the outer barrel member 1, as denoted by arrow S, but, because the swivel brackets 50 engage a swivel bracket circumferential groove in the outer barrel member 1, their position along the outer barrel member 1 is substantially fixed or restricted. For clarity, the front chassis member 2 to which the swivel brackets 50 are mounted by swivel bracket fixings 81 is not shown.

A rotation limiter 12 comprising a substantially conical rubber stop 11 with a rounded tip or nose is provided on one side of the outer barrel member 1 and substantially at its centre. The rotation limiter 12 is configured and positioned such that when the front chassis member 2 is fully rotated, the underside of the front chassis member 2 engages with the rubber stop 11 and further rotation of the front chassis member 2 about the cross-member 83 is substantially prevented.

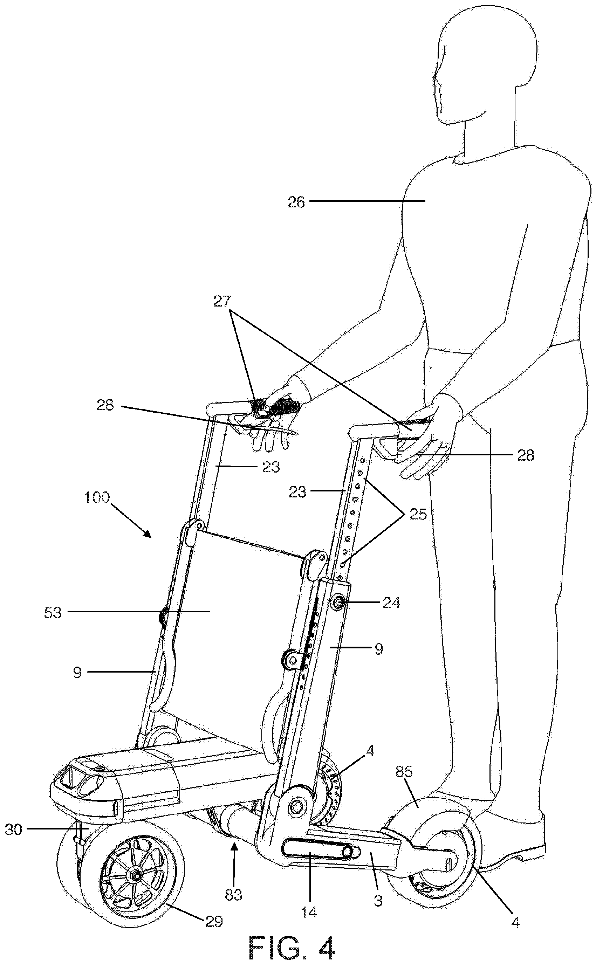

The manually-powered standing support walker configuration of the wheeled personal mobility device 100 is shown in Fig. 4. This configuration is so-named because the user 26 operates the device 100 in a standing position and uses the device 100 as a walking support wherein the user 26 is able to control the speed of the device 100 by operating the speed or power controls 35 and brake actuators 28, incorporating braking and parking modes, provided on the handles 27. The brake actuators 28 comprise manual brake levers.

In the manually-powered standing support walker configuration, the front chassis member 2 is fully rotated about the central cross-member 83 such that it is substantially horizontal and such that the twin front wheels 29 engage the ground, the upper chassis members 9 are raised from their collapsed position by depressing lock 10 and the support arms 23 are extended from their respective upper chassis members 9 by depressing locking button 24 and locked at the desired height by releasing locking button 24 such that a spring loaded release and locking pin engages one of a plurality of incremental apertures 25 provided along the length of the support arms 23, thereby enabling the support arms 23 to be extended to various extents. The crank handle 14 and rear 45 and front 33 footrests are shown stowed away. The front chassis member 2 is in its non-extended or retracted position.

A folded rotatable seat 53 is shown with one side of the seat 53, in particular a seat side support member 22, being rotatably attached to one upper chassis member 9 while the other side of the seat 53, in particular seat side support member 22 on the opposite side of the seat 53, is rotatably attached to the other upper chassis member 9. The seat 53 comprises a seat base 91 and a seat back 92 which are similar in appearance and construction, both comprising a tubular rail or side seat support member 22 on opposing sides thereof, with a sheet of material extending between the opposing tubular rails which serves as a back rest or a seat base, depending on the rotation of the rotatable seat 53 and whether it is facing towards the front or rear of the device 100. The seat base 91 and seat back 92 are rotatably coupled together and hingedly attached by seat hinges 21 attached to the seat side support member 22 at one end of the seat base 91 and to the seat side support member 19 at one end of the seat back 92 by hinges 21 provided at the ends of each tubular rail (seat side support members 19, 22) such that the seat base 91 and seat 92 back may be folded together and collapsed.

The seat 53 is rotatably attached to its respective upper chassis member 9 by a swivelling locking nut 20 provided on opposite seat side support members 19, 22 of the seat 53. The seat attachment means 20 is adjustably connected to the upper chassis members 9 by a seat height adjustor 47 such that the seat attachment means 20 may be adjusted at various positions along the length of the elongate upper chassis members 9 and locked into place by a locking means, operated by a push button, such that the height of the seat with respect to the ground or with respect to front chassis footrests 33 may be adjusted.

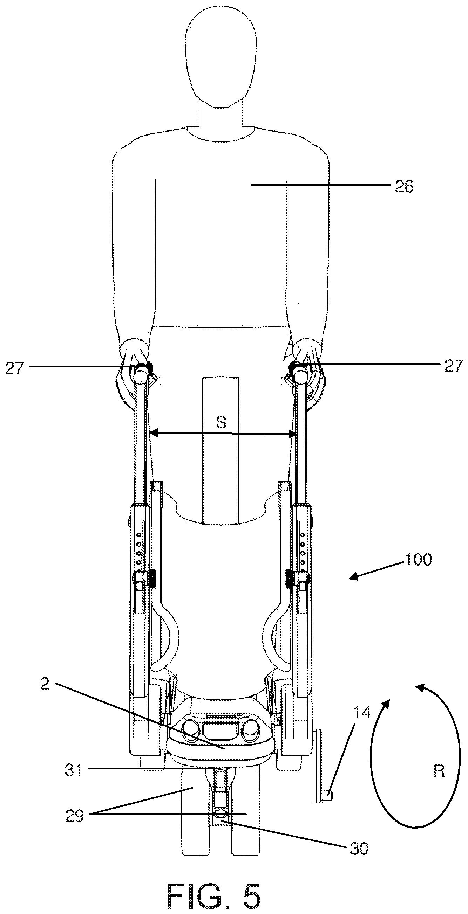

Fig. 5 shows the wheeled personal mobility device 100 in the same manual support walker configuration as shown in Fig. 4, but wherein the width of the device 100 has been narrowed, as denoted by arrow S, by means reducing the distance between the rear chassis members 3 by way of the width adjustor 88 provided within the cross-member 83, operated by rotation of the crank arm 14. The material of the seat 53 is shown as being partially slack as the width of the seat 53 has also been narrowed due to the narrowing of the distance between the upper chassis members 9 resulting from the reduction of the distance between the rear chassis members 3. The device 100 in Fig. 5 has been narrowed to its fullest extent and is therefore at its narrowest configuration. A user 26 is shown standing behind the device 100 and holding ergonomic handles 27, attached to the top of the upper support arms 23, wherein the device 100 is supporting a proportion of the bodyweight of the user 26. Twin front wheels 29 of the front wheel assembly 30, attached to the front chassis member 2, are attached in parallel to each side of the central front wheel assembly and mounting assembly 30, which is in turn attached to the front chassis member 2 by a 360 degree bearing 31, allowing the front wheel assembly 30 to freely swivel through 360 degrees, enabling the known castor effect and allowing rolling movement of the device 100 in any direction the user 26 requires.

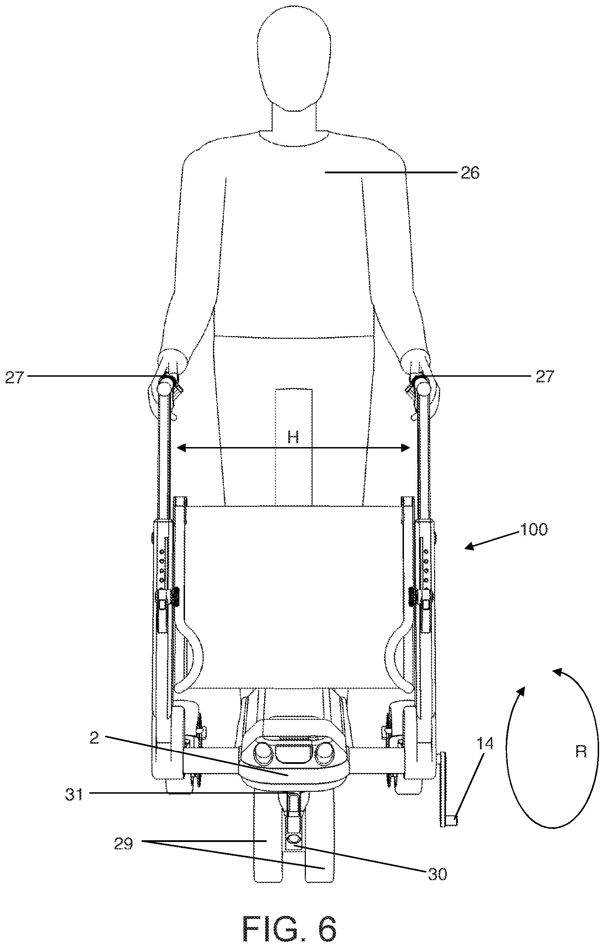

Fig. 6 shows the device 100 wherein the width adjustor 88 has been adjusted, by rotation of the crank arm 14 indicated by arrow R, to its widest position such that the device 100 is in its widest configuration, as indicated by arrow H. The material of the seat 53 is shown as being taut as it is pulled taut by the widening of the distance between the upper chassis members 9. A user 26 is shown standing behind the device 100, holding the handles 27 and supporting some of their own body weight while using the device 100 for support while walking.

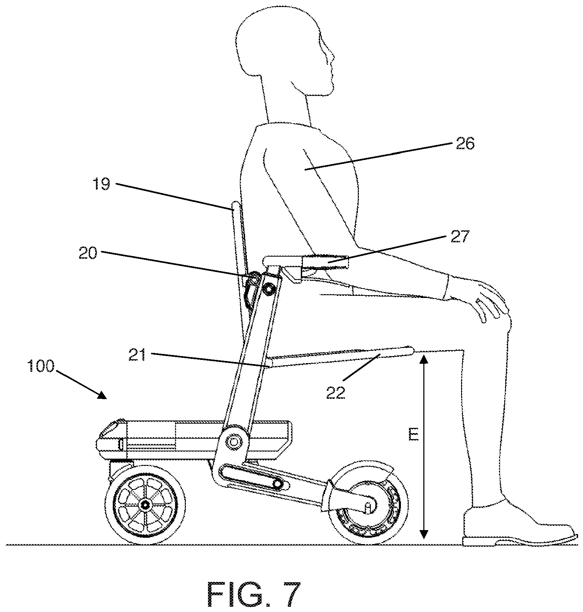

In Fig. 7, the device 100 is configured in the manually-powered seated walker mode in which the device acts as a support for a user 26 while seated who may propel themselves either forwards or backwards (relative to the direction the user 26 is facing) by moving their feet.

In the manually-powered seated walker mode or configuration, the front chassis member 2 is fully rotated such that it engages the rotation limiter 12 and is substantially parallel with the floor. The front chassis member 2 is in its shortest configuration in which the front chassis member 2 has not been extended by means of the front chassis member extender 86. In this side view, it can be seen that the rear chassis members 3 and the front chassis member 2 are at an acute angle to each other when the front chassis member 2 is fully rotated, such that the rear chassis members 3 are inclined with respect to the ground, thereby providing additional clearance between the rear of the front chassis member 2 and the floor. The upper chassis arms 9 are raised and the upper support arms 23 are fully collapsed or retracted within their respective upper chassis arms 9. The front 33 and rear footrests 45 are folded away against the front chassis member 2 and rear chassis members 3 respectively and the crank arm 14 is recessed into its rear chassis member 3.

In the manually-powered seated walker mode, the rotatable and detachably attachable seat assembly 53 is attached to the upper chassis members 9 by means of the rotatable seat attachment means 20 and rotated to face the rear of the device 100. The seat 53 has been adjusted to the desired height by the seat height adjustors 47 provided on each upper chassis member 9.

Swivelling locking nut 20 is loosened to allow hinged side seat support member 19 to tilt on seat hinges 21 and then locked in place in a comfortable position for the user 26. Hinged side supports 22 are folded down toward the rear of the device 100. The seat attachment means 20 is provided part-way along two opposing side seat support members 19 such that the distance between the bottom of the seat 53, i.e. the seat base 91, and the floor, indicated by arrow E, is the substantially the same as the distance between the bottom of the seat 53, i.e. the seat base 91, and the foldout front footrests 33 when the front footrests 33 are deployed and the seat 53 is rotated to face the front of the device 100. In this way, having rotated the seat 53 to face towards the rear of the device 100, the user 26 can simply turn around and sit down, facing rearward. The position of the swivelling locking nut 20 part-way along the side seat support members 19 enables the seat 53 to be rotatable to a given position whereby the distance between the seat base 91 and the ground is substantially the same as the distance between the seat base 91 and the front footplates 33 in the powered personal seated vehicle mode. Thus, the configuration of the rotatable seat 53 and attachment means 20 ensures that the user's preferred chosen ergonomic seated foot and posterior relationship is maintained (i.e. the user's upper leg to lower leg angle is maintained).

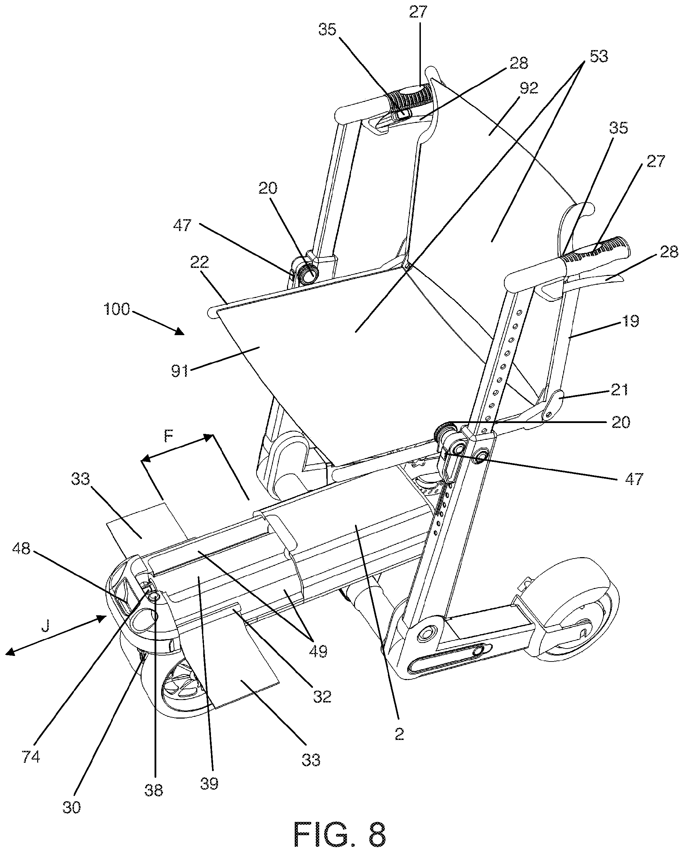

Turning now to Fig. 8, the device 100 is shown in this figure as being configured in the manually-powered pushed wheelchair mode or configuration. This configuration replicates the function of a conventional manually pushed wheelchair, enabling an assistant 34 to push along a user 26 sitting in the device 100.

In this configuration, the upper chassis members 9 are raised and the upper support arms 23 are extended such that the handles 27 at the upper end thereof are at a comfortable height for the assistant 27 when standing behind the device 100. The seat 53 is attached and rotated to a forward-facing position such that the seat 53 faces the front wheel assembly 30. The angle, or pitch, of the seat assembly 53 is adjusted by swivelling locknut 20 and the height of the seat assembly 53 is adjusted by adjusting locking pins of the seat height adjuster 47. The rear footrests 45 are folded away via rear footrest hinges rotatably connected to opposite sides of the front chassis member 2. The front chassis member 2 is fully rotated and engages the rubber stop 11 of the rotation limiter 12 on the outer barrel member 1. The front chassis member 2 is extended in the direction marked by arrow J, via a release catch 75 of the front chassis extender 86, to a first position such that the front chassis member 2 is in an extended configuration and extended in length by distance F, thereby increasing the overall wheelbase of the device 100. The front footrests 33 are folded out of their recession in the front chassis member 2.

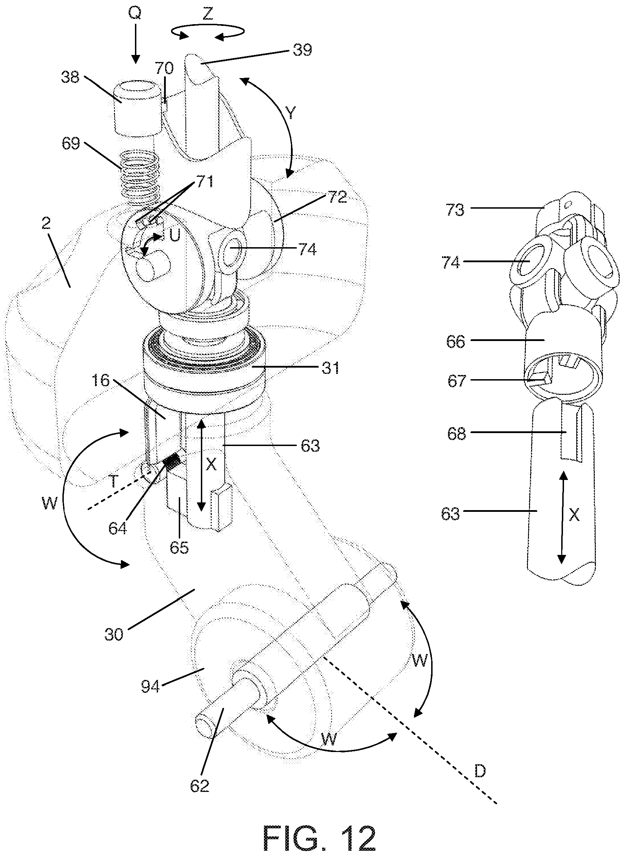

As can be seen, when extended, the front chassis member 2 provides access to a front chassis internal compartment 87 wherein a foldaway steering tiller 93, rotatably coupled to the front wheel assembly 30, is stowed. The steering tiller 36 is connected to a central universal joint 72 at its lower end, the universal joint 72 being connected via a steering attachment sleeve 63 to the front wheel assembly 30, as shown in further detail in Fig. 12. At the front of the front wheel assembly 30, a steering tiller lock button 38 is provided for actuating a steering tiller locking means to enable the angle of the angularly adjustable foldout steering tiller 36 to be adjusted according to a user's preference.

The appearance and configuration of the manually-powered pushed wheelchair mode is substantially the same as that of the power-assisted pushed wheelchair mode. A difference between the two modes is that in the manually-powered pushed wheelchair mode, the assistant provides all of the motive power in propelling the device 100, whereas in the power-assisted pushed wheelchair mode, the assistance 34 may operate chair assistant power buttons 35, configured to control the in-hub motors 6 of the rear wheel assemblies 13, and located within a forward inside section of each ergonomic handle 27 in order to provide assistive power to the rear wheels 4 to assist in both propelling the device 100 and also in manoeuvring it.

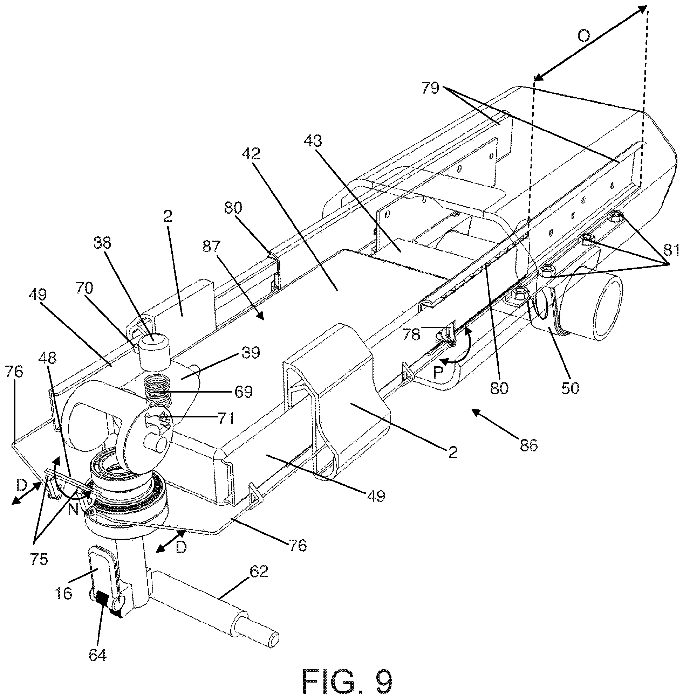

The front chassis member extender 86 is shown in further detail in Fig. 9 where a perspective cut-away and partially exploded view of the extender 86 and steering mechanism 39 is presented.

The front chassis member 2 is shown in an extended position and the outer barrel member 1 and front chassis mounts in the form of swivel brackets 50 are shown attached to a rearward end of the front chassis member 2 via swivel mount fixing means, or front chassis mount fixing means, 81.

In order to extend the front chassis member, a release catch 75 is rotated about a release catch hinge, as indicated by arrow line N. This rotation causes twin release rods 76 to move, as indicated by arrow line D, which in turn withdraws locking pins 78 from matching pin receiving apertures located in the side of two sets of opposing front chassis runners 49 and rear chassis runners 79. With the locking pins 78 withdrawn, the front cassis runners 49 are able to slide on roller bearings 80 and thereby extend the front chassis member as indicated by arrow line O.

When a user 26 releases the release catch 75, the sprung extension pins 78 spring back into place and relocate through the locking pin apertures in both front chassis runners 49 and rear chassis runners 79 and thereby lock the front 49 and rear 79 chassis runners together to prevent further extension or retraction of the front chassis member 2. In order to retract the front chassis member 2, a user 26 depresses the release catch 75 and the front 49 and rear 79 chassis runners become unlocked, and the user 26 pushes on the front of the front chassis member 2 and thereby causes the front chassis runner 49 to slide within the rear chassis runner 79 until the desired extension of the front chassis member 2 is achieved. At this point, the user 26 releases the release catch 75 and the extension pins 78 spring back and relocate through their apertures in the front 49 and rear 79 chassis runners. The front chassis member 2 is thereby locked at the desired extension.

Between the spaced apart front chassis runners 49, there is provided an internal front chassis member compartment 87 in which a battery 42, printed circuit board 43 for controlling the motors of the rear wheels and steering tiller 36 is stowed. The steering tiller 36 is shown for clarity as being cut down and so is only partially shown. When the front chassis member 2 is fully retracted, the inner compartment 87 of the front chassis member 2 is entirely concealed and inaccessible within the outer body of the front chassis member 2.

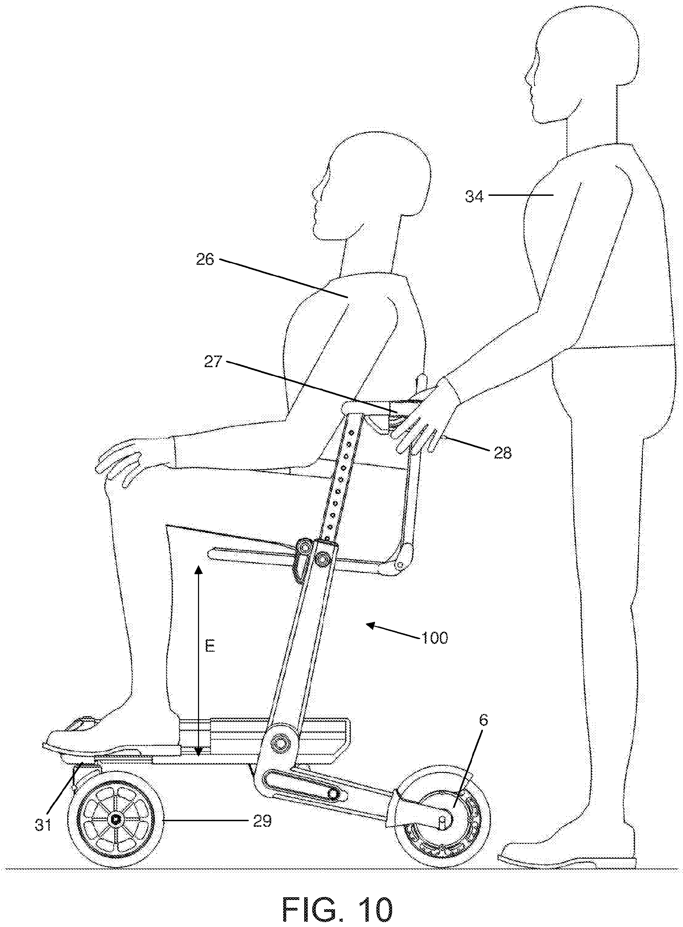

With reference now to Fig. 10, the wheeled personal mobility device 100 is shown arranged in the power-assisted pushed wheelchair configuration with a user 26 seated in the seat 53 and with their feet placed on the front footrests 33. An assistant 34 is shown operating the device 100 from behind the seat 53, with the hands of the assistant 34 holding the handles 27 and ready to operate the manual brake levers 28.

In the power-assisted powered wheelchair mode, the twin rear wheel integral motors 6 are controlled by the assistant 34. In this mode, the assistant 34 presses the power control buttons 35, located adjacent to the handles 27, to supply power to each of the rear wheels 4. In the example shown, each power control button controls the power to each rear wheel 4 separately and independently, although examples wherein each power control button 35 controls both rear wheels 4, and/or the front wheels 29 are also envisaged. Thus, in one example, the power control button 35 on the right hand handle 27 may only control the right hand rear wheel motor 6 and the power control button 35 on the left hand handle 27 may only control the left hand rear wheel motor 6. In this way, the assistant may easily manoeuvre the device 100 by "wheel steering" such that the direction and turning of the device 100 may be varied by pressing one, other or both of the power control buttons 35. in a variety of combinations as required. The twin castor wheels 29 of the front wheel assembly 30 are configured to swivel or rotate to a desired position via a 360 degree bearing 31 according to the direction the device 100 is moving, or being turning, via rear wheel motors 6. Power to the rear wheels 4 is provided by the battery 42 stowed within the internal compartment 87 of the front chassis member 2. A regenerative braking system may also be provided for recovering some of the kinetic energy of the device which would otherwise be lost during braking and converting the kinetic energy of the device into electrical potential energy in the battery. Thus, a regenerative braking system enables the battery to be charged when braking the device.

The power assistance of the device in this mode 100 provides assistive power to the assistant 34 in propelling the device 100 and the user 26 and is particularly useful in order to overcome increased gradients or alleviate the overall exertion of the assistant 34. Manual braking actuating means comprising manual brake levers 28, attached to both of the upper support arm handles 27, enable the rear wheels 4 to be individually braked by actuation of the brake callipers 52 mounted to the rear chassis members 3 which engage the brake discs 77 of the rear wheel assemblies 13. When the manual braking means is not actuated, i.e. when it is released, the twin front wheels 29 and the rear wheels 4 freewheel.

As indicated by arrow E, and with comparison to Fig. 7, because of the position of the swivelling locking nut 20 of the seat attachment means part-way along the length of seat side support members 19 on opposite sides of the seat 53, when the seat 53 is swivelled to face the rear of the device (that is to face to rear wheels) the distance between the seat base 19 and the front footrests 33 is substantially the same as the distance between the seat base 22 and the floor (i.e. the bottom of the rear wheels). The device 100 is shown in Fig. 10 as being positioned as to be able to be propelled forwards and the castor twin front wheels 29 have swivelled accordingly towards the rear of the device by 360 degree bearing 31.

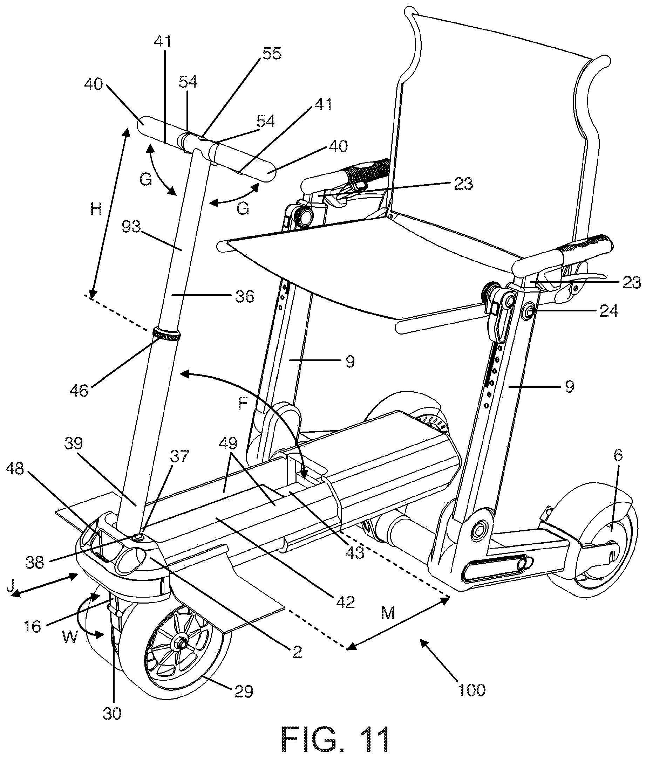

Fig. 11 shows the wheeled personal mobility device 100 arranged in the power-assisted personal seated vehicle mode intended to replicate a function of a mobility scooter or other such similar self-propelled mobility device.

In this configuration, the upper chassis arms 9 are raised by depressing locking pin 10, the upper support arms 23 are fully retracted within their respective upper chassis arms 9 by depressing spring loaded release and locking pins 24, located on the outer frame of each upper chassis member 9 and engaging with incremental apertures in upper support arms 23, allowing the upper support arms 23 to slide into their corresponding upper chassis members 9 to a chosen height for use as an armrest. The rear footrests 45 are folded away against their respective rear chassis members 3. The seat 53 is attached and is unfolded, and the seat 53 is adjusted by the seat height adjuster 47 to the required height. The front chassis member 2 is extended via front chassis extender 87 and by manual pulling out of the front portion of the front chassis member 2, i.e. in the direction indicated by arrow J. The front footrests 33 are folded out of each side (i.e. the left and the right side) of the front chassis member 2 and are deployed for use.

To engage the front steering mechanism (see Fig. 12 for further detail), first the twin castor wheels 29 are manually pivoted into a straight-ahead position and the user rotates downwardly, as indicated by arrow W, the hinged steering engagement lever 16, located on the front face of the front wheel assembly 30. The downwards rotation of the hinged steering engagement lever 16 causes the front wheel assembly 30 to be rotationally coupled to the steering tiller 36 by steering engagement means 64, as shown in more detail in Fig. 12.

The steering tiller release button 38 is then depressed to unlock the steering tiller 36. This enables the angular position of the steering tiller 36 to be adjusted and therefore to enable the steering tiller 36 to be lowered and raised in angled according to the preference of the user 26 and, when stowed away, to enable the steering tiller 36 to be pulled up out of the internal compartment 87 of the front chassis member 2 by rotation of the universal joint 74 at the base of the steering tiller member 39. Once the desired angle of the steering tiller 36 has been reached, the steering tiller release button 38 is released and the steering tiller 36 is locked into position by means of a pivot lock pin 70 configured to engage one of a plurality of circumferentially spaced pivot lock recesses 71, as shown in Fig. 12.

Once the steering tiller 36 is locked at the desired angle, a cylindrical upper steering tiller member 93 is slid out from the end of the tubular steering tiller 36 and locked at the desired height by rotation of a rotatable height lock grip 46. The steering tiller 36 may therefore be said to be telescopic as the upper steering tiller member 93 telescopes out from the lower steering tiller member 39.

At one end of the upper steering tiller member 93, there are provided foldout steering handles 40 for steering the front wheel assembly 30 and for thereby manoeuvring the device 100. The handles 40 are rotatably coupled to the upper steering tiller member 93 by hinges 54. The steering handles 40, when collapsed, lie substantially against or alongside the upper steering tiller member 93. Upon depressing a tiller handle release button 55, the tiller handles may be folded out from alongside the upper steering tiller member to a folded out or deployed position in which the steering tiller handles point outwardly, towards the sides of the device, such that they are substantially perpendicular to the longitudinal axis of the upper steering tiller member 93. The tiller handle release locking means is configured to enable the tiller handles 40 to be locked alongside the upper steering tiller member 93 or in the folded out position of the handles 40. Upon depressing the tiller handle release button 55, the tiller handles 40 may be rotated outwardly, as indicated by arrow G, and then locked in to position by releasing the tiller handle release button 55.

Speed control, or power control, levers 41 are provided on the steering tiller 36 within easy reach of the foldaway handles 40, the levers 41 providing drive and braking to the required independent rear wheels 4 via integral motors 6 and via an electronic differential system. The degree of function of the electronic differential system is dependent on the relative rotational input on the steering tiller 36 and on the ground speed of the device 100 under power, which are communicated to the printed circuit board and controller 43. An intelligent steer pick up 44, also called a steer angle sensor, located at the base 37 of the tiller member 36, is configured to determine the steer angle of the tiller 36 or front wheels 29. Examples wherein the steer angle pickup 44 is positioned on any other suitable location or component, such as on or alongside the steering tiller 36, are also envisaged.

When engaged with the steering assembly and the front wheel assembly 30, the steering tiller 36 provides means to manually steer the device 100 via rotational input of the tiller 36, causing the twin front wheels 29 to rotate or swivel by rotation of the front wheel assembly 30. An electronic differential system also provides power individually to each of the rear wheels 4 in accordance with steering input from the steering tiller 36 to further assist in manoeuvring the device 100.

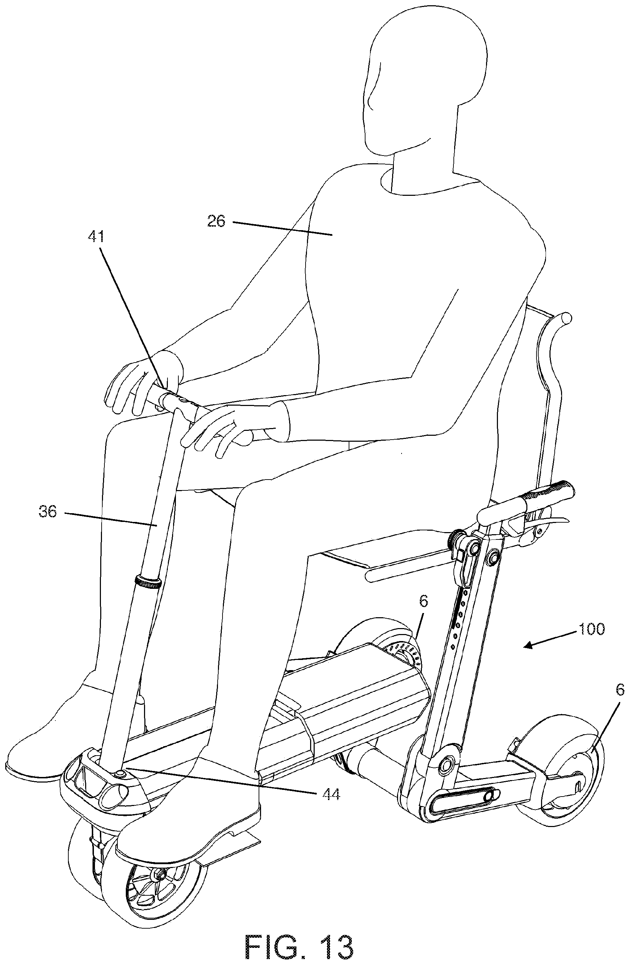

A user 26 seated on the wheeled personal mobility device 100 in the power-assisted personal seated vehicle configuration and operating the power controls 41 on the steering tiller 36 is shown in Fig. 13

The steering engagement mechanism and pivotable steering tiller locking mechanism 38 is shown in perspective view in FIG. 12 in which the front chassis member 2 and the front wheel assembly 30, with front wheels 29 removed for clarity, are shown partially cutaway and in ghosted lines.

The front wheel assembly 30, also referred to as the centre or central wheel assembly, comprises a substantially cylindrical front wheel hub 94 (or centre or central wheel hub) at one end with a substantially cylindrical axle bore extending horizontally therethrough which is configured to receive, and receives, twin front wheel axle 62 to which the front wheels 29 may be rotationally coupled to the front wheel hub 94 such that one of the twin front wheels 29 is mounted to one side of the front wheel hub 94 and the other twin front wheel 29 is mounted to the other side of the front wheel hub 94. The front wheel axle 62 is substantially cylindrical comprising a central portion of increased diameter compared to its two ends to which the front wheels are mounted. The front wheels 29 are configured to caster by the provision of an angled portion of the front wheel assembly 30 which sets back or offsets the axle 62 of the front wheels 29 from the substantially vertical steering axis. This arrangement provides the castering effect of the twin front wheels 29.

The front wheel assembly 30 comprises a steering engagement means 16 which is engaged and disengaged in order to engage and disengage the rotatable coupling 72 of the front wheel assembly 30 and the steering tiller 36 and thereby enables and disables the capability of the front wheels 29 to be steered by the steering tiller 36. The steering engagement means 16 comprises a steering engagement lever 16 hingedly connected to the front wheel assembly 30 and rotatable, as indicated by arrow W, about an axis of rotation which is substantially horizontal and therefore substantially in-plane with the longitudinal axis of the front wheel axle 62, as indicated by fixed hinge line T. In the example shown, the steering engagement lever 16 is hingedly connected to the front wheel assembly 30 by a hinge. The steering engagement lever 16 comprises a horizontal rotatable barrel 64 comprising a plurality of longitudinal grooves around a central circumference of the barrel 64. The steering engagement tab or lever 16 is connected to the outer circumferential surface of the barrel 64 of the steering engagement lever 16 such that rotation of the tab member 16 causes rotation of the barrel member 64 about a substantially horizontal axis.

The plurality of longitudinal grooves of the steering engagement barrel 16 engage a rack, not shown, on the flat surface of the substantially cuboidal steering engagement block 65, the rack comprising a plurality of complimentary grooves which are configured to receive and engage the longitudinal grooves of the steering engagement barrel 64. One end of the steering engagement block 65 comprises a substantially vertical (i.e. extending perpendicular to the steering plane of rotation of the front wheel assembly, or, in other words, extending towards the front chassis member) steering pin 63 which engages and disengages with a lower tubular universal joint collar 66 when the steering pin 63 is moved upwards and downwards respectively.

As can be seen in the adjacent drawing on the right of Fig. 12, the steering pin 63 comprises two longitudinal, circumferentially spaced female slots or keyways 68 in the cylindrical external surface of the steering pin. Only one of the keyways 68 can be seen in Fig. 12 as the other is on the opposite, hidden side of the steering pin. The female slots 68 are configured to receive two male splines 67, or two male protrusions or keys, which extend from the lowest end of the tubular universal joint collar 66 longitudinally along the inner cylindrical surface of the lower tubular universal joint collar 66. The universal joint 67 comprises an upper collar 73 to which the steering tiller 36 is connected via lower tiller 39.

It can therefore be seen that rotation of the steering engagement tab 16 about its hinged connection to the front wheel assembly 30 causes the steering engagement barrel 64 to rotate, thereby causing the grooves of the barrel 64 to engage with the rack of the block 65 and causing the block 65 and steering pin 63 to move substantially vertically upwards, that is towards the front chassis member, such that the steering pin 63 engages with the lower collar 66 of the universal joint 74. Consequently, when the tab 64 is rotated downwards, the steering pin 63 is moved vertically upwards, and *vice versa.* As will be appreciated, because the radial angle between the male keys 67 of the universal joint collar 74 is the same as the angle between the female keyways 68 of the steering pin 63, the steering pin 63 is only able to move upwards and engage with the lower collar 66 of the universal joint 74 when the keys 67 and the keyways 68 are rotationally aligned. The steering pin 63 and the universal joint lower collar 74 are configured such that the keys 67 and keyways 68 thereof are only rotationally aligned when the front wheel assembly 30 is rotated such that the front wheels 29 are facing forwards, i.e. the angled portion of the front wheel assembly 30 is pointed downwards and towards the rear of the device 100 such that the front wheel axle 62 is substantially behind the steering pin 63 and substantially perpendicular to the central longitudinal axis of the device 100, as indicated by line D. The steering pin 63 and the universal joint lower collar 74 will not engage each other unless the front wheel assembly 30 has been rotated to this position. The steering tiller 36 must also be folded down and stowed away within the internal compartment 87 of the front chassis member 2 in order for the keys 67 and the keyways 68 to be aligned when the front wheel assembly 30 is facing forwards.

A cylindrical 360 degree bearing 31, such as a rolling element ball bearing, located around the 63 steering pin and substantially coaxial to it, rotatably couples the front wheel assembly 30 to the front chassis member 2 and enables the front wheel assembly 30 to rotate or swivel a complete 360 degrees fully around so as to be able to face any direction of movement of the device 100. Furthermore, the bearing arrangement 31 enables the front wheel assembly 30 to complete an unlimited number of rotations (e.g. 720 degrees, 1080 degrees, etc.) without the front wheel assembly 30 or some other component becoming restricted or limited.

The steering tiller locking mechanism 38, or otherwise referred to as the steering tiller pivot angle selector, for adjustably raising or lowering the pivotable steering tiller 36 about the universal joint 72 is also shown in Fig. 12. The steering tiller locking mechanism 38 comprises a plurality of radial slots or recesses 71 in the universal joint outer housing 72 and a sprung tiller pivot lock button 38 and tiller pivot lock button spring 69 configured to return the tiller pivot lock button 38 when the button 38 is depressed. The tiller pivot lock button 38 comprises a locking pin 70 which is configured to selectively engage the pivot lock recesses 71 in the outer housing 72 of the universal joint 74, thereby enabling the steering tiller 36 to be adjustably raised to a number of positions corresponding with the spacing and location of the pivot lock recesses 71 in the outer housing 72 of the universal joint 74.

In order for the steering tiller 36 to be raised from the folded position in which it is stowed away within the front chassis member 2, the user 26 depresses the tiller pivot lock button 38 which causes the spring 69 to compress and for the locking pin 70 of the tiller pivot lock button 38 to move out of its pivot lock recess 71, into a central channel connecting all of the pivot lock recesses 71, at which point the steering tiller 36 may be raised to the desired position where the user 26 then releases the tiller pivot lock button 38 and the spring 69 pushes the locking pin 70 outwards such that it engages one of the pivot lock recesses 71. Thus, when the tiller pivot lock button 38 is depressed, the universal joint outer housing 72 is able to rotate a certain amount, and thereby raise steering tiller 36 a certain amount, as shown by arrow line U, within the rotational scope or limit offered by the locking pin 70 within the pivot lock recesses 71.

The wheeled personal mobility device 100 arranged in the power-assisted freestyle leisure configuration is shown in Fig. 14 in which the seat assembly 53 is removed by unlocking a pair of swivel locking nuts 20 on each side of the seat 53 and attached to seat side support members 19 and to upper chassis arms 9. Upper chassis members 9 are pivoted down, as indicated by arrow line L, by depressing pivot point release pins 10, such that each upper chassis member 9 rests just above its corresponding rear chassis member 3. The upper support arms 23 are fully retracted within their associated upper chassis members 9 and the rear footrests 45 are folded out from their corresponding rear chassis members 3.

The front chassis member 2 is fully rotated around the central cross-member 83 via the swivel brackets 50 such that the underside surface of the front chassis member 2 engages and abuts against the rubber cushion stop 11 of the rotation limiter 12 mounted to the outer barrel 1 of the cross-member 83. Additionally, the front chassis member 2 has been extended by means of front chassis member extender 86 to an extended position. The lower steering tiller member 39 has been raised from the internal compartment 87 of the front chassis member 2 to an adjusted position according to the preference of the user 26 by depressing the steering tiller pivot lock button 38 to enable the steering tiller 36 to be lifted and rotated out of the internal compartment 87 of the front chassis member 2. The upper steering tiller member 93 has been telescopingly extended from the lower tiller member 39 and locked at a particular extension or height by way of rotation of the tiller height adjuster comprising height lock grip 46. The steering tiller handles 40 have been unlocked by the depressing grip or handle release button 55 and rotated outwardly from alongside the upper steering tiller member 93 and the power control levers 41 are shown mounted to the upper steering tiller member 93, ready for use.

In this configuration, the rider 26 stands on the rear footplates 45 while steering and controlling power and braking with the tiller power controls 41 provided on the handles 40 of the steering tiller 36. Although in this example one of the levers 41 controls the power to both of the rear wheels 4 and the other lever 41 is a manual brake actuator for actuator the rear braking means 51, examples wherein the one of the rear wheel motors 6 is powered by one of the power control levers 41 and the other rear wheel motor 6 is powered by the other power control lever 41 are also envisaged.

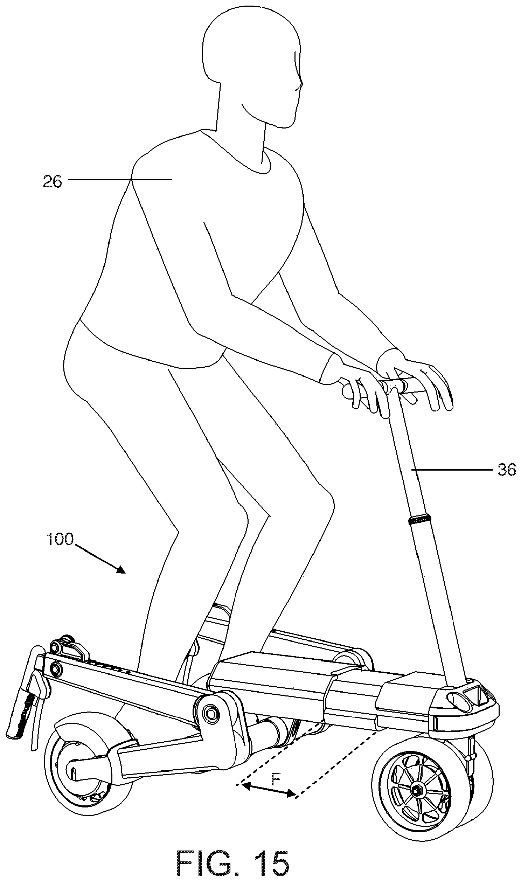

Fig. 15 is a perspective view of a rider 26 standing on the device 100 configured in the power-assisted free style leisure mode. The rider 26 stands on the device 100 with each of their feet on each of the rear footplates 45 while holding onto the steering tiller 36 to control the powered progress of the device 100, while steering and braking by input on the steering tiller power controls 41 provided on the steering tiller 36. This configuration most closely resembles a powered version of a three wheeled push-scooter or kick-scooter. The function of the device 100 in this configuration is of particular interest in changing the perception of the current category of the device from that of a product only for people with mobility difficulties as it offers a leisure and fun activity for use by all ages and genders.

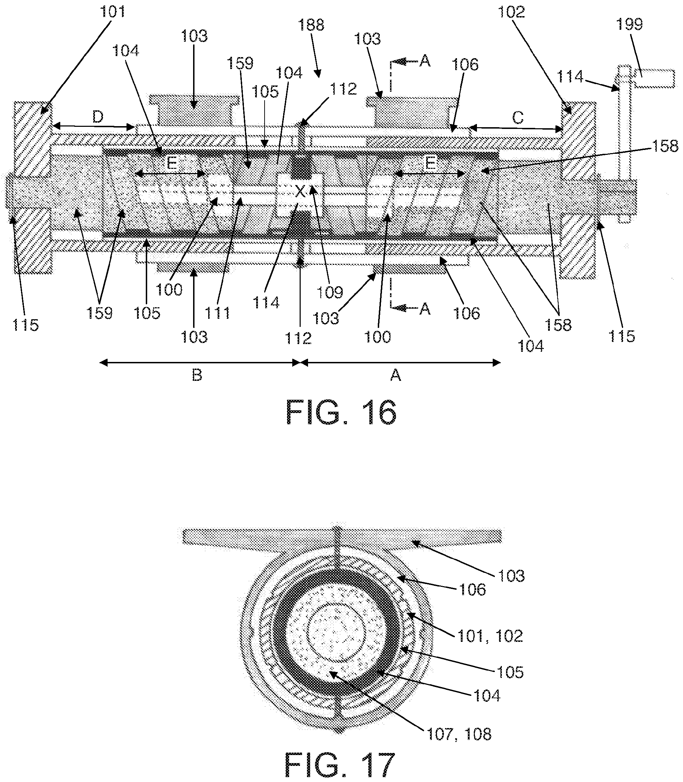

An alternative width adjustor to that shown in Fig. 3 is shown in Fig. 16. The width adjustor of Fig. 16 can be used in substitution to that of Fig. 3 without significant modification to the mobility device of Fig. 1. Either width adjustor may be used for adjusting the width of many devices and are not limited to a personal mobility aid in general, or to a vehicle in general.

The width adjustor mechanism of Fig. 3 and the alternative width adjustor mechanism 188 of Fig. 16 may both be referred to as a winding mechanism as they enable the two sides of the mobility device, i.e. the left-hand side and the right-hand side (each of those sides comprising an upper chassis arm 9 and a corresponding rear chassis member 3) to be brought substantially or generally towards or away from each other through winding (i.e. rotation) of hand crank 14.

The alternative width adjustor mechanism 188 of Fig. 16 enables simple width adjustment of the chassis, and of the mobility device generally, by simultaneously extending (or spacing) the left and right rear chassis members 3 with respect to the main central body of the device, i.e. the front chassis member 2, and therefore also with respect to the mid-line, or centre, of the threaded barrel 158, 159, such that the left and right rear chassis members 3 remain generally or substantially equidistant from the longitudinal centreline of the device, and thereby also from the longitudinal centreline of the front chassis member 2.

Both the first 88 and alternative 188 width adjustor mechanisms are actuated by rotation of a hand crank 14; 199 provided one on side of the mobility device 100. In the example of Fig. 1, the hand crank 14 is provided on the left hand side of the device, specifically on the left hand rear chassis member 3 into which it is recessed, although the hand crank 14 may be provided on either side and, as such, may additionally or alternatively be provided on the right hand side of the device, for example it may be provided on the right hand rear chassis member 3 and it may optionally also be recessed into the right hand rear chassis member 3. The same is true of the alternative width adjustor 188. Crank arm 199 comprises a crank handle provided at a distal end thereof.

In a similar way to the width adjustor mechanism of Fig. 3, the crank arm 199, comprising a crank handle 101, is rotationally coupled with an inner threaded barrel member 158, 159. The inner threaded barrel member 158 is so called because it comprises an internal threaded barrel which comprises two generally equally long lengths or sections 158, 159, each comprising a male helical screw thread and each therefore respectively referred to as the left-hand side screw member 158 and the right-hand side screw member 159. The helical thread of the screw member 158 arranged towards the left hand side of the width adjustor 188 is a left-handed male thread, whereas the helical thread of the screw member 159 arranged towards the right hand side of the width adjustor is a right-handed male thread. The handedness of the threads of the two screws 158, 159 are therefore opposite to each other.

The right-hand side screw 159 and the left-hand side screw 158 comprise a longitudinal recess or hole 100 extending from the end of the screw located towards the centre of the width extender 188 partially along the length of the screw members 158, 159. A rotational force transfer sleeve or plug 100 is provided within each hole 100. The hole 100 and plug 100 are complementarily splined in that one of the hole 100 or plug 100 comprises a male spline while the other comprises a female spline into which the male spline is received and with which the male spline engages. The spline of the hole 100 and plug 100 serve as a rotational locking means or a rotational force transfer means such that the plug 10 and hole 100 are rotationally locked together such that plug 100 is unable to freely rotate in hole 100 such that rotational force or torque may be applied to either the plug 100 or screw member 158, 159 and transferred therebetween.

Each plug 10 comprises a longitudinal hole or recess extending from the end of the plug closest to the mid-line of the width adjustor mechanism 188, partway or fully along their length into which and along which a rotation transfer rod 111 is located and is free to slide. The rotation transfer rod is a single rod having one of its ends received by the hole of the plug 100 of the left-hand side screw member 158 and the other end received by the hole of the plug 100 of the right-hand side screw member 159. The left-hand side screw member 158 and the right-hand side screw member 159 are therefore free to slide along their respective sides of the rotation transfer rod 111 to enable the two screw members 158, 159 to slide laterally in relation to each other in order to increase or decrease the distance between them.

The inner barrel member further comprises an inner threaded barrel outer casing 105 within which, and at opposing ends of, the two screw members 158, 159 are provided. The inner threaded barrel outer casing 105 is substantially or generally tubular and is arranged substantially or generally coaxially with the screw members 158, 159. The inner cylindrical surface of the tubular inner threaded barrel outer casing 105 comprises a female helical thread configured to engage the male thread of the both of the screw members 158, 159. As such, the female thread on the left hand side of the casing 105 is left-handed and the female thread on the right hand side of the case 105 is right-handed.

An inner transfer bearing 109 is provided mid-way along the length of the rotation transfer rod 111, thereby enabling the rotation transfer rod 111 to rotate freely within the inner threaded barrel outer casing 105. The rotation transfer rod 111 is laterally located with respect to the bearing 109 and the outer casing 105 by way of a transfer screw clamp 114 such that the centre of the rod 111 remains at the centre (i.e. mid-way along) of the outer casing 105.

The outer casing 105 is affixed to an outer tube 106 arranged outside and substantially coaxially with the screw members 158, 159 and the outer casing 105. The internal diameter of the outer tube 106 is greater than the external diameter of the ouster casing 105 such that they are generally spaced apart in that an annular space is provided between them.

The outer tube 106 is affixed to the front chassis member 2 by outer chassis clamps 103 which are spaced apart from each other and are generally spaced equidistant from the middle of the width adjustor mechanism. Examples which comprise this alternative width adjustor mechanism 188 do not have a rotatable, or pivotable, front chassis member 2.

A right-hand side collar 1 and a left-hand side collar 2 are provided at the outer ends of the right-hand side screw members 158 and left-hand side screw member 159. The collars are located or affixed to their respective collar by circlip 155.

As can be appreciated, rotation of the hand crank 114 causes left-hand screw member 158 to rotate in the same direction of rotation as of the hand crank 144. Rotation of the left-hand side screw member 158 within the outer housing 105 causes the male thread of the screw member 158 to follow and be guided within the female thread of the outer housing 105, thereby causing the screw member 158 to move laterally and, depending on the direction of rotation, causing it to either extend or retract into the outer housing 105.

As the left-hand side screw member 158 is rotationally locked to the right-hand side screw member 159, rotation of the left-hand side screw member 158 causes equal rotation of the right-hand side screw member 159. The opposite-handed helical thread of the right-hand side screw member 159 to the handedness of the thread of the left-hand side screw member 158 causes the right-hand side screw member to move in the opposite direction upon rotation. The rotation transfer rod 111 rotationally locks the two screw members 158, 159 together but enables the screw members 158, 159 to slide along the rod 111.

Therefore, the two screw members 158, 159 remain rotationally locked together irrespective of the extent to which they are extended or retracted from the outer housing 105.

Generally or substantially tubular collars 101, 102 are provided at the outer ends (i.e. those most distant from the centre of the width adjustor 188) of each screw member 158, 159. The collars 101, 102 are located with respect to, and are affixed to, the screw members by a circlip 115 provided towards the outer end of each screw member 158, 159. The collars 101, 102 are arranged coaxially with respect to the outer casing 105 and their inner and outer diameters are sized such that they may engage and slide within the annular space formed by the gap between the outer casing 105 and the outer tube 106 according to the extent of extension of the screw members 158, 159 from the outer casing 105. Thus, the collars 101, 102 serve as a shield to shield the user from the rotation of the screw members 158, 159.

As can be seen in Fig. 17, so that the left and right hand side collars 101, 102 do not rotate with respect to each other or with respect to the outer housing 105, outer tube 106 or the rear chassis members 3 while the width adjustor mechanism 188 is being extended or retracted, both collars 101 and 102 comprise a female spline on their external circumferential surface which is engaged by a male spline provided on the internal circumferential surface of the outer tube 106. A female spline provided on the external surface of the outer tube 106 rotationally locks the chassis clamps 103 to the outer tube 106. Assembly clamp screw 112 secures the outer tube 106, the outer casing 105 together. As such, all components other than the screw members 158, 159 are rotationally locked together and the screw members 158, 159 are rotationally locked to each other.

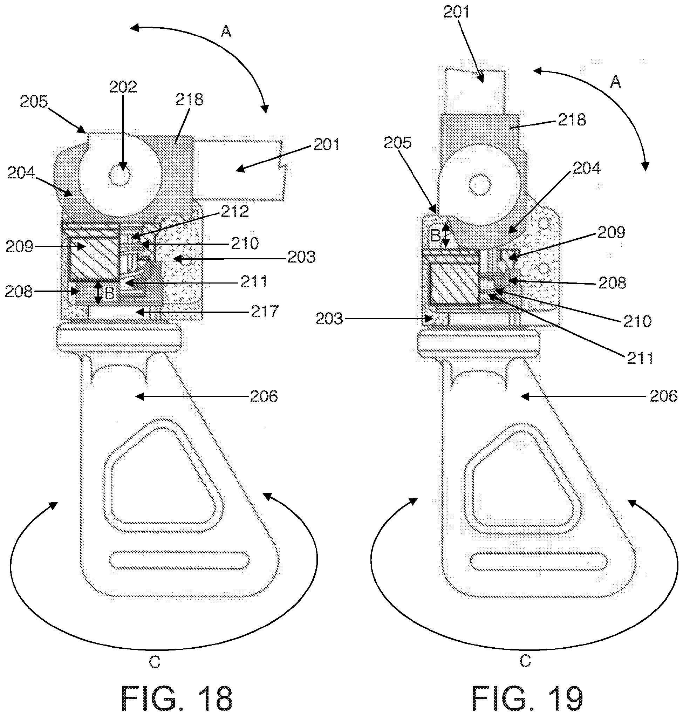

An alternative steering engagement mechanism and steering tiller deployment mechanism not forming part of the present invention is shown in a steering disengaged position in Fig. 18 and in a steering engaged position in Fig. 19. The alternative steering engagement mechanism and steering tiller deployment mechanism of Figs. 18 and 19 can be used in substitution to that of Fig. 12 without significant modification to the mobility device of Fig. 1.

The mechanism of Fig. 18 and Fig. 19 enables the steering tiller to be deployed from within the internal compartment 87 of the front chassis member 2, while simultaneously engaging a clutch-type mechanism to enable the front wheel assembly 30 to be changed from a freely-castering front wheel assembly 30 to a steerable front wheel assembly 30, and vice versa.

The steering tiller deployment mechanism comprises a rotatable pivot 202 which rotatably couples steering tiller arm 201 to chassis node 203. The rotatable pivot may be provided by a universal joint. The rotatable coupling of the steering tiller arm 201 to the chassis node 203 about pivot 202 is indicated by arrow A. A rotation limiting means is provided as a cam stop 205 configured to engage chassis node 203 upon over-rotation of the steering tiller arm 201 with respect to the chassis node 203, as can be seen in Fig. 19. The rotation limiting means is configured to limit the rotation of the steering tiller arm 201 with respect to the chassis node 203 to prevent over-rotation. Cam stop 205 is rotationally locked with respect to the steering tiller arm 201.

The steering engagement mechanism comprises a cam lobe 204 provided on a steering tiller receiving housing 218 and located on the housing 218 distal to the pivot 202 which rotationally couples housing 218 with chassis node 203.

In the steering disengaged position, as shown in Fig. 18, the front wheel assembly 206 is free to caster and is freely rotatable about the axis of bearing 217 with respect to chassis node 203, as indicated by arrow C. The wheel assembly 206 is rotationally coupled with and locked to a lower annular clutch member 208, also referred to as lower clutch cup 208. Thus, rotation of the front wheel assembly 206, for example by castering, causes the lower clutch cup 208 to rotate with it and within the chassis node 203, such that the front wheel assembly 206 and lower clutch cup 208 rotate freely around steering pinion 211.

An upper annular clutch member 209, also referred to as an upper clutch cup 209, is arranged coaxially around the lower clutch member 208 and suspended axially from it by spring 210. The upper annular clutch member 209 is free to slide axially around the outside of the lower annular clutch member 208 and is only prevented from doing so by the spring 210 which maintains an axial separation between the upper and lower clutch members 208, 209.

The lower annular clutch member 208, the upper annular clutch member 209, the steering pinion 211 and spring 210 are all located within an internal compartment within the chassis node 203.

The upper clutch member is rotationally locked to the universal joint, and thereby to the steering tiller, by a longitudinally extending key which is provided in its internal cylindrical surface. The key engages a longitudinally extending keyway 212 provided in the steering pinion 211. Thereby, rotation of the steering tiller causes the upper annular clutch member 209 to rotate within the internal compartment inside the chassis node 203.

As can be seen by comparing Figs. 18 and 19, when the steering tiller arm 201 is rotated upwards, out of the internal compartment 87, and deployed, the cam lobe 204 engages the annular upper clutch member 209 and compressed it against the spring 210, causing the spring to compress and the upper clutch member 209 to slide axially over the lower clutch member 208 until recesses provided in the upper clutch member 209 engage corresponding and complimentary recesses in the lower clutch member 208, thereby rotationally locking the upper and lower clutch members 208, 209 together and thereby rotationally locking the front wheel assembly 206 to the steering tiller arm 201 such that steering input from the steering tiller arm 201 is transmitted to the front wheel assembly 206.

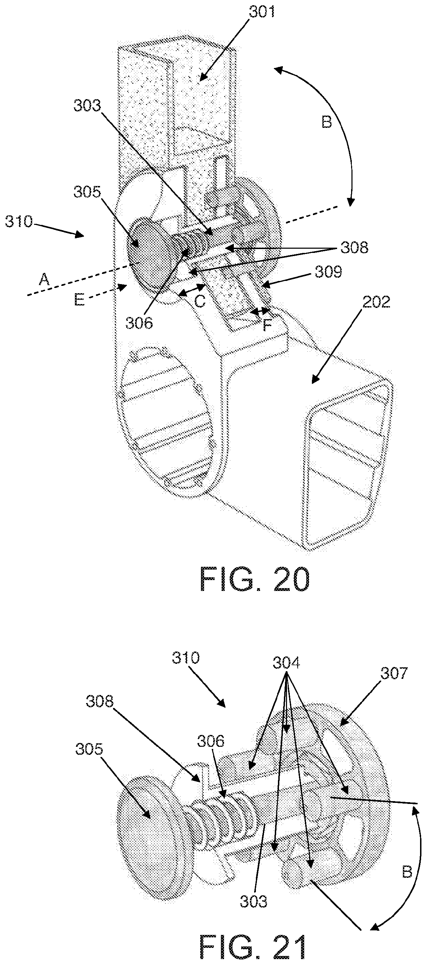

An alternative upper chassis arm rotational lock mechanism is shown in Figs. 20 and 21. The alternative upper chassis arm rotational lock mechanism of Figs. 20 and 21 can be used in substitution to that shown in Fig. 1 without significant modification to the mobility device of Fig. 1. The alternative upper chassis arm rotational lock mechanism may be used on both upper chassis arms or only one, with the rotational lock of Fig. 1 being used on the other side.

The alternative upper chassis arm rotational lock mechanism enables the upper chassis arms 9 to be rotated upward and away from their respective rear chassis members 3 against which the upper chassis arms 9 may be folded by the depression of a single button provided within each rotational lock mechanism. Once fully rotated into their deployed position, the rotational lock mechanism rotationally locks the upper chassis arms 9 into their deployed position to maintain the upper chassis arms 9 in that position. The alternative rotational lock mechanism provides additional rigidity between the upper chassis arms 9 and the lower chassis members 3, thereby improving the rigidity of the chassis overall and improving the handling and ride characteristics of the personal mobility device 100.

With reference to Fig. 20, upper chassis arm 301 is rotationally coupled to the rear chassis member 302 and rotatable about the rotation or pivot axis A. The rear chassis member 302 comprises a pivot clamp 308 about which the upper chassis 301 is rotatable. The pivot clamp 308 comprises a substantially cylindrical member comprising a flange (better seen in Fig. 21) at one end and a nut (not shown) at the other end which serves to hold the rotational lock assembly 310, rear chassis member 302 and upper chassis arm 301 together. The pivot clamp 308 comprises a central longitudinal hole which extends entirely therethrough, the hole having a smaller diameter at one end of the pivot clamp 308 and a larger diameter at the end at which the flange is located. A spring 306 is provided within the larger diameter portion of the hole and the spring is arranged coaxially with the hole such that the spring engages the shoulder which defines the transition between the smaller and larger diameter portions of the hole.

A pivot pin 303 is provided within the hole and which extends through its entire length. The pivot pin 303 comprises a release button 305 at one end and an engagement pin assembly 307 at the other end. The engagement pin 307 assembly comprises locking means which comprise engagement pins 304. In the example shown, five engagement pins 304 are used. The position of the engagement pins 304 and the radial spacing between them define intermediate raised positions of the upper chassis arm 301. In the example shown, as five equally radially spaced engagement pins 304 are used, the upper chassis arms may be raised in generally or approximately 72 degree intervals, although any number of pins may be used to give any number of intervals and the spacing between the intervals (i.e. the number of degrees) may be varied.

The upper chassis arm 301 and the lower chassis member 302 are provided with holes or apertures which are configured to correspond with the engagement pins 304. As such, the holes or apertures are generally equally radially spaced about a central origin, or central point, which is aligned with the rotational axis A.

As shown in Fig. 20, when the upper chassis arm 301 and the rear chassis member 302 are rotationally locked by the rotational locking mechanism 310, the engagement pins 304 are located within and extend through the holes or apertures in both the upper chassis arm 302 and the rear chassis member 303 (the holes in the arm 301 and the member are aligned 302 when they are locked together). As the engagement pins extend through both sets of holes, they lock the upper chassis arm 302 to the rear chassis member 303.

In order to release the rotational locking mechanism 310, the release button 305 is depressed (as shown by arrow E) which causes the pivot pin 303 to slide within and along the pivot clamp 308, causing the spring 306 to be compressed against the shoulder and the reverse side of the release button 305. As the engagement pin assembly 7 is attached to the pivot pin 303, the axial movement of the pivot pin 303, causes the engagement pin assembly 7 to move in the same direction and by the same amount as that in which and as which the release button 305 is pressed. The axial movement of the engagement pin assembly therefore causes the engagement pins 304 to be removed from the holes within the rear chassis member 302, thereby releasing the upper chassis arm 301 and enabling it to rotate about rotation axis A with respect to the rear chassis member 302. Once, the upper arm 301 has been partially rotated, the holes of the upper chassis arm 301 will no longer align with the holes in the rear chassis member 302 such that, when the button 305 is released, spring 306 urges the pivot pin 303 to move back towards its rest position, causing engagement pins to rest against the surface of the rear chassis member 302 (when the button 305 is fully depressed, the engagement pins are removed from the holes of the rear chassis member 302, but they remain at least partially within the outermost holes of the upper chassis arm 301). Further rotation of the upper chassis arm 301 causes the hole of the upper chassis arm 301 to re-align with one of the holes of the rear chassis member 302 and so the spring 306 will cause the engagement pins to re-engage both sets of holes and thereby rotationally lock the upper chassis arm 301. As the radial spacing of the engagement pins and the holes are at approximately 72 degrees, the two set of holes will re-align every 72 degrees of rotation of the upper chassis arm 301 and so the rotation locking mechanism 310 defines intermediate raised positions of the upper chassis arm 301 which are set every approximately 72 degrees.

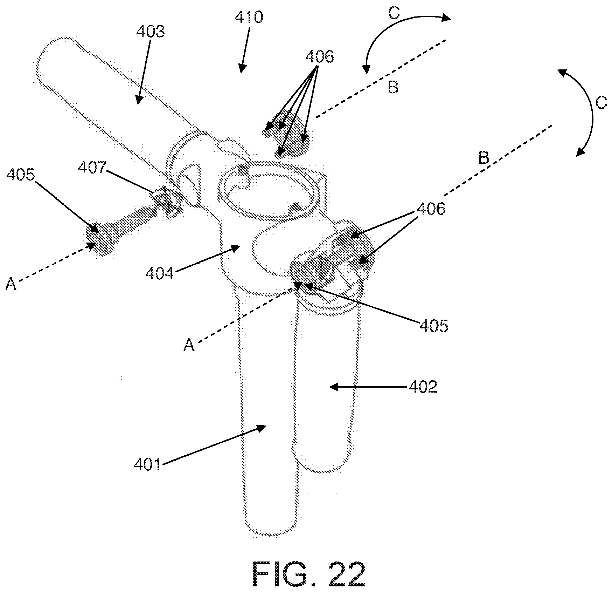

Fig. 22 shows an alternative steering tiller handlebar assembly and handle locking mechanism. The alternative steering tiller handlebar assembly and locking mechanism of Fig. 22 can be used in substitution to that shown in Fig. 11 without significant modification to the mobility device of Fig. 1.

As can be seen from Fig. 22, the alternative steering tiller handlebar thereof is similar to that of Fig. 11, but with a novel handle locking mechanism 410 which enables the handles 402 to be raised from a folded position in which they are generally folded against, or in line, with the steering tiller 401 such that they point generally in the same direction as the longitudinal axis of the steering tiller 401 and enables the handles to be lockable in a fully-deployed position, such that their longitudinal axes are generally perpendicular to the longitudinal axis of the steering tiller 401.

The alternative handle locking mechanism 410 of Fig. 22 is similar in function, operation and design to the alternative rotational locking mechanism shown in Figs. 20 and 21, with the exception that the pin engagement assembly comprises only four pins instead of five and so the handles 402 are lockable at 90 degree intervals (that is, locking mechanism 410 define intermediate locked raised positions of the handles 402 which are at approximately 90 degree intervals).

In the same way as the alternative rotational locking mechanism of Figs. 20 and 21, the alternative handle locking mechanism 410 enables the handles to be rotated through 90 degrees before relocking or relocating on the next pin. This locking mechanism differs from that of Figs. 20 and 21 in that there is no internal bolt through the middle to hold the hinge parts tightly together.

A central steering unit 404 connects steering tiller 401, left handle 402 and right handle together. Both handles 401, 402 comprise a handle grip.

The locking mechanism 410 of the right-hand side handle 401 is shown in exploded view. A similar pivot pin and button 405 to that of the alternative rotational locking mechanism is arranged within a hole extending through, and generally perpendicular to the longitudinal axis of, the portion of the central steering unit 404 which receives a handle 403. A spring 407 is provided within the hole of the central steering unit 404 which resists compression when the button 405 is depressed into the hole, in a similar way to that of the alternative rotational locking mechanism of Fig. 20.

An engagement pin assembly 406 is provided attached to the other end of the pivot pin 405 to that at which the button is provided. The engagement pin assembly 406 comprises four equally radially spaced engagement pins, i.e. spaced at generally 90 degree intervals, and arranged such that they are equidistant from the centre of the pivot pin 405. Four holes (which may alternatively be recesses or apertures) are provided on the side of the central steering unit 404 on which the engagement pin assembly 406 is provided. The four holes are designed to correspond to the size, shape and arrangement of the four engagement pins 406 such that all four holes may be simultaneously engaged by all four engagement pins 406.

The handles 401, 402 are provided with similarly arranged holes such that they may align with the holes of the central steering unit 404 and may also be simultaneously engaged by all four the of the engagement pins 406. The interference of the engagement pins 406 with the holes in the handles 401, 402 rotationally locks the handles 401, 402 to the central steering unit 404.

In order to raise a handle, 401, 402, the release button 405 is depressed which moves the pivot pin 405 axially into the handle-receiving arm of the central steering unit 404, thereby compressing spring 407. The axial movement of the pivot pin 405 causes the engagement pin assembly 406 to also move axially and thereby causes the engagement pins 406 thereof to disengage from the holes (not shown) provided in the handle 401, 402, but the axial distance travelled by the pins is not so great so as to remove them entirely from the holes provided in the central steering unit 404. The disengaging of the pins 406 from the holes provided in the handles 401, 402 removes the interference of the pins 406 with those holes and enable the handles to freely rotate and therefore be unlocked.

If, once the handles 401, 402 have been unlocked and partially rotated such that both sets of holes no longer align and the button 405 has been released, the spring 407 will urge the pivot pin, button 405 and engagement pin assembly 406 back to their collective rest position and cause the engagement pins 406 to engage the holes within the handle 401, 402 and the central steering unit 404 when further rotation causes them to next align at the next 90 degree interval.

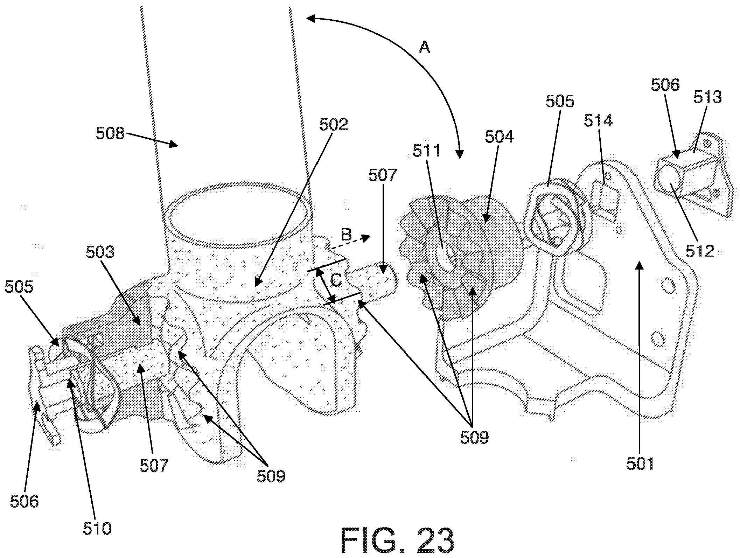

Fig. 23 shows an alternative steering tiller adjustment mechanism, portions of which are also shown in Figs. 18 and 19 in which the alternative steering engagement mechanism is shown. The alternative steering tiller adjustment mechanism of Fig. 23 can be used in substitution to that of the device of Fig. 1 without significant modification to the mobility device of Fig. 1.

The alternative steering tiller adjustment mechanism provides for angular adjustment of the steering tiller such that it may be deployed from the internal compartment of the front chassis member by pulling the steering tiller up out of the internal compartment when the front chassis member is opened to reveal the internal compartment thereof. The steering tiller is then rotated about a pivot axis into a deployed position, ready for use.

The alternative steering tiller adjustment mechanism provides a plurality of discrete angular positions at which the steering tiller may be set to accommodate the preference of the user and enables the mobility device to accommodate a range of heights of users, particularly in user-steered seated modes or configurations. The steering tiller may also be adjusted to a number of angular positions according to the particular configuration that the device is intended to be used in, e.g. powered wheel chair mode, free style leisure mode etc.

The alternative steering tiller adjustment mechanism further enables the user to pivot the tiller forward whilst in a seated position and without the need of bending down to do so. The alternative steering tiller adjustment mechanism also provides to option of providing extra or increased legroom to assist in mounting and dismounting of the device as the steering tiller may be raised or lowered (by rotation) out of the way of the user, particularly of the legs of the user.

The alternative steering tiller angle adjustment mechanism is a sprung-loaded mechanism which comprises a cam lobe 502 (referred to elsewhere as steering tiller receiving housing 218) which is rotatably coupled to chassis node 501 (referred to elsewhere as node 203). Cam lobe 502 comprises a steering tiller receiving means, which in the example shown comprises a generally tubular projection extending outwards from the body of the cam lobe 502. The tubular projection is sized to receive, or be received by, the tubular, or at least generally circular, shaft of the steering tiller 508 (shown in Fig. 23 in ghost). The cam lobe 502 comprises two cam lobe spindles 507 which are provided on opposing sides of the cam lobe 502 and are arranged such that their longitudinal axes are substantially parallel and co-axial.

The spindles 507 are each engaged by an engagement cup 503, 504 which both comprise a hole 511 through which the spindles 507 slide. As such, the engagement cups 503, 504 are axially displaceable with respect to the spindles 507.

The engagement cups 503, 504 comprise a cam lobe engagement means which may also be referred to as a rotation locking means as it rotationally locks the engagement cups to the cam lobe 502. Although the engagement means rotationally locks the engagement cups to the cam lobe 502, the locking engagement may be overcome when a sufficiently high force is applied to steering tiller 508. In the example shown, the engagement means comprises a crown gear, which in the example shown comprises a generally waved profile arranged radially about and generally co-axially to the hole 511 within which the spindle 507 is received.

The waved profile teeth of the engagement means engage with a corresponding crown gear 509 arranged radially around the spindle on each side of the cam lobe 502. As such, the corresponding crown gears 509 of the cam lobe 502 of this example both comprise gear teeth also having a generally waved and generally complementary profile 509.

Compression spring 505, provided between each engagement cup 503, 504 and the chassis node 501 (also referred to as node 203), provides a compressive force to bias the engagement cups 503, 504 axially such that the waved-profile of the teeth of the crown gear of each engagement cup 502, 504 engages the corresponding waved-profile of the teeth of the crown gear of the corresponding side of the cam lobe 502.

The spindle 507 on both sides of the cam lobe 502 are received by a spindle mounting means 506, configured to rotatably mount the spindles 507 to respective sides of the chassis node 501. The spindle mounting means 506 comprises a pivot spindle 506 comprises an axially extending and square-section protrusion 513 comprising an axially extending generally circular hole 512 which extends generally parallel to the end face of the square-section protrusion 513. The spindle 507 is received within the hole 512 of each spindling mounting means such that the spindle is freely-rotatable within the hole and such that the cam lobe 502 is thereby rotatable about the node 501. The spindle mounting means 506, or pivot spindle 506, is fastened and rotatably fixed to the chassis node 501 by suitable means. In the example shown, the square-section protrusion 513 engages with a correspondingly shaped and sized square hole 514 provided in a face of, and extending entirely through a wall of, the chassis node 501 to thereby rotationally lock the spindle mounting means 506 to the chassis node 501.

The spindle receiving means 512 (i.e. hole 512) of both pivot spindles 506 comprises a stepped profile such that the opening of the hole 512 has a greater diameter and extends a certain distance within the protraction 513 to form a first portion than the diameter of the hole at second, more distant portion. Thus, the hole 512 has a first, outer portion having a larger diameter than a second, inner portion. As such, an inner step is provided within the hole to provide an axial locating means to limit or prevent lateral movement of cam lobe 502 during use or rotation, thereby ensuring that engagement cups 503, 504 move axially an equal extent each side during rotation of the cam lobe 502.

By virtue of the above arrangement, the engagement cups 503, 504 are axially displaceable along and, when disengaged from the corresponding waved-profile teeth of the cam lobe 502 crown gear, freely rotatable about the longitudinal axis of spindles 507. The engagement cups 503, 504 are urged, or biased, by their corresponding spring 507 and pre-loaded, against the cam lobe 502 such that they engage the corresponding crown gear of the cam lobe 502 of their respective sides.

The opposite side of the engagement cups 503, 504 to which the crown grear is provided is provided with a square-shaped hole which receives the squares-shaped protrusion 513 of the spindle pivot 506. As such the engagement cups 503, 504 are rotationally locked to the chassis node 501, but are freely rotatable with respect to the cam lobe 502. When cam lobe 502 is rotated by tiling steering tiller 508, as indicated by arrow A, the cam lobe 502 rotates with respect to the engagement cups 503, 504 and the teeth of the crown gears of the cam lobe 502 ride over the teeth of the engagement cups 503, 504. As the engagement cups are axially displaceable, but sprung loaded in the axial direction by spring 505, the waved-profile of the teeth of the crown gears causes them to move axially outwards and away from the cam lobe 502 as the "peaks" of the opposing and engaging gear teeth meet each other. As such, the engagement cups 503, 504 move axially outwards a distance equal to the "amplitude" of the waved-profile (i.e. the distance between the "peak" and "tough" of the gear teeth) at a time. Although the gear shown in the example comprises twelve teeth, any number may be provided, and the spacing between the "peaks" (i.e. the pitch or wavelength of the wave-profile) may be changed from one tooth to the next to provide a variety of different positions of the steering tiller 508.

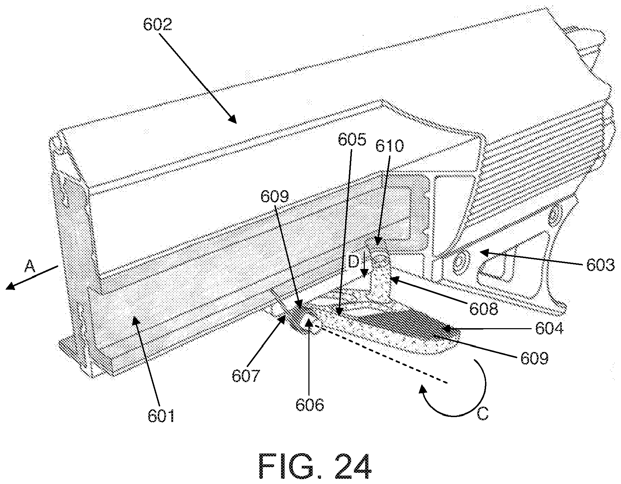

Fig. 24 shows a cutaway view of the left hand side of the front chassis member, thereby revealing an alternative front chassis extension mechanism, or front chassis extender, to that shown in Fig. 9. The alternative front chassis extension mechanism of Fig. 24 can be used in substitution to that of Fig. 9 without significant modification to the mobility device of Fig. 1.

Although only the left hand side of the front chassis member and of the front chassis extension mechanism are shown, the right hand side of the front chassis member and of the front chassis extension mechanism is an identical mirror image to the left hand side. The alternative front chassis extension mechanism therefore provides for adjustment of the extent of extension of the front chassis from either the left hand side or from the right hand side. Furthermore, as latch bolts 610 are provided on both sides, the front chassis extension mechanism may be locked from both right and left sides.

As discussed in respect of the first front chassis extender of Fig. 9, the alternative front chassis extension mechanism provides a similar function in that it enables the front chassis member to be extended according to the desired operation mode and also to provide access to the internal compartment within the front chassis member within which the steering tiller may be stowed. As the extendable portion of the front chassis comprises the front wheel assembly, the front chassis extension mechanism of Fig. 9 and also of Fig. 24 enable the wheelbase of the wheeled personal mobility device to be extended or reduced, according to the desired configuration or mode of operation. The alternative front chassis extension mechanism comprises a locking means to enable the front chassis member to be extended to a certain extent and to be locked at that position.

The outer body shell 602 of the front chassis comprises an internally slidable side rail 601 which is configured to slide along a correspondingly shaped groove provided within the outer body shell 602, shaped so as to receive the side rail 601 and to enable the side rail 601 to slide along and within the groove. The left and right side rails (mirror images of each other) are connected to each side of the front chassis node where indicated by arrow A. The front chassis member is therefore extendable by left and right side rails 601 which slide within their corresponding grooves and telescope within outer body shell 602.

The outer body shell 602 is connected by chassis brackets 603 which are provided at the rear of the outer body shell 602 to the rear chassis of the device, i.e. the rear chassis members or legs.

When the front chassis member is fully retracted, a hole 610 in the side rail 601 aligns with a hole provided in the outer body shell 602 of the front chassis member. A latch bolt 608 extends through both aligned holes so as to lock the side rail 601 with respect to the outer body shell 602. As will be appreciated, although only one hole is shown in Fig. 24, a plurality of holes may be provided in side rail 601 to provide a plurality of positions at which the front chassis member may be extended and locked, to define various extents of extension of the front chassis member.

A release lever 604, provided on the underside of the chassis outer shell 602 and comprising foot pad 609, is rotatably mounted to the outer body shell 602 of the front chassis member and is rotatable about axis B defined by the longitudinal axis of lever pivot 606. When the release lever is depressed, i.e. pressed in the direction of arrow C (i.e. clockwise about the end of connecting rod 606), for example by a user applying a downwards force, for example with his feet, to foot pad 609, the release lever assembly 604 rotates about the longitudinal axis of lever pivot 606 as indicated by arrows B and C. The rotation of the release lever assembly 604 in this way causes latch bolt 8 (provided on release lever 604) to disengage from the hole 610 provided in side rail 601 and thereby causes the side rail 601 to become slidably unlocked with respect to the outer body shell 602 so that the side rail 601 is now free to slide within its groove and along outer body shell 602.

Rotational movement of the release lever 604 on one side of the device is transferred to the corresponding release lever 604 on the opposite side of the device by connecting rod 607. As such, the connecting rod 607 is rotationally coupled to the release lever 604 provided on one side of the device and also to the release lever 604 provided on the other side of the device. When one release lever 604 is rotated, e.g. when it is depressed, the connecting rod 607 is causes to rotate with it, which thereby causes the release lever 604 provided on the other side of the front chassis member to also rotate and to an equal extent. The chassis extension mechanism on both sides are identical to each other and, as such, the rotation of the release lever 604 on one side causes the latch bolt 608 on that side and also on the other side to disengage from their respective latch bolt holes provided in both side rails 601 and both sides of outer shell 602.

A torsion spring 607 is provided which is rotationally coupled to the release lever and the outer shell 602 such that the torsion spring 607 biases the release levers of both sides of into the released (i.e. not depressed) position of the levers 604 in which the front chassis extender is locked as shown in Fig. 24 such that the latch bolt 608 engages, and is biased into, the locking bolt hole 610. As torsion spring 607 rotationally biases release lever 604 into the released (i.e. not depressed) position, i.e. it is biased in the direction opposite to arrow C, when the front chassis member is partially extended such that the latch bolt hole does not align with a latch bolt hole provided in the side rail 601, the latch bolt 608 engages the latch bolt hole of the outer shell 602 but rides against the surface of the side rail 601 until the front chassis member is extended to a position at which a latch bolt hole of the side rail 601 aligns with the latch bolt hole 610 of the outer shell 602, at which point the latch bolt 608 is urged by torsion spring 609 through the latch bolt hole of the side rail 601 such that the latch bolt 608 engages both the latch bolt hole of the outer shell 602 and of the side rail 601. As previously mentioned, a plurality of side rail latch bolt holes may be provided to define a plurality of extension positions to enable the front chassis member to be extended to a variety of lengths or extents. The alternative front chassis extender therefore comprises a locking means configured to lock the front chassis extender at a certain extension of the front chassis member.

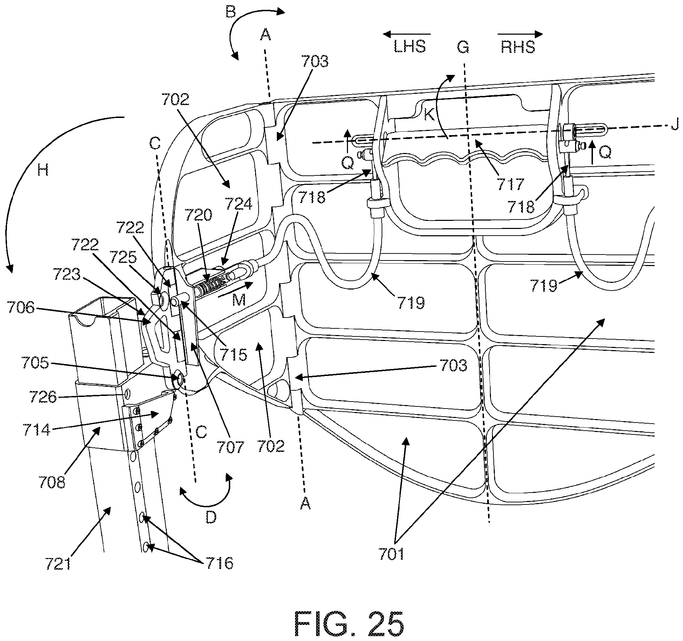

An alternative seat with seat attachment means, seat height adjuster and seat folding mechanism is shown in Fig. 25. The alternative seat and seat mechanisms of Fig. 25 can be used in substitution to those of the device of Fig. 1 without significant modification to the mobility device of Fig. 1.

The alternative seat is a rotatable seat and is rotatably coupled with and attached to both upper chassis arms. As such, the seat is pivotable between an "for-use" position in which the seat base is positioned to receive a user and between the rotated or stowed position shown in Fig. 25 in which the seat is pivoted forwards about seat pivot shaft 705. The alternative seat of Fig. 25 differs from that shown in Fig. 1 as the alternative seat is only rotatable to a forward facing positon, whereas the seat shown in Fig. 1 is rotatable between a forward-facing position and a rearward-facing position.

The seat comprises a seat base 701. A centreline G defines the left hand side (denoted "LHS" in Fig. 25) and the right hand side (denoted "RHS" in Fig. 25) of the seat base 701. The left hand and right hand sides of the seat base 701 (and also the seat height adjustor, seat attachment means, seat folding mechanism, as well all of the other components shown in Fig. 25 on the left and right hand sides) are identical to each other in that they are mirror images of each other about centreline G. For ease of reference, Fig. 25 illustrates only the left hand side of the seat assembly but it will be appreciate that the right hand side of the seat assembly is identical and a mirror image of the left hand side.

The seat base 701 comprises a rotatable outer portion 702 arranged on each side of the seat base. As such, a first rotatable outer portion 702 is provided on and is rotatably coupled or mounted to the left hand side of the seat base and a second rotatable outer portion 702 is provided on and is rotatably coupled or mounted to the right hand side of the seat base 701. The first and second outer portions are each rotatably coupled and mounted to the seat base 701 by a seat hinge 703, defining a rotation axis A. In Fig. 25, as well as being pivoted to the forward position, the seat is unlatched and partially folded such that the outer portions 702 are partially folded with respect to the seat base 701 about rotation axis A (as indicated by arrow B) defined by hinge 702.

The outer portions 702 comprise a hinge base support 722 attached thereto by means of outer portion hinge 722 defining hinge rotation axis C such that the hinge base support 722 is rotatable about axis C (as indicated by arrow D) with respect to the outer portion 702 to which it is attached.

Each hinge base support 722 is rotatably connected to a sliding collar 718, configured to be slidable along the upper chassis arm 712 of its corresponding side of the device, by means of pivot shaft 705. The pivot shaft 705 defines an axis of rotation of the hinge base support 722 which is substantially or generally perpendicular to the axis of rotation C of the hinge 722 which rotatably connects the seat outer portion 702 to the hinge base support 722. Rotation of the hinge base support 722 about pivot shaft 705 thereby enables the seat base 701 to be rotatable about the longitudinal axis defined by pivot shaft 705 between a forward position and a "for-use" position.

When the seat base 701 is rotated to the "for-use" position in which it is generally horizontal such that a user may sit on it, a portion 723 of the hinge base support is received by a seat support means provided on the slidable seat height adjustor collar 708. In the example shown, the seat support means comprises a pocket 714 into which a protrusion 723 of the hinge base support 722 is received and engaged. The seat support means provides support to the seat such that it limits the rotation of the seat about the hinge 705 and enables the seat to be secured into the "for-use" position, while providing sufficient strength such that the seat may support the weight of a user and also providing increased rigidity to the personal mobility device by enabling the seat to act as a cross-brace between the two upper chassis arms 721.

In order to lock the seat into the "for-use" position, a seat locking means 724 is provided which additionally serves to lock the seat height adjustor, comprising seat height adjustor collar 708, to a desired height or extent along the upper chassis member along which the seat height adjustor collar 708 is configured to be moveable and, specifically, to slide.

The seat locking means 724 is actuated by a seat lock actuation means comprising a rotatable handle 717 which is rotatably mounted to the underside of the seat base 701, towards the rear thereof. The rotatable handle is rotatable about axis J. When the rotatable handle 717 is pulled by the user in the direction indicated by arrow K, the handle pulls inner cables 718 which are attached to opposing ends of the handle 717 towards the rear of the seat base 701 in the direction indicated by arrow Q. Rotation of the handle 717 causes the inner cable 718 on both sides of the handle to be pulled by the same amount and in the same direction, Q. The pulling of the inner cables 718 by handle 717 causes them to slide within outer cable sleeve 19 and to pull on a sliding seat pin 715, attached to the end of each inner cable 718, in the direction indicated by arrow M.

The seat locking means 714 comprises a seat pin biasing means which comprises a return spring 720 configured to bias seat locking means 714 into its locked condition. As such, when the handle 717 is pulled and the inner cable 718 causes the seat pin 715 to be pulled towards a disengaged position in direction M, the return spring 720 is tensioned (because it is extended in the direction Q), thereby biasing the seat pin into the locked position when the handle 717 is released.

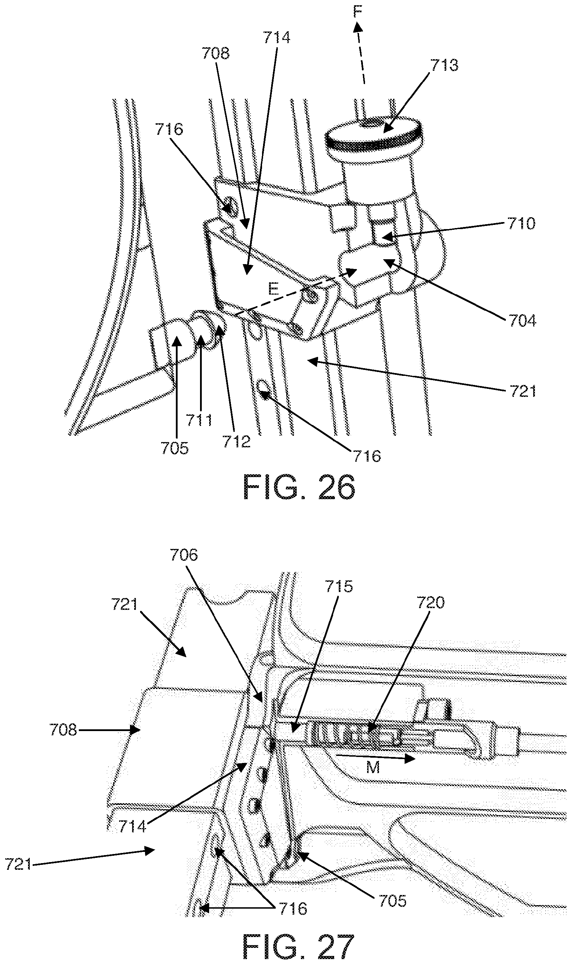

As can also be seen in Fig. 27 (in which the seat locking mechanism is shown in partial cutaway to reveal the return spring 720), when the seat is in the locked position (i.e. when it is rotationally locked to the upper chassis arms and when the seat height adjustor is locked to its desired vertical position along the upper chassis arms), the seat pin 715 extends through and is located within a hole 725 provided in the hinge base support, through a hole 726 provided in the seat height adjustor collar 708 and through one of the height adjustment holes 716 provided at intervals along the length of the upper chassis arms.

The seat pin biasing means provides that when the handle 717 is released and when the seat height adjustor collar 708 is positioned such that the seat pin hole 726 thereof is misaligned with any of the upper chassis arm seat pin holes 716, the seat pin is biased against the surface of the upper chassis arms. When the seat height adjustor collar 708 is moved towards a hole 716 of the upper chassis arms, the seat pin 715 rides along the surface of the upper chassis arm 721 until the seat pin hole 726 of the collar 708 aligns with a hole 716 of the upper chassis arm 721, at which point the return spring 720 pushes the seat pin 715 through the hole 716 of the upper chassis arm 721 such that the seat pin is located within the hole 725 of the hinge base support 706, the hole 726 of the collar 708 and the hole 716 of the upper chassis arm 721.

The seat locking means 724 therefore serves to rotationally lock the seat base 701 to the upper chassis arms, as well as serving to lock the seat base 701 at a certain height (i.e. at a certain distance along upper chassis arms 721).

Fig. 26 illustrates the seat locking and swivelling mechanism which provides the rotational coupling between the seat and the upper chassis arms. Fig. 26 is viewed from the reverse side to that shown in Fig. 25. The seat locking mechanism comprises a seat pivot shaft 705 attached to the hinge base support 706 and a seat pivot shaft receiving hole 704 provided within the slidable seat height adjustor collar 708 which is configured to receive the seat pivot shaft 705, as indicated by arrow E, such that seat pivot shaft 705 is rotatable within hole 704.

The seat height adjustor collar 718 additionally comprises a seat pivot shaft retaining means 705 configured to retain the seat pivot shaft 705 within the seat pivot shaft receiving hole 704 of the collar 708. The seat pivot shaft hole 704 is shown in cutaway in Fig. 26. The seat pivot shaft retaining means 705 comprises a plunger comprising a plunger handle 713 connected to a sprung-loaded plunger pin 710 (spring not shown). The plunger pin 710 extends into the seat pivot shaft receiving hole 704, such that it breaches said hole 704 in a direction generally perpendicular to the longitudinal axis of the seat pivot shaft receiving hole 704. When the seat pivot shaft 705 is inserted into seat pivot shaft receiving hole 704, the plunger pin 710 rides against the rounded tip 712 of the seat pivot shaft 705 and causes the pin to be raised until the seat pivot shaft 705 is inserter further at which point the seat pivot shaft 705 rides past the rounded tip 712 and drop into and engages a circumferential groove 711, or pivot shaft recess 711, provided in the pivot shaft 705 immediately beyond the rounded tip 712.

When the plunger pin 710 engages the circumferential groove 711, the seat pivot shaft 705 is axially located within the seat height adjustor collar 708 but the seat pivot shaft 705 may freely rotate within the hole 704.

In order to remove the seat from the wheeled personal mobility device, the seat pivot shaft 705 is disengaged and removed from the seat pivot shaft receiving hole 704 by raising the plunger handle 713 which disengages the plunger pin 710 from the circumferential groove 711 of the seat pivot shaft 705 and which raises the plunger pin 710 sufficiently such that it clears the rounded tip 712 and enables the seat pivot shaft 705 to be completely removed from the seat pivot shaft receiving hole 704.

The seat attachment means therefore enables the seat to be removably attached, or detachably attached, to both the upper chassis arms, while also enabling the seat to remain rotatable.

As will be appreciated, the seat based being hinged in three parts enables the seat to fold as the width of the device is varied by way of the width adjustor, providing for easier storage of the personal mobility device and offering a large range of widths of the mobility device.

As mentioned, the alternative seat and seat mechanisms provide additional structural strength to the mobility device as the seat base 701 acts as an cross brace to add rigidity to the chassis, particularly when the width of the personal mobility device is fully extended.

The alternative seat and seat mechanisms shown in Figs. 25 to 27 also provide that the seat 701 can be connected and disconnected to the upper chassis arms with the chassis in any width, from the widest to the narrowest width (including the width when the device is in its fully folded or stowed configuration). The alternative seat and seat mechanisms additionally provide that the seat can be disengaged from the sliding collars 708, pivoted forwards, and slid down to the base of the upper chassis arms by means of a simple one handed action of a single lever, lever 717. The seat can also be removed with one action.

Furthermore, the alternative seat and seat mechanisms provide that the seat 701 may be slid down to the base of the upper chassis bars 721 to provide for more space when the personal mobility aid is configured in the walker mode.

Although the power-assisted configurations are configured such that the device is able to and configured to be propelled solely by the power of the motors alone, and so additional power is not needed to be supplied by a user or assistant, examples configured such that the assistive power acts as supplementary power to provide additional power to that provided by the user or assistant are envisaged. Additionally, examples wherein the device is configured to be propelled solely by the power of the motors alone but wherein the user may apply additional power in order to increase the overall power or speed of the device are also envisaged.

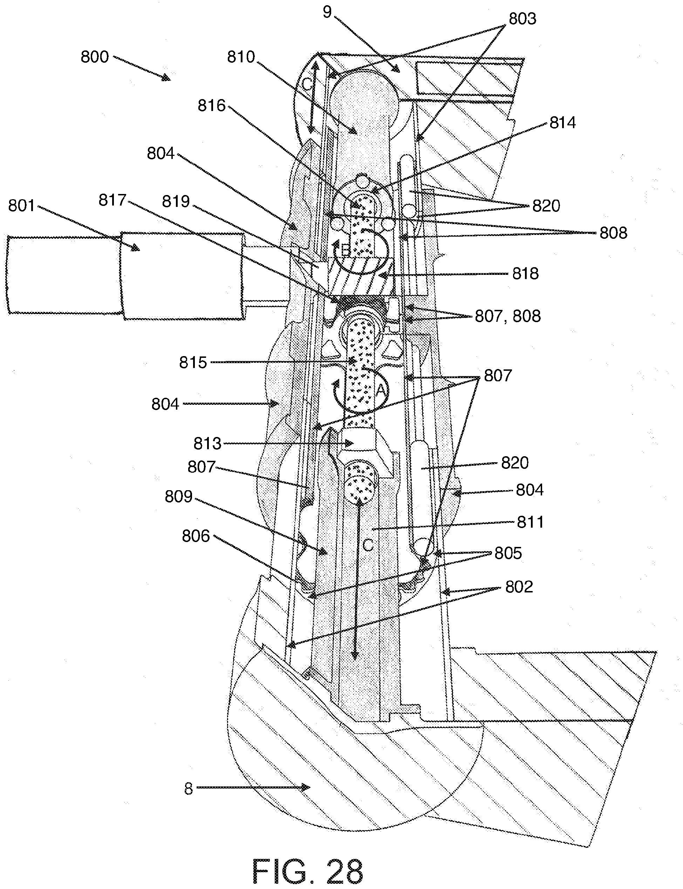

A second alternative width adjustor 800 to those shown in Fig. 3 and Fig. 16 is shown in Fig. 28 in perspective view, with an upper portion cut-away so as to illustrate internal components thereof.

The width adjustor 800 of Fig. 28 can be used in substitution to that of either Fig. 3 or Fig. 16 without significant modification to the mobility device of Fig. 1. The second alternative width adjustor 800 may be used for adjusting the width of many devices having slidably coupled components, such as those comprising a splined connection, and it is not limited to a personal mobility aid in general, or to a vehicle in general.

The second alternative width adjustor 800 is an electrically operated width adjustor mechanism which is driven by an electric motor 801. An advantage of this width adjustor is that is enables width adjustment of the personal mobility device with very little physical input from the user. Additionally it does not require the user to stoop or bend down in order to adjust the width of the personal mobility device, which is highly advantageous to those of limited mobility and therefore is a highly desirable feature of a wheeled personal mobility device in particular.

Similarly to the width adjustor mechanism of Fig. 3 and Fig. 16, the second alternative width adjustor mechanism 800 comprises two cylindrical telescopic members 802, 803 configured to telescope in the axial direction from both ends of a central substantially cylindrical tubular outer barrel member 804. The telescopic members 802, 803 may also be referred to as left 802 and right 803 collars or first 802 and second 803 collars and they are co-axial with the outer barrel member 804. In the example shown, both telescopic members 802, 803 are configured to extend simultaneously from the outer barrel member 804 (which may also be referred to as the outer cross member casing) and to the same distance, or at the same speed, upon actuation of the electric motor 801, however other examples are envisaged wherein the telescopic members 802, 803 extend different distances or at different speeds to each other, or wherein only one extends from the central barrel member 804 and the other does not, are also envisaged.

The left 802 and right 803 collars are tubular and each comprise a longitudinal spline 805 on their internal cylindrical surface which is configured to engage with a longitudinal spline 806 provided on an external cylindrical surface provided on respective left 807 and right 808 inner tube members. Thus, the spline enables the collars 802, 803 to slide from the central outer barrel member 804, while being rotationally locked thereto, as the left 807 and right 808 inner tube members are rotationally locked to the central outer barrel member 804.

Each collar 802, 803 is affixed at a distal end thereof to a rear chassis member 8, 9. Each collar 802, 803 comprises a transfer arm 809, 810 longitudinally extending internally from a distal end thereof, coaxially with the longitudinal axis of the collars 802, 803 and of the central outer barrel member 804. The transfer arms 809, 810 comprise a longitudinally extending central aperture 811 having an opening 812 at a proximal end thereof for receiving a leadscrew nut 813, 814. The opening 812 at the proximal end is configured to receive the leadscrew nut 813, 814 and to prevent rotation of the nut 813, 814 with respect to the transfer arm 809, 810. The longitudinally extending aperture 811 is configured to receive a leadscrew 815, 816 provided on each side such that, when the width of the device is adjusted, the leadscrew 815, 816 on each side is able to freely move axially within the central longitudinal aperture 811 of the transfer arms 809, 810.

The left hand side leadscrew 815 comprises an anti-clockwise thread and the leadscrew 816 on the right hand side comprise a clockwise thread. Each leadscrew 815, 816 engages its respective leadscrew nut 813, 814 provided in the aperture of its respective transfer arm 809, 810. A transfer adaptor 817 rotationally couples a worm gear 818 coupled to an output shaft 819 of the electric motor 801, mounted to the cross member casing 804, to both leadscrews 816, 817 such that rotation of the output shaft 819 causes rotation of the leadscrews 816, 817, as indicated by arrow A. Thus, as the handedness of the thread of the two leadscrews 816, 817 are opposite to each other, rotation of the output shaft 819 of the electric motor 801 causes the two leadscrews 816, 817 to rotate within their respective leadscrew nuts 813, 814 and thereby causes the two collars 802, 803 to concurrently move towards or away from each other, depending on the direction of rotation of the output shaft 819 of the electric motor 801, thereby adjusting the width of the width adjustor mechanism 800, and, as the end of each collar 802, 803 is affixed to respective rear chassis members 8, 9, thereby adjusting the width of the wheeled personal mobility device also.

It is a known problem that tubular elements which are splined to provide sliding telescopic movement, and particularly when rotational loads are applied or which are required to transmit rotational loads, suffer from backlash due to the tolerances which must be provided between the inner and outer spline teeth to ensure adequate sliding performance. The tolerance which must be provided in existing sliding telescopic splines causes problems due to "snatch" when a rotational load is taken up, not only from a practical use perspective, but also causing fatigue, premature wear and catastrophic failure. Snatch can also cause "picking up" of the material of the spline, for example steel, as it rubs, which may cause damage to the surface of the spline teeth. The "play" or backlash between the two splined elements due to the necessary machining tolerance is also unacceptable from a practical perspective in many cases, thereby ruling out this type of telescoping system in application where it could otherwise be considered a very effective solution.

There therefore exists a need to provide a splined telescopic system which is able to freely telescope but which reduces or eliminates snatch and its associated complications and problems and which reduces or eliminates any backlash between the two telescopic sliding elements due to the machining tolerances.

The adjuster solves or at least alleviates these problems by providing flexible rods arranged at spaced intervals circumferentially around the spline 805, 806. The longitudinal axis of the rods 820 is aligned with the longitudinal axis of the spline 805, 806. The rods 820 may be made of flexible plastic, nylon or polyoxymethylene (e.g. Delrin), or any other suitable material having a low coefficient of friction and/or self-lubricating properties. The rods 820 are interference fitted between the clearance of the sliding elements 802, 807, interspersed within the steel splines. The rods 820 serve as a buffer means, or cushion, enabling the mating surfaces of the metal outer 802 and inner 807 splined tubes to slide smoothly when there is no rotational load applied as the mating surfaces are kept from touching each other by the rods 820 by maintaining a spaced relationship between them. When an initial rotational load is applied, the rods 820 take up the initial load, cushioning and protecting the steel teeth, or splines, from "snatch" and fatigue or shock damage. When the rotational load is increased, to below the compression memory of the material of the rods 820, the rods 820 are compressed at a calculated rate, depending on the size and specification of the rods 820, to allow the metal surface of the splines to creep past the accepted machined tolerance to then lock together, thereby providing structural rigidity. As the rotational load is released, to below the compression memory of the material of the rods 820, the rods 820 are allowed to return at a given rate to their original shape and size, releasing the mating surfaces of the spline to the given tolerance gap once more and centralizing the rods in their respective pockets 821 to take the un-rotational sliding load once more. The tolerance rotational "load" gap between the metal splines can be adjusted to suit the load and particular application, as can the exact size and structure of the rods 820.

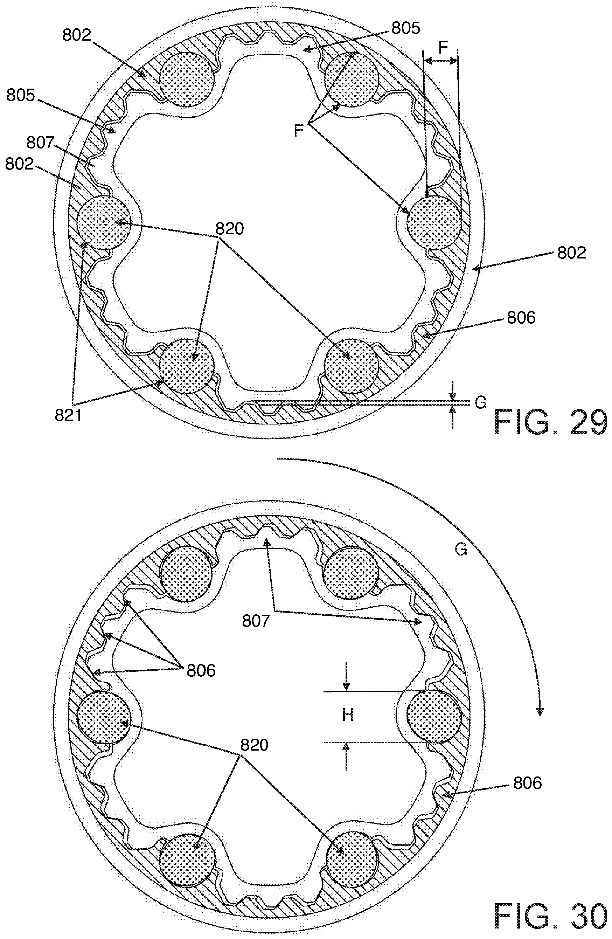

The arrangement of the flexible rods 820 can be seen in Figs. 29 and 30 which show a cross sectional view of the spline 805 of one of the inner tube member 807 engaging with the spline 806 of its respective collar 802. Fig. 29 shows the arrangement under no rotational load, whereas Fig. 30 shows the arrangement wherein a rotational load is applied.

The rods 820 are interspersed among the teeth of the spline 805, 806 and are provided spaced apart from each other at regular circumferential intervals, although irregular intervals are also envisaged. The rods 820 are located, via interference fit, in pockets 822, 821 provided in both the interior surface of the collar 802 and on the exterior surface of the inner tubular member 807. The pocket 821 in the collar 802 is sized so as to receive, over half the diameter of the rods 820 as indicated by arrow F. When no rotational load is applied, the rods 820 serve to space apart the spline 805 of the collar and the spline 806 of the inner tubular member 807 such that the teeth of the opposing splines do not contact each other, thereby ensuring a gap G is maintained between these surfaces during telescoping of the collar 802 and of the inner tubular member 807.

When a rotational load is applied, as can be seen in Fig. 30, the rods 820 become compressed as shown by arrow H, and the mating surfaces of the splines engage each other. Thus, the flexibility of the rods 820 removes backlash from the system.

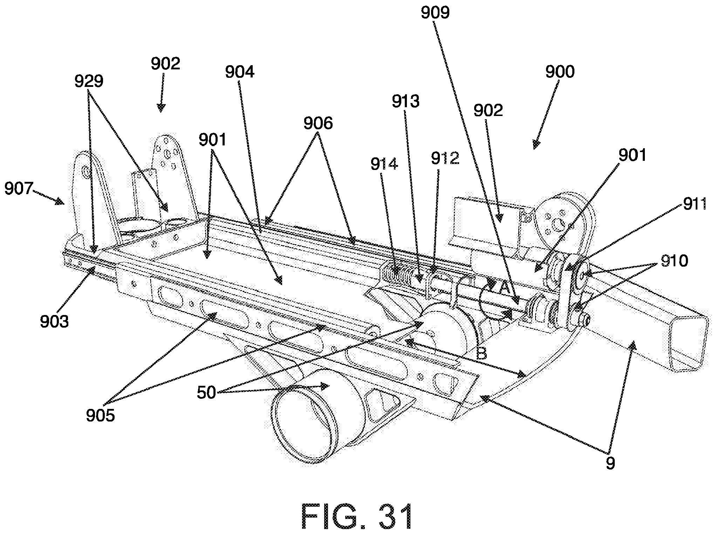

Turning now to Fig. 31, a second alternative front chassis extension mechanism 900 is show in perspective cutaway view. The second alternative front chassis extension mechanism 900 can be used in substitution to that of either Fig. 9 or Fig. 24 without significant modification to the mobility device of Fig. 1.

The second alternative front chassis extension mechanism 900 is electrically operated and is driven by an electric motor 901 thereby enabling the front chassis to be extended and retracted remotely. Thus, in order to operate the mechanism, the user is not required to bend or stoop and, as such, the second alternative front chassis extension mechanism 900 is highly advantageous for those with limited mobility.

The front chassis 902 comprises a pair of left 903 and right 904 inner rails slidably engaging respective left 905 and right 906 outer rails provided on left and right sides respectively of the front chassis 902 for enabling the front chassis 902 to slidably extend, to thereby reveal internal compartment or tray 908 and to thereby also extend the wheelbase of the device. The inner rails are fixedly connected to the front of the front chassis member 902 (i.e. the portion which slidably extends) which comprises the front wheel assembly and chassis node 907 and the outer rails are fixedly connected to the rear of the front chassis member 902 (or outer rear body 902), the rear being fixedly attached to the cross member 83 by chassis swivel brackets or chassis clamps 50.

The electric motor 901 of front chassis extension mechanism 900, fixedly attached to the outer rear body of the front chassis 902, drives a leadscrew 909 by geared toothed pulleys 910 and a belt 911 coupled to the pulleys 910, the pulleys being provided on the output shaft of the electric motor 901 and on a distal end of the leadscrew 909. Thus rotation of the output shaft of the electric motor causes leadscrew 909 to rotate, the gearing being determined by the relative diameters of the pulleys 909.

A leadscrew nut mounting assembly 912 is fixedly attached to the front 911 of the front chassis member 911 (or tray 911). The leadscrew nut mounting assembly 912 comprises a leadscrew nut 913 which is held within the leadscrew nut mounting assembly 912 such that it is prevented from rotating. The leadscrew nut 913 engages the thread of the leadscrew 909, such that when the leadscrew 909 is rotated by the electric motor, the nut 913 travels along the leadscrew 909, thereby extending or retracting the tray 908, depending on the direction of rotation of the output shaft of the electric motor 901 and thereby of the leadscrew 909.

The leadscrew nut mounting assembly 912 further comprises a spring damper 914 for cushioning the tray 908 from frontal impact. The spring damper 914 comprising a spring provided behind the leadscrew nut 913 such that when the tray 911 is struck from the front, the spring compresses against the leadscrew nut 914.

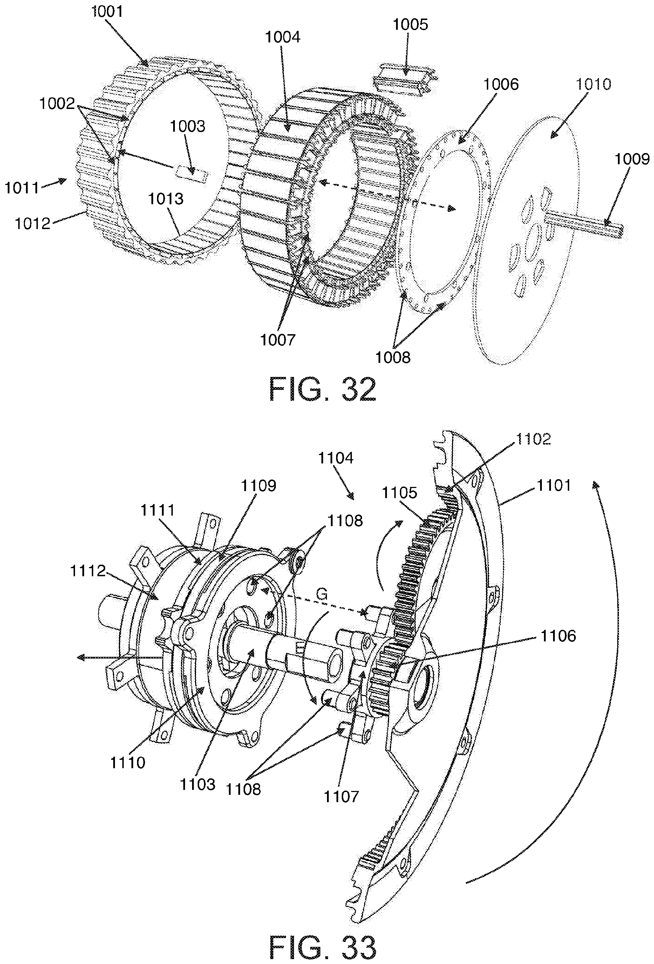

An in-wheel electric motor 1000 is shown in Fig. 32. The in-wheel electric motor 1000 of Fig. 32 performs and functions better than known electric motors, while enabling the motors to be manufactured and serviced in a much more cost effective manner than existing electric motors. As shown in Fig. 32, the stator comprises a plurality of segments placed side by side and arranged circumferentially around the stator, each segment comprising a cartridge of copper windings. Known electric motors comprise a stator which is a single part, comprising a continuous winding of copper coil which is wound by hand and is very labour intensive, while also introducing variation and uncertainty in the pattern of the winding from motor to motor, thereby not only reducing the performance of each motor but also resulting in motors which vary in performance from motor to motor.

The motor 1000 comprises a rotor 1001 which itself comprises an annular ring 1011 with an outer circumferential surface 1012 and an inner circumferential surface 1013. Compartments, or pockets, 1002 for receiving magnets 1003 are provided on the inner circumferential surface 1013 of the annular ring 1012. In the example shown, a single magnet 1003 is held in each pocket 1002, however examples wherein each pocket 1002 comprise a plurality of magnets 1003 are also envisaged. Thus, the pockets 1002 enable the magnets to be more securely retained and safely held within the pockets rather than being exposed as in other known motors in which the magnets are simply bonded to the inner circumferential surface.

Each cartridge 1003 comprises an individually wound continuous winding of copper wire, wound around a central hub and arranged such that both ends of each winding of copper wire of each segment face the same side of the annular ring formed by the circular arrangement of segments. The cartridges are held in place in a circle by fastening means comprising tabs 1007 which are provided on each cartridge 1005 which engage with corresponding apertures 1008 arranged radially in the planar face of a stator locking ring 1006 comprising an annular plate. Locking ring 1006 is then clipped on and a stator PCB 1010 is attached to the side, thereby electrically connecting the ends of the windings of all of the segments. An electrical cable 1009 provides power to the windings of the motor 1000.

An internal electromagnetic braking system is shown in Fig. 33. The electromagnetic braking system provides "fail safe" braking in the event of power failure to the device such that, when power is not supplied to the motor, the braking system engages. The present system also advantageously serves as an automatic handbrake when the throttle is released when the mobility device is going uphill or downhill or traversing any gradient. The braking system is located on the axle within the stator of the motor and comprises a geared planetary or epicyclic drive, driven by the outer hub of the wheel, to increase the power of the braking. Furthermore the friction disc floats and is drive by a pinion drive assembly located on a sun wheel gear, which transfers the drive.

An outer wheel hub 1101 is configured to rotate on axle 1103. The braking system comprises a planetary gear system 1104, or epicyclic gear system, comprising an outer ring gear 1102, or carrier gear 1102, formed within the outer wheel hub 1101, at least one planet gear 1105 and a central sun gear 1106 freely rotatable about the axle 1103. When the mobility device is in motion, wheel hub 1101 rotates, thereby rotating planet gear 1105, which thereby causes central sun gear 1106 to rotate.

Sun gear 1106 is connected to a pinion drive assembly 1107 comprising a plurality of axially extending pins 1108, arranged radially spaced from each other in a generally circular arrangement. Each pin engages corresponding apertures 1108 providing in a friction disc 1109 (which may also be referred to as a friction member or a friction plate), thereby rotatably coupling the friction disc with the planetary gear system 1104 and thereby with the wheel hub 1101. Friction disc 1109 freely floats between a brake reaction plate 1110 (which may also be referred to as a brake reaction member or brake reaction disc) and a spring assisted clapper plate 1111 (which may also be referred to as a compression member or a compression plate).

In the example shown, the planetary gear system provides a gear ratio of 5:1, thereby increasing the rotational speed of friction disc 1109 with respect to the outer wheel hub 1101, thereby reducing the torque and spring power required to slow the momentum of the friction disc and lock the wheel. Although in the example shown, the gear ratio is 5:1 any other suitable gear ratio is envisaged, such as 2:1, 3:1, 4:1, 6:1 etc. or anywhere between.

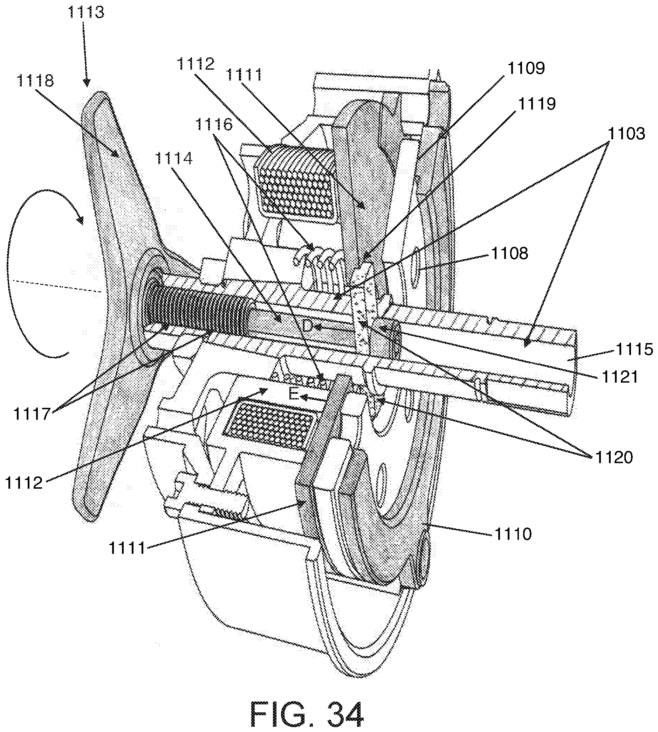

Components of the electromagnetic spring braking system are shown in perspective cutaway view in Fig. 34 when power is not being supplied to the coil and the braking system is engaged. The brake reaction plate 1110, friction disc 1109 and clapper plate 1111 are arranged concentric with and about the axle 1103. A spring 1116 substantially coaxially aligned with axle 1103 pushes against clapper plate 111, providing a longitudinal force along the axis of the axle 1103, and compresses friction disc 1109 against the brake reaction plate 1110 to frictionally engage the friction disc 1109 with the brake reaction plate 1110 to provide a braking force.

A coil assembly 1112, which may or may not be the coil assembly of the wheel motor 1000 shown in Fig. 32, is arranged co-axially about the axle 1103, on the opposite side of the clapper plate 1111 to the friction disc 1109. When electrical power is applied to the coil 1112 (e.g. through the throttle of the mobility device being activated in a powered configuration of the mobility device), the coil 1112 magnetically attracts the clapper plate 1111, overcoming the compressive force provided by the spring 1116, thereby causing the clapper plate 1111 to move axially, away from the friction disc 1109 and enabling the friction disc 1109 to frictionally disengage from the reaction plate 1110 and to freely rotate therebetween, thereby releasing the braking system.

So that the wheels can be unlocked when the device is unpowered, a manual brake release mechanism 1113 may optionally be provided. The manual brake release mechanism enables the wheels to freely rotate when the mobility device is, for example, in a walker configuration. The manual brake release mechanism 1113 comprises a rod 1114 located within and longitudinally aligned with a central bore 1115 of the axle 1103 such that the rod 1114 is able to move longitudinally along the central bore 1115. The rod 1114 comprises a thread 1117 along a distal portion thereof which engages with a thread provided within the central bore 1115 of the axle 1103. The rod 1114 further comprises a handle 1118 at the distal end thereof, enabling the rod to be screwed into and out of the wheel axle 1103, the handle 1118 abutting against the end of the wheel axle 1103 when the rod 1114 is fully inserted. Thus, rotation of the handle 1118 causes the rod 1114 to move axially within the central bore 1115.

At an opposing end of the rod 1114, a clapper plate puller 1120, in the example shown in the form of a tab, is provided which engages with a recess 1119 provided within the clapper plate 1111. The tab is free to rotate about the rod 1114 but its position on the rod 1114 is fixed by end cap, bolt or shoulder 1121. Thus, when the handle 1118 is rotated such that the rod is screwed in the direction out of the bore 1115, the puller 1120 engages with the clapper plate 1111 and pulls the clapper plate away from the friction disc 1109, compressing the spring 1116. A slot is provided in the axle 1103 to enable the puller tab to move therealong. Thus handle 1118 disengages the frictional coupling between the clapper plate 1111, the friction disc 1109 and the reaction plate 1110 to release the brake and enable the friction disc 1109, and thereby wheel hub 1101, to rotate freely.

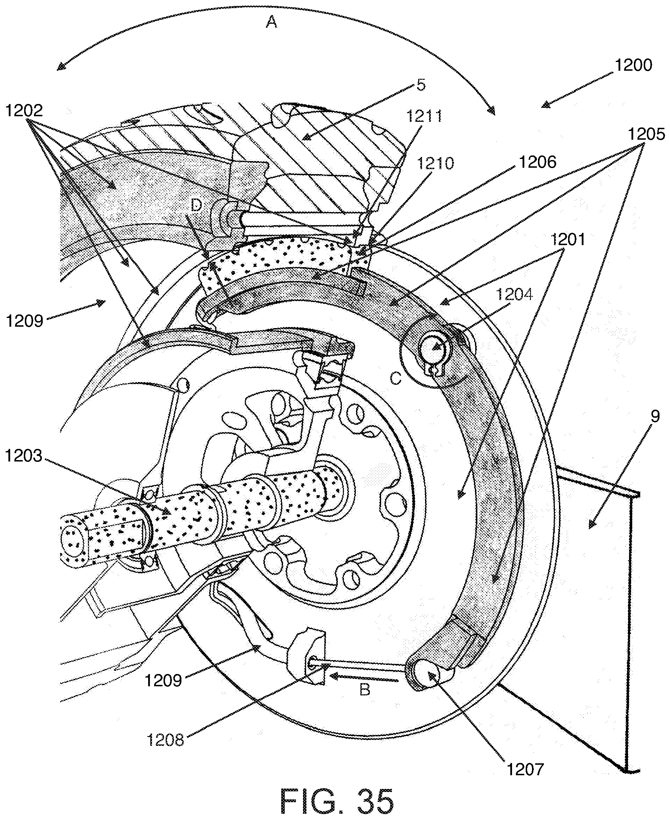

In order to brake the mobility device, for example when the device is in an unpowered configuration or mode and the wheels are free to rotate, e.g. as a result of the manual brake release mechanism being activate to disengage the friction plate 1109 from the reaction plate 1110, a manual cable brake and handbrake mechanism may optionally be provided, as shown in Fig. 35.

Such a manual brake mechanism, particularly when provided in respect of both rear wheels, is highly advantageous in a walker mode or configuration of the mobility device as it allows for assisted turning of the vehicle if a brake is applied on only one side and enables the device to be slowed if both brakes are applied simultaneously. The manual brake mechanism can also lock both wheels to serve as a handbrake when parked. The manual brake mechanism is actuated by brake actuation levers 28 provided on each of the handles 27 of the support arms 23, although they may alternatively be provided on any other suitable location of the mobility device. The brake actuation levers 28 may be incrementally actuated to provide incremental braking, or alternatively they may be pushed down to lock the brake firmly on in order to provide a handbrake function.

The manual brake mechanism 1200 comprises a plate 1201 affixed to a rear chassis member 9 of the mobility device. The plate 1201 is arranged within the inner annular space of the rear wheel 4 and the rear wheel casing assembly 1202, although in other examples the plate 1201 may be arranged adjacent to the inner annular space of the rear wheel 4 and the rear wheel casing assembly 1202. In the example shown, the plate 1201 is substantially circular, although any suitable shape may be used. A rear wheel axle 1203 extends perpendicularly from the plane of the planar face of the plate 1201, away from the rear chassis member 9, and from the centre of the plate 1201 such that the axle 1203 and the plate 1201 are generally co-axial. The axle 1203 may be affixed to plate 1201 or it may extend through a through-bore provided in the plate 1201. The axle 1203, plate 1201 and rear chassis member 9 are rotationally locked together such that they do not rotate with respect to each other. In motion, the rear wheel 4 and the rear wheel casing assembly 1202 rotate about, and with respect to, axle 1203.

A brake lever arm 1205 is pivotally connected to one side of the planar plate 1201 by pivotable connection 1204, which in the example shown comprises a spigot 1204. The brake lever arm 1205 is arcuate in shape and generally concentric with the axle 1203. The brake lever arm 1205 comprises a friction pad 1206 at one end thereof and a slot 1207 for receiving a distal end 1207 of a brake cable 1208 for actuating the manual brake mechanism 1200. In the example shown, the friction pad 1206 is a rubber friction pad although any other suitable friction material may be used. The pivotable connection 1204 is provided on the brake lever arm 1205 closer to the friction pad 1206 than the slot 1207 so as to act as a fulcrum of a lever and provide mechanical advantage to the friction pad 1206 for increasing the braking force applied through the friction pad 1206.

The brake lever arm 1205 is configured such that the friction pad 1206 is configured to engage an inner surface 1210 of the wheel hub 1209 when the brake 1200 is actuated, thus using the inner surface 1210 of the wheel hub 1209 as a braking surface. When a user actuates the brake actuation lever 28, the inner cable of the brake cable 1208 is pulled within the outer sheath 1209 of the brake cable 1208, as indicated by arrow B, thus pulling on the end of the brake lever arm 1205, causing the lever arm 1205 to rotate about pivotable connection 1204, as indicated by arrow C, thereby causing the friction pad 1206 to engage the inner surface 1210 of the wheel hub 1209, thus applying a braking force and slowing the mobility aid. In the example shown, the friction pad 1206 engages an inner circumferential surface of the wheel hub 1209, although other inner surfaces of the wheel hub 1209 may also be used, for example the friction pad 1206 may also engage an inner rim provided on the wheel hub, such as rim 1211.

In examples of the personal mobility device, as well as in other vehicles, it is highly advantageous, that the personal mobility device comprises two generally spaced-apart front wheels and that the device comprises a steering mechanism for steering both front wheels simultaneously (that is, from a single steering input) and to enable the wheels to not only caster through 360 degrees and greater, swivelling freely about their vertical axis, allowing the vehicle to be pulled or pushed in any direction by an external operator during manual modes or configurations. It is also highly advantageous that the vehicle or device is also able to be easily and quickly converted to be steered by the steering input of an occupant by a steering control comprising a pivoting tiller, or steering wheel and steering linkages.

Other known steering mechanisms have attempted to solve the complex issues of engaging and disengaging castering wheels from common steering linkages, but none of these solutions are simple to operate, or able to be centrally or remotely operated, or are able to alternate between an engaged and disengaged configuration by a single movement or by a procedure which would routinely be undertaken by the user prior to the use of the vehicle or device. For example, US6302421 B1 suggests manually locating and inserting small pins into each individual pivot above the wheel spindles, however this is fiddly, time consuming and also involves bending, stooping and dextrous hand movement, and requires that each wheel be converted between engaged and disengaged configurations independently.

The present invention solves, or at least alleviates at least to a certain extent, the above problems of the prior art.

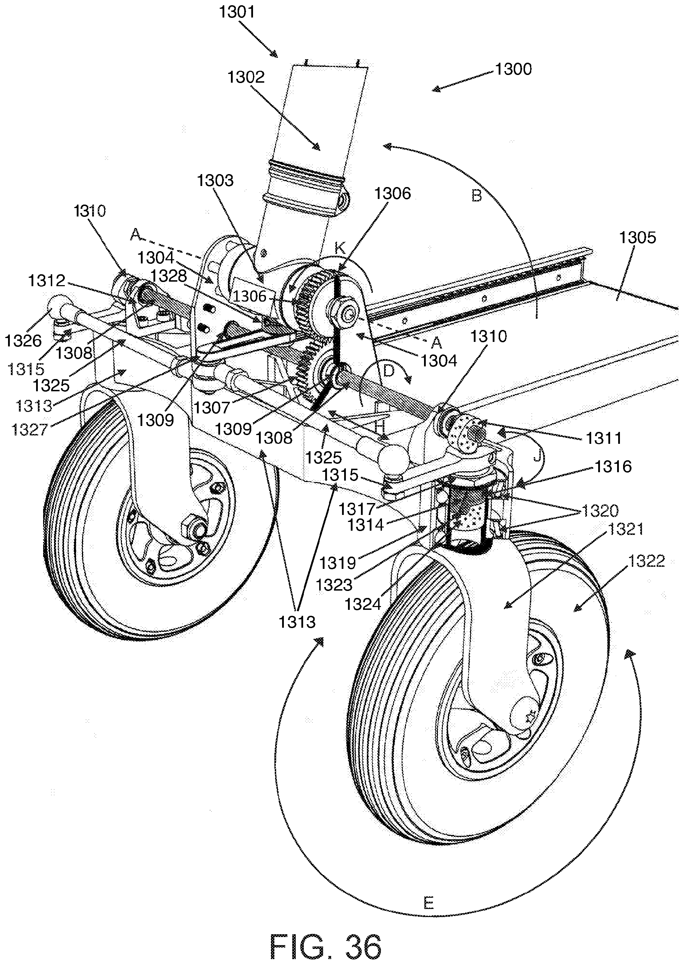

With reference to Fig. 36, the front of a second alternative steering engagement mechanism 1300 is shown in perspective view, with parts thereof shown in section view. The second alternative steering engagement mechanism 1300 can be used in substitution to that of Fig. 12 or Fig. 18 and Fig. 19, without significant modification to the mobility device of Fig. 1 and without departing from the scope of the present invention.

Steering tiller 1301 comprises a pivotable steering arm 1302 connected to a steering node 1303, or rotatably coupling, rotatably mounted to chassis node 1304. The steering tiller arm 1302 is pivotable about axis A and, in order to engage the steering mechanism 1300, the steering tiller arm 1302 is raised, or rotated upwards away from the front chassis member 1305 to an engaged position as indicated by arrow B.

A steering tiller gear wheel 1306 is rotatably coupled to the steering tiller arm 1302 such that the steering tiller gear wheel 1306 is configured to rotate upon rotation of the steering tiller arm 1302 about axis A. In some examples, the steering tiller gearwheel 1306 may be integrally formed with the steering tiller node 1303 or steering tiller arm 1302. Steering tiller gear wheel 1306 engages chassis gear wheel 1307 such that rotation of the steering tiller gear wheel 1306 causes rotation of the chassis gear wheel 1307, as shown by arrow D. Chassis gear wheel 1307 is affixed partway therealong to steering engagement shaft 1308, which rotates within steering engagement shaft node bushes 1309 which are mounted on either side of chassis node 1303, the shaft 1308 being supported at both distal ends thereof by steering bearing mounts 1310, the steering bearing mounts 1310 being affixed to a front chassis cross member 1313. Thus, rotation of the steering tiller arm 1302 is transferred to both ends of the steering engagement shaft 1308.

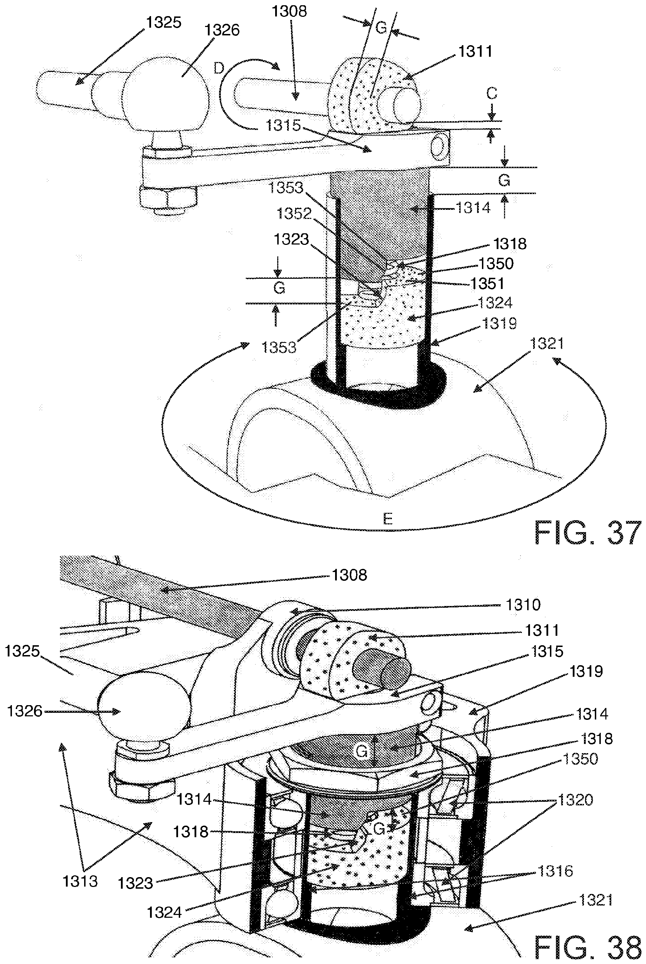

The steering engagement shaft 1308 comprises a cam lobe 1311, 1312 at both ends thereof, the cam lobes 1311, 1312 being rotatably affixed to the shaft 1308 such that rotation of the shaft 1308 causes rotation of the cam lobes 1311, 1312. The cam surface of cam lobes 1311, 1312 is configured to slidingly engage a respective steering arm 1315 and, as such, steering arm 1315 provided at both ends of the steering engaging shaft 1308 act as a cam follower. In Fig. 36, the steering engagement mechanism is shown in a steering engaged configuration and, as such, the cam lobes are rotated to their highest profile such that they depress the steering arms 1315 more than when the cam lobes 1311, 1312 are rotated to their shallowest profile in a steering disengaged configuration. The steering arms 1315 are affixed to a slidable upper clutch cup 1314 which is configured to slide axially within hollow wheel pivot shaft 1316. A spring 1318 (see Figs. 37 and 38) biases each upper clutch cup 1314 against their respective cam lobes 1311, 1312 and, in the steering disengaged configuration, spaces apart the upper clutch cups 1314 from respective lower clutch cups 1324, also provided within hollow wheel pivot shaft 1316, below their respective upper clutch cups 1314. A threaded upper wheel shaft lock nut 1317 threads onto the end of the wheel pivot shaft 1316 to axially locate the shaft within the wheel pivot shaft housing 1319 by acting as a shoulder.

Lower clutch cups 1324 are rotationally coupled or attached to respective pivot shafts 1316. Thus upper clutch cup 1314 is free to slide axially within, and rotate about the longitudinal axis of, the hollow of the wheel pivot shaft 1316 whereas the lower clutch cup 1324 is rotationally and axially locked, restricted or coupled to the wheel pivot shaft 1316. Wheel pivot shaft 1316 is configured to rotate about its longitudinal axis within wheel pivot shaft housing 1319, which is affixed to the front chassis member cross member 1313, by bearings 1320. The wheel pivot shaft 1316 is rotationally coupled or attached to a respective caster wheel mount 1321 to which a respective wheel 1322 is rotatably mounted.

Thus, in the steering engaged position of Fig. 36, the cam lobes 1311, 1312 depress their respective steering arms 1315, which in turn depress their respective upper clutch cups 1314, to which the steering arms 1315 are attached, along the inside of hollow wheel pivot shaft 1316 such that each upper clutch cup 1314 engages with its respective lower clutch cup 1324. Upper clutch cup 1314 and lower clutch cup 1324 comprise complementary rotation locking means 1323 configured to rotationally lock the upper clutch cup 1314 to the lower clutch cup 1324 when the upper clutch cup 1314 and lower clutch cup 1324 are engaged. In the example shown, the rotation locking means 1323 comprises a tapered shoulder or lip 1323, but any other suitable rotational locking means may be provided, such as interlocking teeth.

The lower clutch cups 1324 and the upper clutch cups 1314 are configured such that, upon engagement of the upper clutch cup 1314 with the lower clutch cup 1324, the lower clutch cup is configured to rotate with respect to the upper clutch cup and to align therewith. As such, the lower clutch cups 1324 comprise an axially projecting nose, tip or leading edge 1350 provided on an upper surface 1351 thereof and the upper clutch cup 1314 comprises axially extending inclined engagement surfaces 1352, inclined in opposing directions to each other, on a lower or underside surface 1353 thereof for receiving the axially extending tip of the lower clutch cup 1324 such that the nose 1350 of the lower clutch cup 1324 is configured to slide along the inclined engagement surfaces 1352 until it engages and locates within a recess or apex provided between the inclined surface (and generally towards which the inclined surfaces are inclined). In some examples, the engagement surfaces may in combination comprise about 240 degrees, or about two thirds, of the circumference of the lower surface of the upper clutch cup 1314, thus the tip 1350 of the lower clutch cup will engage with the engagement surfaces 1352 so long as the front wheel 1322, and thus the lower clutch cup 1324, is within about 120 degrees out of alignment with the upper clutch cup 1314 on either side. The upper 1314 and lower 1324 clutch cups and the arrangement of the engagement surfaces 1353 is therefore such that, when the steering mechanism is in a neutral or forward-facing position, the front wheels 1322 will self-align with the forward direction of the device upon engagement of the steering mechanism 1300 provided that the front wheels are within 120 degrees of the forward direction. The axially extending locking recess may comprise about 120 degrees, or about one third, of the circumference of the upper surface of the lower clutch cup 1324. In some examples, the upper surface of the lower clutch cups 1324 is shaped so as to correspond with the shape of the lower surface of the upper clutch cups 1314.

The tapered shoulder 1323 helps to align both of the front wheels 1322 pointing straight during the rotation of the cams, and once the upper clutch cup 1314 and the lower clutch cup 1324 are engaged, enable the front wheels 1322 to be steered by rotatable steering input members 1325, or steering input rods 1325, attached to a distal end of each steering arm 1315, for example by ball and socket joint 1326 although other suitable means may be used. Thus, when the steering engagement mechanism is in the engaged configuration of Fig. 36, the front wheels 1322 can be steered by moving steering input rods 1325 left and right, as shown by arrow H, thereby causing the steering arms 1325 to rotate, as shown by arrow J, which then causes the clutch cups 1314, 1324 to rotate within the shaft 1316, thereby causing caster mount 1321 to rotate and wheel 1322 to steer.

In order to move the steering input rods 1325, connected to respective steering input arms 1315, left and right, a steering pivot arm 1327 is provided which is connected to both steering input rods 1325 at a distal end of the rods 1325 and of the steering pivot arm 1327. Steering pivot arm 1327 is rotatably coupled to a rotatable shaft within the steering tiller arm 1302 by a steering universal joint 1328. The rotatable shaft is attached to a steering input means, such as a suitable handlebar, tiller or wheel and connected in any suitable manner as would be understood by a person skilled in the art.

The second alternative steering engagement mechanism 1300 is shown in the disengaged configuration in Figs. 37 and 38. Cam lobe 1311 has been rotated, as shown by arrow D, by rotation of the steering tiller arm 1302 towards the front chassis 1313, such that the shallowest portion of the cam profile engages the upper surface steering arm 1315, as shown by arrow C, allowing the upper clutch cup 1314 to be axially displaced away from the lower clutch cup 1324 as indicated by arrow G (by an amount determined by the cam profile) by the biasing force provided by spring 1318, thereby disengaging and rotationally decoupling the upper clutch cup 1314 from the lower clutch cup 1324. Thus, in the steering disengaged configuration, the upper and lower clutch cups 1314, 1324 are rotationally decoupled and allow the caster mount 1321, which is attached to pivot shaft 1316, the pivot shaft 1316 being attached to the lower clutch cup 1324, to swivel freely in relation to the upper cup 17 and the steering input means, as shown by arrow E.

When the personal mobility device is used in a mode of configuration in which front wheels are free to caster, the front wheels are free to swivel fully around, i.e. 360 degrees or greater, so that after use, the caster wheels can potentially be left at any angle. When the steering is engaged for manual steering, e.g. by steering tiller arm 1302, it is highly advantageous for both front wheels (in examples wherein the device comprises two castering front wheels, such as the example shown in Fig. 36) to face forward in the correct position, with the castor trail to the rear, and with both wheels being generally parallel to each other, in order to enable safe use of the device.

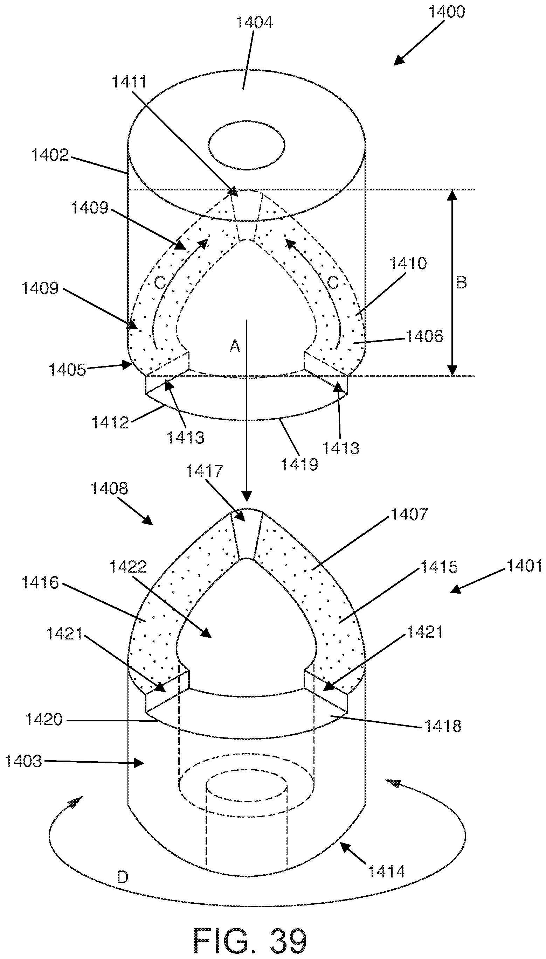

As such, Fig. 39 illustrates an alternative upper clutch cup 1400 and corresponding lower clutch cup 1401 for use with the second alternative steering engagement mechanism, shown in Fig. 36, which facilitate the rotation of the castering wheels such that, when during engagement of the steering engagement mechanism, the engagement of the cups 1400, 1401 causes the front wheel to rotate to the correct, forward-facing position, ready to be steered by steering tiller 1301. These alternative clutch cups 1400, 1401 may be used in substitution to those shown in Fig. 36 without modification to the steering engagement mechanism thereof.

With the alternative clutch cups 1400, 1401, in order to enable the engagement process, the wheels must be sufficiently rotated that they are in the "castor trail" position, or at least 90 degrees in relation to the side of the vehicle. In order to position the wheels in the required position, the device is pushed forward just enough to "trail" the castor wheels, which, in practice, only requires the device to be pushed forwards a couple of centimetres as castors naturally trail.

The upper clutch cup 1400 and the lower clutch cup 1401 both comprise a cylindrical circumferential outer surface 1402, 1403 for enabling the cups to be received in the hollow pivot shaft 1316.

The upper clutch cup 1400 comprises a generally planar upper surface 1404 against which the steering arm 1315 engages, with a circular aperture provided therein, generally concentric with the cylindrical outer surface 1402. The underside surface 1405 comprises an engagement surface 1406 configured to receive and engage with an engagement surface 1407 provided on an upper surface of the lower clutch cup 1401. The engagement surface 1406 of the upper clutch cup 1400, show in dotted line, comprises two inclined surfaces 1409, 1410 which are inclined in an axial direction of the cup, towards the upper surface 1404, and are inclined towards each other, meeting at apex 1411 (which may also be referred to as leading edge stop 1411). Apex 1411 is substantially rounded. A rotation locking means 1412 is provided on the underside surface 1405 of the upper clutch cup 1400. The rotation locking means comprises a locking member, which in the example shown is an axially extending protrusion 1419 comprising a locking surface or wall 1413 provided on each side thereof.

An upper surface 1408 of the lower clutch cup 1401 comprises an engagement surface 1407 shaped so as to correspond with the engagement surface 1406 of the upper clutch cup 1400. As such, engagement surface 1407 comprises two generally inclined and axially extending surfaces 1415, 1416, extending away from an underside surface 1414 of the lower clutch cup 1401, wherein the inclined surfaces 1415, 1416 are inclined towards each other, meeting at apex or nose 1417, which may also be referred to as leading edge 1417. Generally diametrically opposed to the nose 1417, the upper surface 1408 comprises a rotation locking means 1418, corresponding to the rotation locking means 1412 of the upper clutch cup 1400. The rotation locking means 1418 of the lower clutch cup 1401 comprises a complementary locking member to that of the upper clutch cup 1400, the locking member of the lower clutch cup 1401 comprising an axially extending recess 1420 shaped so as to receive the axially extending protrusion 1419 of the upper clutch cup 1400. The axially extending recess 1420 comprises a locking surface or wall 1421 provided on each side thereof, configured to engage with the locking surface or wall 1413 of the upper clutch cup 1400, such that when the upper clutch cup 1400 and the lower clutch cup 1401 are engaged, the upper clutch cup 1400 is rotationally locked to the lower clutch cup 1401.

During engagement of the steering mechanism 1300, and with the wheels generally in the correct position, rotation of the cam lobe 1311, 1312, causes the upper clutch cup 1400 to slide axially within the pivot shaft 1316 towards lower clutch cup 1401, against the biasing force of the spring 1318, as indicated by arrow A. Rounded nose 1417 engages engagement surface 1406 and, due to the compressive force of the cam, provided by the rotation of the steering tiller arm 1301, the nose 1417 slides therealong as indicated by arrow C, towards apex 1411, until it is generally received by and located within apex 1411. The inclination of the inclined surfaces 1409, 1410 of the engagement surface 1406 of the upper clutch cup 1400 ensures that this happens irrespective of wherever the nose 1417 engages the engagement surface 1406, as indicated by arrow B. Thus the inclined surfaces 1409, 1410 serve as a ramp.

The sliding of the nose 1417 along the inclined surfaces 1409, 1410 has the effect of causing the lower clutch cup 1401 to rotate, as indicated by arrow D, enabling the upper clutch cup 1400 and lower clutch cup 1401 to fully engage and for the rotation locking members thereof to engage such that the axially extending protrusion 1419 of the upper clutch cup 1400 engages with and is received by the axially extending recess 1420 of the lower clutch cup 1401. When engaged, the locking surface 1413 of the upper clutch cup 1400 engages the locking surface 1421 of the lower clutch cup 1401, thereby preventing rotation of the lower clutch cup 1401 with respect to the upper clutch cup 1400 and rotationally locking the two together. When the upper clutch cup 1400 and the lower clutch cup 1401 are fully engaged in this way, the wheel 1322, which is rotationally coupled to the lower clutch cup 1401, is corrected rotated and positioned to for manual steering, e.g. via steering tiller 1301.

As described in respect of Fig. 36, when the steering tiller is lowered, the cam lobe 1311, 1312 rotates such that the shallowest portion of the cam profile engages the steering arm 1315, thereby enabling spring 1318, located within a central aperture 1422 of the upper 1400 and lower 1401 clutch cups, to move the upper clutch cup 1400 in an axial direction, away from the lower clutch cup 1401 such that the upper clutch cup 1400 and the lower clutch cup 1401 are spaced apart and disengaged, thereby enabling the lower clutch cup 1401 to rotationally decouple with the upper clutch cup 1400 and to freely rotate, and to rotate about a full 360 degrees or even greater, with respect to the upper clutch cup 1400, enabling the wheel 1322 to freely castor. All of the clutch cups described throughout the present disclosure may be referred to as rotation coupling members or rotation locking member where they rotationally couple, or rotationally lock, one clutch member to another. It is envisaged that a person skilled in the art may make various changes to the embodiments specifically described above without departing from the scope of the invention as defined by the appended claims.

## Claims

1. A steering engagement mechanism for a vehicle (100) comprising at least one wheel (29) having a steering axis and the vehicle comprising a steering input for steering the vehicle, the steering engagement mechanism comprising a steering engaged configuration for enabling the at least one wheel to be steered and a steering disengaged configuration for enabling the at least one wheel to castor, the steering engagement mechanism being configured to be convertible between the steering engaged configuration and the steering disengaged configuration and wherein the steering engagement mechanism is configured such that, when the steering engagement mechanism is converted from the steering disengaged configuration to the steering engaged configuration, the at least one wheel is caused to rotate about the steering axis of the at least one wheel so as to align with the steering input; **characterised in that**
the steering engagement mechanism is configured to be converted from the steering disengaged configuration to the steering engaged configuration upon deployment, such as by rotation, of a steering tiller (201).

2. The steering engagement mechanism of Claim 1, wherein the steering engagement mechanism comprises wheel coupling means (208) for rotationally coupling with the at least one wheel, and wherein the steering engagement mechanism further comprises steering coupling means (211) for coupling with the steering input of the vehicle, the steering engagement mechanism being configured such that, when the steering engagement mechanism is converted from the steering disengaged configuration to the steering engaged configuration, the wheel coupling means is configured to align with the steering coupling means.

3. The steering engagement mechanism of Claim 1 or Claim 2, wherein the steering input has an associated direction of travel of the vehicle (100) and wherein, when the steering engagement mechanism is converted from the steering disengaged configuration to the steering engaged configuration, the at least one wheel is caused to rotate about the steering axis so as to align with the associated direction of travel of the steering input.

4. The steering engagement mechanism of any one of Claims 1 to 3, wherein, in the steering engaged configuration, the at least one wheel (29) is rotationally coupled to the steering input, and optionally the steering engagement mechanism is configured to rotationally lock the at least one wheel (29) to the steering input.

5. The steering engagement mechanism of any one of Claims 1 to 4, wherein the at least one wheel (29) comprises a castor wheel.

6. The steering engagement mechanism of any one of Claims 1 to 5, wherein the steering input is a handlebar or steering wheel.

7. The steering engagement mechanism of any one of Claims 1 to 6, wherein the steering engagement mechanism comprises an upper rotation coupling member (209) and a lower rotation coupling member (208), wherein the upper rotation coupling member is configured to engage with the lower rotation coupling member such that the lower rotation coupling member is rotationally coupled to the upper rotation coupling member when the upper rotation coupling member is engaged with the lower rotation coupling member and wherein the lower rotation coupling member is rotationally decoupled with the upper rotation coupling member when the upper rotation coupling member is disengaged with the lower rotation coupling member.

8. The steering engagement mechanism of Claim 7, wherein the upper (209) and lower (208) rotation couplings are configured such that, when the upper and lower rotation coupling members are engaged, the lower rotation coupling is caused to rotate with respect to the upper rotation coupling to align therewith such that when the upper (209) and lower (208) rotation coupling members are engaged and aligned, the upper and lower rotation coupling members are rotationally locked with respect to each other.

9. The steering engagement mechanism of any one of Claims 7 to 8, wherein, the upper (209) and lower (208) rotation coupling members comprise complementary locking means (212) for rotationally locking the upper and lower rotation coupling members together when the upper and lower rotation coupling members are engaged, and wherein the locking means (212) comprises an axially extending projection provided on an underside surface of the upper rotation coupling member (209) and a corresponding axially extending recess (212) provided on an upper surface of the lower rotation coupling member (208) configured to engage with the axially extending projection of the upper rotation coupling member.

10. The steering engagement mechanism of any one of Claims 7 to 9, wherein the lower rotation coupling member (208) is configured to be rotationally coupled to the at least one wheel (29) of the vehicle.

11. The steering engagement mechanism of any one of Claims 7 to 10, wherein the upper (209) and lower (208) rotation coupling members are configured to be in the engaged configuration of the rotation coupling members when the steering engagement mechanism is in the engaged configuration of the steering engagement mechanism and wherein the upper and lower rotation coupling member are configured to be in the disengaged configuration of the rotation coupling members when the steering engagement mechanism is in the disengaged configuration of the steering engagement mechanism.

12. The steering engagement mechanism of any of Claims 7 to 11, wherein the steering engagement mechanism further comprises biasing means (210) configured to bias the upper (209) and lower (208) rotation coupling members in the disengaged configuration.

13. The steering engagement mechanism of any one of Claims 7 to 12, wherein the upper rotation coupling member (209) is rotationally coupled to the steering input of the vehicle (100), and optionally wherein the upper rotation coupling member (209) is rotationally coupled to a steering arm and wherein the steering arm is rotationally coupled to a steering linkage of the steering input.

14. A vehicle (100) comprising the steering engagement mechanism of any one of Claims 1 to 13, wherein the vehicle comprises the at least one wheel (29) and the steering input (201) for steering the vehicle.

15. The steering engagement mechanism of any one of Claims 1 to 13 or the vehicle of Claim 14, wherein the vehicle (100) is a wheeled personal mobility device.

## Patentansprüche

1. Lenkeingriffsmechanismus für ein Fahrzeug (100), umfassend zumindest ein Rad (29) mit einer Lenkachse und wobei das Fahrzeug eine Lenkeingabe zum Lenken des Fahrzeugs umfasst, wobei der Lenkeingriffsmechanismus eine lenkungseingegriffene Konfiguration, um dem zumindest einen Rad zu ermöglichen, gelenkt zu werden, und eine lenkungsgelöste Konfiguration, um dem zumindest einen Rad zu ermöglichen, nachzulaufen, umfasst, wobei der Lenkeingriffsmechanismus dazu ausgelegt ist, zwischen der lenkungseingegriffenen Konfiguration und der lenkungsgelösten Konfiguration umwandelbar zu sein, und wobei der Lenkeingriffsmechanismus so ausgelegt ist, dass, wenn der Lenkeingriffsmechanismus von der lenkungseingegriffenen Konfiguration in die lenkungsgelöste Konfiguration umgewandelt wird, das zumindest eine Rad veranlasst wird, sich um die Lenkachse des zumindest einen Rades zu drehen, um sich auf die Lenkeingabe auszurichten; **dadurch gekennzeichnet, dass** der Lenkeingriffsmechanismus dazu ausgelegt ist, bei Einsatz, wie etwa durch Drehung, eines Lenkruders (201) von der lenkungseingegriffenen Konfiguration in die lenkungsgelöste Konfiguration umgewandelt zu werden.

2. Lenkeingriffsmechanismus nach Anspruch 1, wobei der Lenkeingriffsmechanismus ein Radkopplungsmittel (208) zum rotatorischen Koppeln mit dem zumindest einen Rad umfasst, und wobei der Lenkeingriffsmechanismus ferner ein Lenkungskopplungsmittel (211) zum Koppeln mit der Lenkeingabe des Fahrzeugs umfasst, wobei der Lenkeingriffsmechanismus so ausgelegt ist, dass, wenn der Lenkeingriffsmechanismus von der lenkungsgelösten Konfiguration in die lenkungseingegriffene Konfiguration umgewandelt wird, das Radkopplungsmittel dazu ausgelegt ist, sich auf das Lenkkopplungsmittel auszurichten.

3. Lenkeingriffsmechanismus nach Anspruch 1 oder Anspruch 2, wobei die Lenkeingabe eine zugehörige Fahrtrichtung des Fahrzeugs (100) hat und wobei, wenn der Lenkeingriffsmechanismus von der lenkungsgelösten Konfiguration in die lenkungseingegriffene Konfiguration umgewandelt wird, das zumindest eine Rad veranlasst wird, sich um die Lenkachse zu drehen, um sich auf die zugehörige Fahrtrichtung der Lenkeingabe auszurichten.

4. Lenkeingriffsmechanismus nach einem der Ansprüche 1 bis 3, wobei, in der lenkungseingegriffenen Konfiguration, das zumindest eine Rad (29) rotatorisch mit der Lenkeingabe gekoppelt ist, und wobei der Lenkeingriffsmechanismus optional dazu ausgelegt ist, das zumindest eine Rad (29) rotatorisch mit der Lenkeingabe zu verriegeln.

5. Lenkeingriffsmechanismus nach einem der Ansprüche 1 bis 4, wobei das zumindest eine Rad (29) ein Laufrad umfasst.

6. Lenkeingriffsmechanismus nach einem der Ansprüche 1 bis 5, wobei die Lenkeingabe ein Lenker oder ein Lenkrad ist.

7. Lenkeingriffsmechanismus nach einem der Ansprüche 1 bis 6, wobei der Lenkeingriffsmechanismus ein oberes Drehkopplungselement (209) und ein unteres Drehkopplungselement (208) umfasst, wobei das obere Drehkopplungselement dazu ausgelegt ist, in das untere Drehkopplungselement einzugreifen, sodass das untere Drehkopplungselement rotatorisch mit dem oberen Drehkopplungselement gekoppelt ist, wenn das obere Drehkopplungselement im Eingriff mit dem unteren Drehkopplungselement ist und wobei das untere Drehkopplungselement rotatorisch vom oberen Drehkopplungselement entkoppelt ist, wenn das obere Drehkopplungselement vom unteren Drehkopplungselement gelöst ist.

8. Lenkeingriffsmechanismus nach Anspruch 7, wobei die obere (209) und untere (208) Drehkopplung so ausgelegt sind, dass, wenn die oberen und unteren Drehkopplungselemente im Eingriff sind, die untere Drehkopplung veranlasst wird, sich bezüglich der oberen Drehkopplung zu drehen, um sich auf diese auszurichten, sodass, wenn das obere (209) und untere (208) Drehkopplungselement im Eingriff und ausgerichtet sind, das obere und untere Drehkopplungselement rotatorisch bezüglich zueinander verriegelt sind.

9. Lenkeingriffsmechanismus nach einem der Ansprüche 7 bis 8, wobei das obere (209) und das untere (208) Drehkopplungselement komplementäre Verriegelungsmittel (212) zum rotatorischen Verriegeln des oberen und unteren Drehkopplungselements miteinander umfassen, wenn das obere und das untere Drehkopplungselement im Eingriff sind, und wobei das Verriegelungsmittel (212) einen sich axial erstreckenden Vorsprung, der an der unteren Oberfläche des oberen Drehkopplungselements (209) bereitgestellt ist, und eine entsprechende sich axial erstreckende Vertiefung (212), die auf einer oberen Oberfläche des unteren Drehkopplungselements (208) bereitgestellt und dazu ausgelegt ist, in den sich radial erstreckenden Vorsprung des oberen Drehkopplungselements einzugreifen, umfasst.

10. Lenkeingriffsmechanismus nach einem der Ansprüche 7 bis 9, wobei das untere Drehkopplungselement (208) dazu ausgelegt ist, rotatorisch mit dem zumindest einen Rad (29) des Fahrzeugs gekoppelt zu werden.

11. Lenkeingriffsmechanismus nach einem der Ansprüche 7 bis 10, wobei das obere (209) und das untere (208) Drehkopplungselement dazu ausgelegt sind, in der eingegriffenen Konfiguration der Drehkopplungselemente zu sein, wenn sich der Lenkeingriffsmechanismus in der eingegriffenen Konfiguration des Lenkeingriffsmechanismus befindet und wobei das obere und das untere Drehkopplungselement dazu ausgelegt sind, in der gelösten Konfiguration der Drehkopplungselemente zu sein, wenn sich der Lenkeingriffsmechanismus in der gelösten Konfiguration des Lenkeingriffsmechanismus befindet.

12. Lenkeingriffsmechanismus nach einem der Ansprüche 7 bis 11, wobei der Lenkeingriffsmechanismus ferner ein Vorspannmittel (210) umfasst, dass dazu ausgelegt ist, das obere (209) und das untere (208) Drehkopplungselement in der gelösten Konfiguration vorzuspannen.

13. Lenkeingriffsmechanismus nach einem der Ansprüche 7 bis 12, wobei das obere Drehkopplungselement (209) rotatorisch mit der Lenkeingabe des Fahrzeugs (100) gekoppelt ist, und wobei das obere Drehkopplungselement (209) optional rotatorisch mit einem Lenkarm gekoppelt ist, und wobei der Lenkarm rotatorisch mit einem Lenkgestänge der Lenkeingabe gekoppelt ist.

14. Fahrzeug (100), umfassend den Lenkeingriffsmechanismus nach einem der Ansprüche 1 bis 13, wobei das Fahrzeug das zumindest eine Rad (29) und die Lenkeingabe (201) zum Lenken des Fahrzeugs umfasst.

15. Lenkeingriffsmechanismus nach einem der Ansprüche 1 bis 13 oder Fahrzeug nach Anspruch 14, wobei das Fahrzeug (100) eine persönliche Mobilitätsvorrichtung mit Rädern ist.

## Revendications

1. Mécanisme de mise en prise de direction pour un véhicule (100) comprenant au moins une roue (29) ayant un axe de direction et le véhicule comprenant une entrée de direction pour diriger le véhicule, le mécanisme de mise en prise de direction comprenant une configuration de direction en prise pour permettre à l'au moins une roue d'être dirigée et une configuration de direction hors prise pour permettre à l'au moins une roue de rouler, le mécanisme de mise en prise de direction étant conçu pour passer de la configuration de direction en prise à la configuration de direction hors prise et vice-versa et le mécanisme de mise en prise de direction étant conçu de sorte que, lorsque le mécanisme de mise en prise de direction passe de la configuration de direction hors prise à la configuration de direction en prise, l'au moins une roue soit amenée à tourner autour de l'axe de direction de l'au moins une roue de sorte à s'aligner avec l'entrée de direction ; **caractérisé en ce que**
le mécanisme de mise en prise de direction est conçu pour passer de la configuration de direction hors prise à la configuration de direction en prise lors du déploiement, comme par rotation, d'une barre de direction (201) .

2. Mécanisme de mise en prise de direction selon la revendication 1, le mécanisme de mise en prise de direction comprenant un moyen d'accouplement de roue (208) destiné à être accouplé en rotation avec l'au moins une roue, et le mécanisme de mise en prise de direction comprenant en outre un moyen d'accouplement de direction (211) destiné à être accouplé avec l'entrée de direction du véhicule, le mécanisme de mise en prise de direction étant conçu de sorte que, lorsque le mécanisme de mise en prise de direction passe de la configuration de direction hors prise à la configuration de direction en prise, le moyen d'accouplement de roue soit configuré pour s'aligner avec le moyen d'accouplement de direction.

3. Mécanisme de mise en prise de direction selon la revendication 1 ou 2, l'entrée de direction ayant un sens de déplacement associé du véhicule (100) et, lorsque le mécanisme de mise en prise de direction passe de la configuration de direction hors prise à la configuration de direction en prise, l'au moins une roue étant amenée à tourner autour de l'axe de direction de sorte à s'aligner avec le sens de déplacement associé de l'entrée de direction.

4. Mécanisme de mise en prise de direction selon l'une quelconque des revendications 1 à 3, dans la configuration de mise en prise de direction, l'au moins une roue (29) étant accouplée en rotation à l'entrée de direction, et éventuellement le mécanisme de mise en prise de direction étant conçu pour verrouiller en rotation l'au moins une roue (29) sur l'entrée de direction.

5. Mécanisme de mise en prise de direction selon l'une quelconque des revendications 1 à 4, l'au moins une roue (29) comprenant une roue pivotante.

6. Mécanisme de mise en prise de direction selon l'une quelconque des revendications 1 à 5, l'entrée de direction étant un guidon ou un volant de direction.

7. Mécanisme de mise en prise de direction selon l'une quelconque des revendications 1 à 6, le mécanisme de mise en prise de direction comprenant un élément d'accouplement rotatif supérieur (209) et un élément d'accouplement rotatif inférieur (208), l'élément d'accouplement rotatif supérieur étant conçu pour venir en prise avec l'élément d'accouplement rotatif inférieur de sorte que l'élément d'accouplement rotatif inférieur soit accouplé en rotation avec l'élément d'accouplement rotatif supérieur quand l'élément d'accouplement rotatif supérieur est en prise avec l'élément d'accouplement rotatif inférieur et l'élément d'accouplement rotatif inférieur étant séparé en rotation de l'élément d'accouplement rotatif supérieur lorsque l'élément d'accouplement rotatif supérieur n'est pas en prise avec l'élément d'accouplement rotatif inférieur.

8. Mécanisme de mise en prise de direction selon la revendication 7, les accouplements rotatifs supérieur (209) et inférieur (208) étant conçus de sorte que, lorsque les éléments d'accouplement rotatif supérieur et inférieur sont en prise, l'accouplement rotatif inférieur est amené à tourner par rapport à l'accouplement rotatif supérieur pour s'aligner avec celui-ci de sorte que lorsque les éléments d'accouplement rotatif supérieur (209) et inférieur (208) sont en prise et alignés, les éléments d'accouplement rotatif inférieur et supérieur soient verrouillés en rotation l'un par rapport à l'autre.

9. Mécanisme de mise en prise de direction selon l'une quelconque des revendications 7 à 8, les éléments d'accouplement rotatif supérieur (209) et inférieur (208) comprenant un moyen de verrouillage (212) complémentaire pour verrouiller en rotation les éléments d'accouplement rotatif supérieur et inférieur ensemble lorsque les éléments d'accouplement rotatif supérieur et inférieur sont en prise, et le moyen de verrouillage (212) comprenant une saillie s'étendant axialement disposée sur une surface inférieure de l'élément d'accouplement rotatif supérieur (209) et un évidement (212) s'étendant axialement correspondant disposé sur une surface supérieure de l'élément d'accouplement rotatif inférieur (208) conçu pour venir en prise avec la saillie s'étendant axialement de l'élément d'accouplement rotatif supérieur.

10. Mécanisme de mise en prise de direction selon l'une quelconque des revendications 7 à 9, l'élément d'accouplement rotatif inférieur (208) étant conçu pour être accouplé en rotation à l'au moins une roue (29) du véhicule.

11. Mécanisme de mise en prise de direction selon l'une quelconque des revendications 7 à 10, les éléments d'accouplement rotatif supérieur (209) et inférieur (208) étant conçus pour être dans la configuration en prise des éléments d'accouplement rotatif lorsque le mécanisme de mise en prise de direction est dans la configuration en prise du mécanisme de mise en prise de direction et les éléments d'accouplement rotatif supérieur et inférieur étant conçus pour être dans la configuration hors prise des éléments d'accouplement rotatif lorsque le mécanisme de mise en prise de direction est dans la configuration hors prise du mécanisme de mise en prise de direction.

12. Mécanisme de mise en prise de direction selon l'une quelconque des revendications 7 à 11, le mécanisme de mise en prise de direction comprenant en outre un moyen de sollicitation (210) conçu pour solliciter les éléments d'accouplement rotatif supérieur (209) et inférieur (208) dans la configuration hors prise.

13. Mécanisme de mise en prise de direction selon l'une quelconque des revendications 7 à 12, l'élément d'accouplement rotatif supérieur (209) étant accouplé en rotation à l'entrée de direction du véhicule (100), et éventuellement l'élément d'accouplement rotatif supérieur (209) étant couplé en rotation à un bras de direction et le bras de direction étant accouplé en rotation à une articulation de direction de l'entrée de direction.

14. Véhicule (100) comprenant le mécanisme de mise en prise de direction selon l'une quelconque des revendications 1 à 13, le véhicule comprenant l'au moins une roue (29) et l'entrée de direction (201) pour diriger le véhicule.

15. Mécanisme de mise en prise de direction selon l'une quelconque des revendications 1 à 13 ou véhicule selon la revendication 14, le véhicule (100) étant un dispositif de mobilité personnelle à roues.
